# EUROPÄISCHE PATENTSCHRIFT

(11) **EP 2 621 939 B1**
(45) Veröffentlichungstag und Bekanntmachung des Hinweises auf die Patenterteilung: **10.06.2015**
(21) Anmeldenummer: 11751827.4
(22) Anmeldetag: 30.08.2011
(51) Int. Cl.: C07F 9/535, C07F 9/54, C07F 9/58, C07B 51/00, H01M 10/0568, C07F 9/46, C07F 9/6506, H01M 10/056, H01M 10/0567, H01M 10/42

(54) **FUNKTIONALISIERTE FLUORALKYLFLUORPHOSPHAT-SALZE**
FUNCTIONALIZED FLUOROALKYL FLUOROPHOSPHATE SALTS
SELS DE FLUOROALKYLFLUOROPHOSPHATE FONCTIONNALISÉS

(30) Priorität: 27.09.2010 EP 10010827; 27.09.2010 EP 10010829; 27.09.2010 EP 10010828
(43) Veröffentlichungstag der Anmeldung: 07.08.2013
(73) Patentinhaber: Merck Patent GmbH, 64293 Darmstadt (DE)
(72) Erfinder: HOGE, Berthold, Theo, 33604 Bielefeld (DE); BADER, Anne, Julia, 33615 Bielefeld (DE); IGNATYEV, Nikolai (Mykola), 47058 Duisburg (DE); SCHULTE, Michael, 65474 Bischofsheim (DE); HIERSE, Wolfgang, 64849 Gross-Zimmern (DE); WIEBE, Waldemar, 50939 Koeln (DE); WILLNER, Helge, 45481 Muelheim/Ruhr (DE)
(86) Internationale Anmeldenummer: PCT/EP2011/004353
(87) Internationale Veröffentlichungsnummer: WO 2012/048772

(56) Entgegenhaltungen:
- WO-A1-03/002579
- WO-A1-2011/072810
- DE-A1-102007 004 698
- NATALYA V. PAVLENKO ET AL: "New Anions of Pentacoordinate Phosphorus Containing Fluorine and Trifluoromethyl Groups", EUROPEAN JOURNAL OF INORGANIC CHEMISTRY, Bd. 2007, Nr. 11, 1. April 2007 (2007-04-01), Seiten 1501-1507, XP55016175, ISSN: 1434-1948, DOI: 10.1002/ejic.200600974
- PAVLENKO AND L M YAGUPOL'SKII N V: "REACTION OF TRIS(PERFLUOROALKYL)PHOSPHINE OXIDES AND TRIS(PERFLUOROALKYL)DIFLUOROPHOSPHORANES WITH FLUORIDE ION", JOURNAL OF GENERAL CHEMISTRY USSR, CONSULTANTS BUREAU, NEW YORK, NY, US, Bd. 59, Nr. 3.1, 1. März 1989 (1989-03-01) , Seiten 469-473, XP008147080, ISSN: 0022-1279

## Beschreibung

Die vorliegende Erfindung betrifft funktionalisierte Perfluoralkylfluorphosphat-Salze nach Anspruch 1, insbesondere als ionische Flüssigkeiten, deren Herstellung sowie deren Verwendungen nach Anspruch 7 und 8.

Ionische Flüssigkeiten oder flüssige Salze sind ionische Spezies, die aus einem organischen Kation und einem in der Regel anorganischen Anion bestehen. Sie enthalten keine neutralen Moleküle und weisen meistens Schmelzpunkte kleiner 373 K auf.

Die Eigenschaften ionischer Flüssigkeiten, z.B. Schmelzpunkt, thermische und elektrochemische Stabilität, Viskosität, werden stark von der Natur des Anions beeinflusst. Demgegenüber können die Polarität und die Hydrophilie bzw. Lipophilie durch die geeignete Wahl des Kation/Anion-Paares variiert werden. Daher besteht grundsätzlicher Bedarf an neuen ionischen Flüssigkeiten mit variierten Eigenschaften, die zusätzliche Möglichkeiten hinsichtlich ihrer Verwendung ermöglichen.

Aus EP 0 929 558, WO 02/085919 und EP 1 162 204 sind Salze mit Perfluoralkylfluorophosphatanionen (kurz FAP-Anionen) bekannt. Diese Salze zeichnen sich durch eine hohe elektrochemische und thermische Stabilität aus und weisen gleichzeitig eine niedrige Viskosität auf. Salze auf Basis von FAP-Anionen sind weitgehend inert und besitzen eine größere Stabilität gegenüber Hydrolyse als beispielsweise Salze mit PF₆⁻ -Anionen. Aus DE 10 2007 004698 sind Verbindungen mit Organofluorchlorphosphatanionen bekannt. Vielfach ist es aber erwünscht, Verbindungen, z.B. als Reaktionsmedium, zur Verfügung zu haben, die nach Durchführung der Reaktion einfach zersetzt werden können, um die Belastung der Umwelt mit biologisch kaum abbaubaren Verbindungen zu verringern.

Es besteht also ein Bedarf an neuen Verbindungen, die eine leichtere Abbaubarkeit aufweisen. Im Fall von organischen Kationen kombiniert mit den erfindungsgemäßen funktionalisierten Perfluoralkylfluorphosphat-Anionen nach Anspruch 1 sind dies besonders bevorzugt ionische Flüssigkeiten.

Aufgabe der vorliegenden Erfindung ist demgemäß die Bereitstellung neuer Verbindungen, die sich beispielsweise als Säurekatalysator für chemische Reaktionen eignen, als Additiv in Elektrolyten oder im Fall von organischen Kationen, als ionische Flüssigkeiten eignen.
Die vorliegende Aufgabe wird gelöst durch die erfindungsgemäßen Verbindungen, Verfahren zu deren Herstellung sowie deren Verwendung.

Ein erster Gegenstand der vorliegenden Erfindung sind somit Verbindungen der Formel I nach Anspruch 1

Kt^{z+} z[P(R_{f})ₙF₅₋ₙX]⁻ I,

wobei R_{f} jeweils unabhängig voneinander eine geradkettige oder verzweigte Perfluoralkylgruppe mit 2 bis 4 C-Atomen bedeutet, X OR, bedeutet,
Alk eine geradkettige oder verzweigte Alkylgruppe mit 1 bis 12 C-Atomen bedeutet,
R H oder eine geradkettige oder verzweigte Alkylgruppe mit 1 bis 20 C-Atomen bedeutet, die teilweise mit Hal, NH₂, NHAlk, NAlk₂, OH, NO₂, CN oder SO₃H substituiert sein kann oder eine geradkettige oder verzweigte Alkenylgruppe mit 2 bis 20 C-Atomen bedeutet, die mehrere Doppelbindungen enthalten kann, wobei ein oder zwei nicht benachbarte und nicht am Heteroatom gebundene Kohlenstoffatome der Alkyl- oder Alkenylgruppe durch Atome und/oder Atomgruppierungen ausgewählt aus der Gruppe -O-, -S-, -S(O)-, -SO₂-, NH, -C(O)-, -O-C(O)- oder -C(O)-O-ersetzt sein können
und
Kt ein stabilisiertes (solvatisiertes) Proton, ein Metallkation oder ein organisches Kation bedeutet,
Hal F, Cl, Br oder I bedeutet,
z 1, 2, 3 oder 4 bedeutet und
n 1, 2 oder 3 bedeutet und/oder ihre Tautomere oder Steroisomere, einschließlich deren Mischungen in allen Verhältnissen.

Die Zahl z steht für den Grad der Ladung des Kations und damit für die Anzahl der in den erfindungsgemäßen Verbindungen vorliegenden Anionen. Insgesamt soll die Elektroneutralität der Verbindungen gewährleistet sein. Die Zahl z bedeutet 1, 2, 3 oder 4.

Die erfindungsgemäßen Verbindungen der Formel I geben die Möglichkeit, ionische Flüssigkeiten mit Eigenschaften bereitzustellen, die an die jeweilige Verwendung angepasst werden können. Die Verbindungen der Formel I sind weniger hydrolytisch stabil als die bereits bekannten Perfluoralkylfluorposphat-Anionen und sind daher einer biologischen Abbaubarkeit leichter zugängig.

Weiterhin können die Verbindungen der Formel I, die an sich eher hydrophob sind, durch Reaktion mit Wasser oder einer Base in die Verbindungen mit gleichem Kation, aber Perfluoralkylphosphinat-Anionen umgewandelt werden, die eher hydrophil sind. Aufgrund dieser außergewöhnlichen Eigenschaften der erfindungsgemäßen Verbindungen lassen sich je nach Bedürfnis unterschiedliche Verbindungen mit bestimmten Eigenschaften herstellen, zum Beispiel für die Verwendung in Extraktionsverfahren. Eine *in situ* Umwandlung von hydrophoben ionischen Flüssigkeiten zu hydrophilen ionischen Flüssigkeiten ermöglicht die Entwicklung eines einfachen Isolierungsverfahrens von wasserunlöslichen Produkten im Anschluss an eine Synthese in hydrophoben ionischen Flüssigkeiten der Formel I.

Eine geradkettige oder verzweigte Fluoralkylgruppe mit 1 bis 8 C-Atomen ist eine teilweise fluorierte oder perfluorierte geradkettige oder verzweigte Alkylgruppe mit 1 bis 8 C-Atomen, d.h. im Fall einer perfluorierten Alkylgruppe sind alle H-Atome dieser Alkylgruppe durch F ersetzt. Im Fall einer teilfluorierten Alkylgruppe mit 1 bis 8 C-Atomen besitzt die Alkylgruppe mindestens ein F-Atom, 1, 2, 3 oder 4 H-Atome sind vorhanden und die übrigen H-Atome dieser Alkylgruppe sind durch F ersetzt. Bekannte geradkettige oder verzweigte Alkylgruppen sind Methyl, Ethyl, Propyl, Isopropyl, n-Butyl, sec.-Butyl, tert.-Butyl, n-Pentyl, n-Hexyl, n-Heptyl oder n-Octyl. Bevorzugte Beispiele für die teilfluorierte geradkettige oder verzweigte Alkylgruppe R_{f} sind CF₃-CHF-CF₂-, CF₂H-CF₂-, CF₃-CF₂-CH₂-, CF₃-CF₂-CH₂-CH₂- oder CF₃-CF₂-CF₂-CF₂-CF₂-CF₂-CH₂-CH₂-.

Eine geradkettige oder verzweigte Perfluoralkylgruppe mit 1 bis 8 C-Atomen ist beispielsweise Trifluormethyl, Pentafluorethyl, Heptafluorpropyl, Heptafluorisopropyl, n-Nonafluorbutyl, sec.-Nonafluorbutyl, tert.-Nonafluorbutyl, Dodecafluorpentyl, 1-, 2- oder 3-Trifluormethyl-octafluorbutyl, 1,1-, 1,2- oder 2,2-Bis(trifluormethyl)pentafluorpropyl, 1-Pentafluorethyl-hexafluorpropyl, n-Tridecafluorhexyl, n-Pentadecafluorheptyl oder n-Heptadecafluoroctyl. Bevorzugte Beispiele für die perfluorierte Alkylgruppe R_{f} sind Pentafluorethyl, Heptafluorpropyl, Heptafluorisopropyl, Nonafluorbutyl, sec.-Nonafluorbutyl oder tert.-Nonafluorbutyl.

Alk bezeichnet eine geradkettige oder verzweigte Alkylgruppe mit 1 bis 12 C-Atomen, beispielsweise Methyl, Ethyl, Isopropyl, Propyl, Butyl, sec-Butyl or tert-Butyl, weiterhin Pentyl, 1-, 2- or 3-Methylbutyl, 1,1-, 1,2- or 2,2-Dimethylpropyl, 1-Ethylpropyl, n-Hexyl, n-Heptyl, n-Octyl, n-Nonyl, n-Decyl, n-Undecyl oder n-dodecyl. Eine geradkettige oder verzweigte Alkylgruppe mit 1 bis 20 C-Atomen besteht daher aus den genannten Alkylgruppen mit 1 bis 12 C-Atomen plus n-Tridecyl, n-Tetracecyl, n-Pentadecyl, n-Hexadecyl, n-Heptadecyl, n-Octadecyl, n- Nonadecyl oder n-Eicosyl.

Ein geradkettiges oder verzweigtes Alkenyl mit 2 bis 20 C-Atomen, wobei auch mehrere Doppelbindungen vorhanden sein können, ist beispielsweise Allyl, 2- oder 3-Butenyl, Isobutenyl, sek.-Butenyl, ferner 4-Pentenyl, iso-Pentenyl, Hexenyl, Heptenyl, Octenyl, -C₉H₁₇, -C₁₀H₁₉ bis -C₂₀H₃₉; vorzugsweise Allyl, 2- oder 3-Butenyl, Isobutenyl, sek.-Butenyl, ferner bevorzugt ist 4-Pentenyl, iso-Pentenyl, Hexenyl oder Decen-9-yl.

Ein geradkettiges oder verzweigtes Alkenyl mit 2 bis 20 C-Atomen, wobei auch mehrere Doppelbindungen vorhanden sein können, ist beispielsweise Allyl, 2- oder 3-Butenyl, Isobutenyl, sek.-Butenyl, ferner 4-Pentenyl, iso-Pentenyl, Hexenyl, Heptenyl, Octenyl, -C₉H₁₇, -C₁₀H₁₉ bis -C₂₀H₃₉; vorzugsweise Allyl, 2- oder 3-Butenyl, Isobutenyl, sek.-Butenyl, ferner bevorzugt ist 4-Pentenyl, iso-Pentenyl, Hexenyl oder Decenyl.

Hal bedeutet F, Cl, Br oder I, vorzugsweise F, Cl oder Br, ganz besonders bevorzugt F.

Die Zahl n bedeutet 1, 2 oder 3, vorzugsweise 2 oder 3, ganz besonders bevorzugt 3.

R bedeutet H oder eine geradkettige oder verzweigte Alkylgruppe mit 1 bis 20 C-Atomen, die teilweise mit Hal, NH₂, NHAlk, NAlk₂, NO₂, CN oder SO₃H substituiert sein kann oder eine geradkettige oder verzweigte Alkenylgruppe mit 2 bis 20 C-Atomen bedeutet, die mehrere Doppelbindungen enthalten kann, wobei ein oder zwei nicht benachbarte und nicht am Heteroatom gebundene Kohlenstoffatome der Alkyl- oder Alkenylgruppe durch Atome und/oder Atomgruppierungen ausgewählt aus der Gruppe -O-, -S-, -S(O)-, -SO₂-, NH, -C(O)-, -O-C(O)- oder -C(O)-O-ersetzt sein können.
Bevorzugt steht die geradkettige oder verzweigte Alkylgruppe in der Definition für den Substituenten R für eine geradkettige oder verzweigte Alkylgruppe mit 1 bis 8 C-Atomen, die teilweise mit Hal, NH₂ oder OH substituiert sein kann und/oder wobei ein oder zwei nicht benachbarte und nicht am Heteroatom gebundene Kohlenstoffatome der Alkylgruppe durch Atome und/oder Atomgruppierungen ausgewählt aus der Gruppe -O-, -NH- oder -C(O)-O- ersetzt sein können.

Bevorzugt steht die geradkettige oder verzweigte Alkenylgruppe in der Definition für den Substituenten R für eine geradkettige oder verzweigte Alkenylgruppe mit 2 bis 10 C-Atomen. Bevorzugt steht die Doppelbindung endständig, beispielsweise bei Dec-9-en-yl.

R bedeutet bevorzugt eine geradkettige oder verzweigte Alkylgruppe mit 1 bis 20 C-Atomen, die teilweise mit Hal, NH₂, NHAlk, NAlk₂, NO₂, CN oder SO₃H substituiert sein kann, wobei ein oder zwei nicht benachbarte und nicht am Heteroatom gebundene Kohlenstoffatome der Alkyl- oder Alkenylgruppe durch Atome und/oder Atomgruppierungen ausgewählt aus der Gruppe -O-, -S-, -S(O)-, -SO₂-, NH, -C(O)-, -O-C(O)- oder -C(O)-O-ersetzt sein können.

R steht besonders bevorzugt für H, Ethyl, 2,2,2-Trifluorethyl, Hydroxyethyl, Dec-9-en-yl, -CH₂-CH₂-NH-(CH₂)₃-NH₂, -(CH₂)₅-C(O)-O-CH₂-CH₃, Aminoethyl oder Methoxyethyl.

R_{f} steht jeweils unabhängig voneinander für eine geradkettige oder verzweigte Perfluoralkylgruppe mit 2 bis 4 C-Atomen, insbesondere ganz besonders bevorzugt für Pentafluorethyl oder n-Nonafluorbutyl.
Bevorzugt sind alle Substituenten R_{f} gleich.

X steht für OR.

Wenn bei den Verbindungen der Formel I bei dem Substituenten X eine Definition gewählt wird, bei der terminale OH-Gruppen vorhanden sind, so kann es möglich sein, dass diese OH-Gruppe noch einmal mit dem Ausgangsmaterial reagiert und demzufolge Verbindungen der Formel Ic entstehen können

x [Kt]^{z+} y[(R_{f})ₙPF₅₋ₙO-A-OF₅₋ₙP(R_{f})ₙ]²⁻ Ic,

wobei x, y, z, Kt, R_{f} und n eine bei der Formel I angegebene Bedeutung haben und A ein Alkylen oder Alkenylen bedeutet, korrespondierend zu den Beschreibungen für R, beispielsweise bevorzugt Ethylen.

Auch derartige dimere Verbindungen der Formel Ic sind mit der Formel I umfasst. Gesteuert werden kann die Herstellung der Verbindungen der Formel Ic über das Syntheseverfahren, wie nachfolgend beschrieben.

Das Kation der Verbindungen der Formel I, wie zuvor beschrieben, ist ein stabilisiertes Proton, ein Metallkation, bevorzugt ein Alkalimetallkation, ein Erdalkalimetallkation oder ein Kation der Gruppen 3 bis 12 des Periodensystems, oder ein organisches Kation.

Ein stabilisiertes Proton ist erfindungsgemäß ein Proton, das durch eine organische Base oder ein basisches Lösungsmittel stabilisiert wird. Bei Stabilisierung durch ein basisches Lösungsmittel kann für den Begriff stabilisiertes Proton auch der Begriff solvatisiertes Proton verwendet werden.

Geeignete organische Basen zur Stabilisierung des Protons in den Verbindungen der Formel I werden vorzugsweise ausgewählt aus der Gruppe aromatisches Amin, Dialkylformamid oder Dialkylacetamid, wobei die Alkylgruppen des Dialkylformamids oder Dialkylacetamids jeweils unabhängig voneinander 1 bis 8 C-Atome haben. Vorzugsweise sind die Alkylgruppen im Dialkylformamid oder Dialkylacetamid gleich.

Bevorzugte aromatische Amine sind beispielsweise Pyridin, Morpholin, Piperazin, Imidazol, Oxazol oder Thiazol, die mit Alkylgruppen mit 1 bis 8 C-Atomen oder Dialkylaminogruppen, die jeweils unabhängig voneinander 1 bis 8 C-Atome besitzen, substituiert sein können. Besonders bevorzugte wird das aromatisches Amin ausgewählt aus der Gruppe Pyridin, 4-Methylpyridin oder 4-Dimethylaminopyridin.

Bevorzugte Dialkylformamide sind beispielsweise Dimethylformamid, Diethylformamid, Dipropylformamid. Ein besonders bevorzugtes Dialkylformamid ist Dimethylformamid.

Bevorzugte Dialkylacetamide sind beispielsweise Dimethylacetamid, Diethylacetamid oder Dipropylacetamid.

Besonders bevorzugt wird das Proton durch ein aromatisches Amin oder Dialkylformamid, wie zuvor beschrieben, stabilisiert.

Ganz besonders bevorzugt wird das Proton durch 4-Dimethylaminopyridin oder Dimethylformamid stabilisiert. Insbesondere ganz besonders bevorzugt wird das Proton durch 4-Dimethylaminopyridin stabilisiert.

Geeignete basische Lösungsmittel zur Stabilisierung des Protons in den Verbindungen der Formel I werden vorzugsweise ausgewählt aus Wasser, Dialkylether mit Alkylgruppen, die jeweils unabhängig voneinander 1 bis 4 C-Atome haben, aliphatische Alkohole mit 1 bis 8 C-Atomen, Ethylacetat, Acetonitril, Dimethylsulfoxid oder N-Alkyl-2-pyrrolidon, wobei die Alkylgruppe 1 bis 8 C-Atome hat.

Bevorzugte N-Alkyl-2-pyrrolidone sind beispielsweise N-Methyl-2-pyrrolidon, N-Ethyl-2-pyrrolidon, N-Propyl-2-pyrrolidon oder N-Butyl-2-pyrrolidon.

In Bezug auf die Wahl des organischen Kations der Verbindung der Formel I oder Ic gibt es per se keine Einschränkungen. Vorzugsweise handelt es sich bei den organischen Kationen ausgewählt aus der Gruppe umfassend Ammonium-, Sulfonium-, Oxonium-, Phosphonium-, Uronium-, Thiouronium-, Guanidiniumkationen oder um heterocyclische Kationen. Beispiele von organischen Kationen sind auch Polyammoniumionen mit einem Grad der Ladung z = 4. Ausgewählte organische Kationen sind durch die Formeln (1) bis (8) repräsentiert.

Ammoniumkationen können beispielsweise durch die Formel (1), Sulfoniumkationen können beispielsweise durch Formel (2) oder Oxoniumkationen können beispielsweise durch die Formel (3) beschrieben werden,

[N(R⁰)₄]⁺ (1) [S(R⁰)₃]⁺ (2) oder [O(R⁰)₃]⁺ (3),

wobei
R⁰ jeweils unabhängig voneinander
- H, wobei nicht alle Substituenten R⁰ in der Formel (2) gleichzeitig H sein dürfen,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes oder teilweise ungesättigtes Cycloalkyl mit 3-7 C-Atomen, das mit geradkettigen oder verzweigten Alkylgruppen mit 1-6 C-Atomen substituiert sein kann,
- Aryl mit 6 bis 12 C-Atomen, das mit geradkettigen oder verzweigten Alkylgruppen mit 1-6 C-Atomen subsituiert sein kann,
   bedeutet,
   wobei R⁰ teilweise mit Halogen oder teilweise mit -OR¹,-C(O)OR¹, -OC(O)R¹, -OC(O)OR¹, -C(O)NR¹₂ oder -SO₂NR¹₂ substituiert sein kann, und wobei ein oder zwei nicht benachbarte und nicht α-ständige Kohlenstoffatome des Restes R⁰ durch Atome und/ oder Atomgruppierungen ausgewählt aus der Gruppe -O-, -S-, -S(O)-, -SO₂-, -N⁺(R¹)₂-, -C(O)NR¹-, -SO₂NR¹- oder -P(O)R¹- ersetzt sein können, worin R¹ für H, nicht oder teilweise fluoriertes geradkettiges oder verzweigtes C₁-bis C₆-Alkyl, C₃- bis C₇-Cycloalkyl, unsubstituiertes oder substituiertes Phenyl steht.

Phosphoniumkationen können beispielsweise durch die Formel (4) beschrieben werden,

[P(R²)₄]⁺ (4),

wobei
R² jeweils unabhängig voneinander
- N(R^{1*})₂,
- geradkettiges oder verzweigtes Alkyl mit 1-20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes oder teilweise ungesättigtes Cycloalkyl mit 3-7 C-Atomen, das mit geradkettigen oder verzweigten Alkylgruppen mit 1-6 C-Atomen substituiert sein kann,
- Aryl mit 6 bis 12 C-Atomen, das mit geradkettigen oder verzweigten Alkylgruppen mit 1-6 C-Atomen subsituiert sein kann
   bedeutet,
   wobei R² teilweise mit Halogen, oder teilweise mit -OR¹, -C(O)OR¹, -OC(O)R¹, -OC(O)OR¹, -C(O)NR¹₂ oder -SO₂NR¹₂ substituiert sein kann, und wobei ein oder zwei nicht benachbarte und nicht α-ständige Kohlenstoffatome des R², durch Atome und/oder Atomgruppierungen ausgewählt aus der Gruppe -O-, -S-, -S(O)- oder -SO₂-, ersetzt sein können, worin R¹ für H, nicht oder teilweise fluoriertes geradkettiges oder verzweigtes C₁- bis C₆-Alkyl, C₃- bis C₇-Cycloalkyl, unsubstituiertes oder substituiertes Phenyl und R^{1*} für nicht oder teilweise fluoriertes geradkettiges oder verzweigtes C₁- bis C₆-Alkyl, C₃- bis C₇-Cycloalkyl, unsubstituiertes oder substituiertes Phenyl stehen.

Uroniumkationen können beispielsweise durch die Formel (5) oder Thiouroniumkationen können beispielsweise durch die Formel (6) beschrieben werden,

[C(NR³R⁴)(OR⁵)(NR⁶R⁷)]⁺ (5)

oder

[C(NR³R⁴)(SR⁵)(NR⁶R⁷)]⁺ (6),

wobei
R³ bis R⁷ jeweils unabhängig voneinander
- H oder N(R^{1*})₂,
- geradkettiges oder verzweigtes Alkyl mit 1 bis 20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes oder teilweise ungesättigtes Cycloalkyl mit 3-7 C-Atomen, das mit geradkettigen oder verzweigten Alkylgruppen mit 1-6 C-Atomen substituiert sein kann,
- Aryl mit 6 bis 12 C-Atomen, das mit geradkettigen oder verzweigten Alkylgruppen mit 1-6 C-Atomen subsituiert sein kann,
   bedeuten,
   wobei ein oder mehrere der Substituenten R³ bis R⁷ teilweise mit Halogenen, oder teilweise mit -OH, -OR¹, -CN, -C(O)NR¹₂, -SO₂NR¹₂ substituiert sein können,
   und wobei ein oder zwei nicht benachbarte und nicht α-ständige Kohlenstoffatome von R³ bis R⁷ durch Atome und/oder Atomgruppierungen ausgewählt aus der Gruppe -O-, -S-, -S(O)-, -SO₂-, -N⁺(R¹)₂-, -C(O)NR¹-,-SO₂NR¹-, oder -P(O)R¹- ersetzt sein können, worin R¹ für H, nicht oder teilweise fluoriertes geradkettiges oder verzweigtes C₁- bis C₆-Alkyl, C₃- bis C₇-Cycloalkyl, unsubstituiertes oder substituiertes Phenyl und R^{1*} für nicht oder teilweise fluoriertes geradkettiges oder verzweigtes C₁- bis C₆-Alkyl, C₃- bis C₇-Cycloalkyl, unsubstituiertes oder substituiertes Phenyl stehen. Guanidiniumkationen können beispielsweise durch die Formel (7) beschrieben werden,

   [C(NR⁸R⁹)(NR¹⁰R¹¹)(NR¹²R¹³)]⁺ (7),

   wobei
   R⁸ bis R¹³ jeweils unabhängig voneinander
- H oder N(R^{1*})₂,
- geradkettiges oder verzweigtes Alkyl mit 1 bis 20 C-Atomen,
- geradkettiges oder verzweigtes Alkenyl mit 2-20 C-Atomen und einer oder mehreren Doppelbindungen,
- geradkettiges oder verzweigtes Alkinyl mit 2-20 C-Atomen und einer oder mehreren Dreifachbindungen,
- gesättigtes oder teilweise ungesättigtes Cycloalkyl mit 3-7 C-Atomen, das mit geradkettigen oder verzweigten Alkylgruppen mit 1-6 C-Atomen substituiert sein kann,
- Aryl mit 6 bis 12 C-Atomen, das mit geradkettigen oder verzweigten Alkylgruppen mit 1-6 C-Atomen subsituiert sein kann,
bedeuten,
wobei ein oder mehrere der Substituenten R⁸ bis R¹³ teilweise mit Halogenen oder mit -OR¹, -CN, -C(O)NR¹₂, -SO₂NR¹₂ substituiert sein können,
und wobei ein oder zwei nicht benachbarte und nicht α-ständige Kohlenstoffatome von R⁸ bis R¹³ durch Atome und/oder Atomgruppierungen ausgewählt aus der Gruppe -O-, -S-, -S(O)-, -SO₂-, -N⁺(R¹)₂-, -C(O)NR¹-,-SO₂NR¹-, oder -P(O)R¹- ersetzt sein können, worin R¹ für H, nicht oder teilweise fluoriertes geradkettiges oder verzweigtes C₁- bis C₆-Alkyl, C₃- bis C₇-Cycloalkyl, unsubstituiertes oder substituiertes Phenyl und R^{1*} für nicht oder teilweise fluoriertes geradkettiges oder verzweigtes C₁- bis C₆-Alkyl, C₃- bis C₇-Cycloalkyl, unsubstituiertes oder substituiertes Phenyl stehen.

Heterocyclische Kationen können beispielsweise durch die Formel (8) beschrieben werden

[HetN]⁺ (8),

wobei [HetN]⁺ ein heterocyclisches Kation ist, ausgewählt aus der Gruppe umfassend 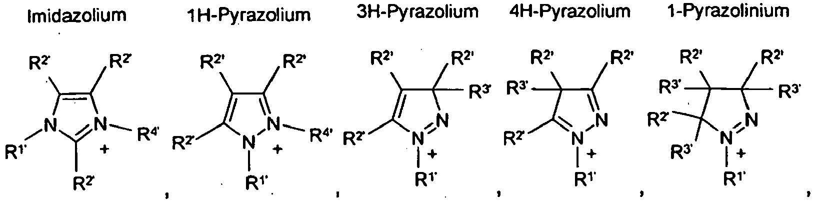 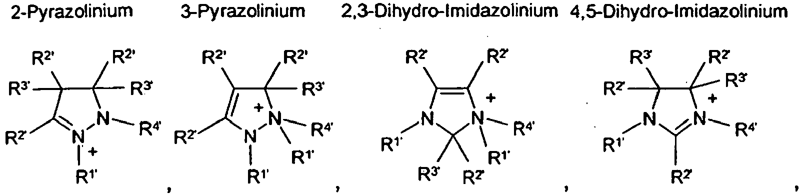 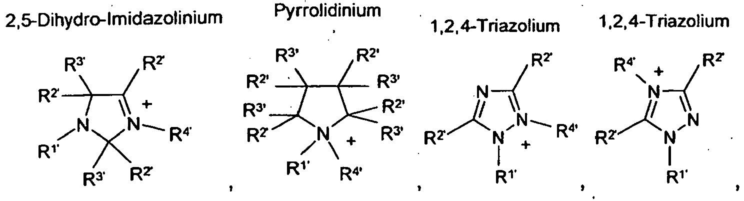 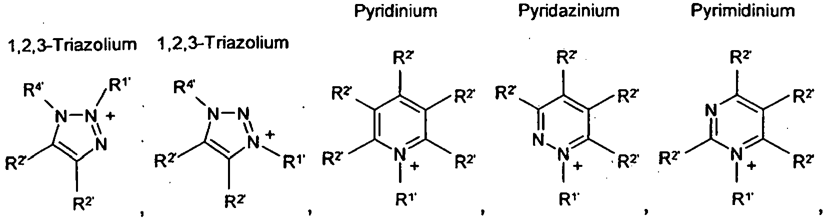 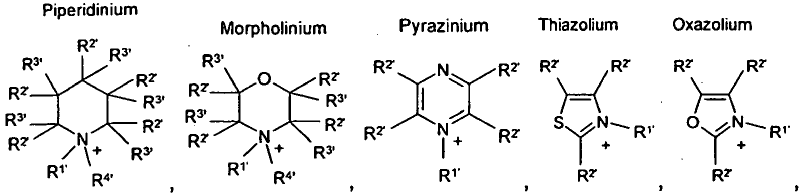 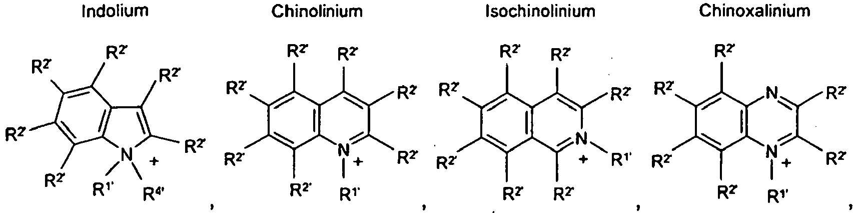 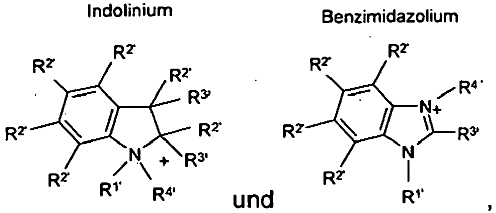 wobei die Substituenten R^{1'} bis R^{4'} jeweils unabhängig voneinander
- H,
- geradkettiges oder verzweigtes Alkyl mit 1-20 C-Atomen, welche auch fluoriert oder perfluoriert sein können,
- geradkettiges oder verzweigtes Alkenyl mit 2-20 C-Atomen und einer oder mehreren Doppelbindungen, welche auch fluoriert oder perfluoriert sein können,
- geradkettiges oder verzweigtes Alkinyl mit 2-20 C-Atomen und einer oder mehreren Dreifachbindungen, welche auch fluoriert sein können,
- gesättigtes oder teilweise ungesättigtes Cycloalkyl mit 3-7 C-Atomen, das mit geradkettigen oder verzweigten Alkylgruppen mit 1-6 C-Atomen substituiert sein kann,
- Aryl mit 6 bis 12 C-Atomen, das mit geradkettigen oder verzweigten Alkylgruppen mit 1-6 C-Atomen subsituiert sein kann,
- gesättigtes, teilweise oder vollständig ungesättigtes Heteroaryl, Heteroaryl-C₁-C₆-alkyl oder Aryl-C₁-C₆-alkyl,
bedeuten,
wobei die Substituenten R^{1'}, R^{2'}, R^{3'} und/oder R^{4'} zusammen ein Ringsystem bilden können,
wobei ein, zwei oder drei Substituenten R^{1'} bis R^{4'} teilweise oder vollständig mit Halogenen oder teilweise mit -OR¹, -CN, -C(O)NR¹₂, -SO₂NR¹₂ substituiert sein können, wobei die Substituenten R^{1'} und R^{4'} nicht gleichzeitig und nicht vollständig mit Halogenen substituiert sein dürfen, und wobei ein oder zwei nicht benachbarte und nicht am Heteroatom gebundene Kohlenstoffatome der Substituenten R^{1'} bis R^{4'}, durch Atome und/oder Atomgruppierungen ausgewählt aus der Gruppe -O-, -S-, -S(O)-,-SO₂-, -N⁺(R¹)₂-, -C(O)NR¹-, -SO₂NR¹-, oder -P(O)R¹- ersetzt sein können,
worin R¹ für H, nicht oder teilweise fluoriertes geradkettiges oder verzweigtes C₁- bis C₆-Alkyl, C₃- bis C₇-Cycloalkyl, unsubstituiertes oder substituiertes Phenyl und R^{1*} für nicht oder teilweise fluoriertes geradkettiges oder verzweigtes C₁- bis C₆-Alkyl, C₃- bis C₇-Cycloalkyl, unsubstituiertes oder substituiertes Phenyl stehen.

Als Substituenten R⁰ und R² bis R¹³ der Verbindungen der Formeln (1) bis (7) kommen erfindungsgemäß bevorzugt in Frage: H, geradkettige oder verzweigte C₁- bis C₂₀-, insbesondere geradkettige oder verzweigte C₁- bis C₁₄-Alkylgruppen, gesättigte C₃- bis C₇-Cycloalkylgruppen, die mit geradkettigen oder verzweigten C₁- bis C₆-Alkylgruppen substituiert sein können oder Phenyl, das mit geradkettigen oder verzweigten C₁- bis C₆-Alkylgruppen substituiert sein kann.

Die Substituenten R⁰ und R² in den Verbindungen der Formel (2), (3) oder (4) können dabei gleich oder verschieden sein. Bei Verbindungen der Formeln (2) sind bevorzugt alle Substituenten R⁰ gleich oder zwei gleich und ein Substituent verschieden. Bei Verbindungen der Formel (3) sind bevorzugt alle Substituenten R⁰ gleich. Bei Verbindungen der Formel (4) sind bevorzugt drei oder vier Subsituenten R² gleich.

Die Substituenten R⁰ und R² sind insbesondere bevorzugt Methyl, Ethyl, Isopropyl, Propyl, Butyl, sek.-Butyl, Pentyl, Hexyl, Octyl, Decyl oder Tetradecyl.

Bis zu vier Substituenten des Guanidinium-Kations [C(NR⁸R⁹)(NR¹⁰R¹¹)(NR¹²R¹³)]⁺ können auch paarweise derart verbunden sein, dass mono-, bi- oder polycyclische Moleküle entstehen.

Ohne Einschränkung der Allgemeinheit sind Beispiele für solche Guanidinium-Kationen: 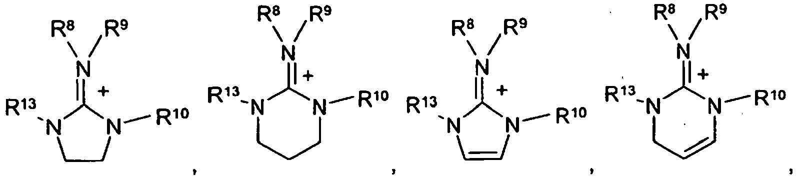 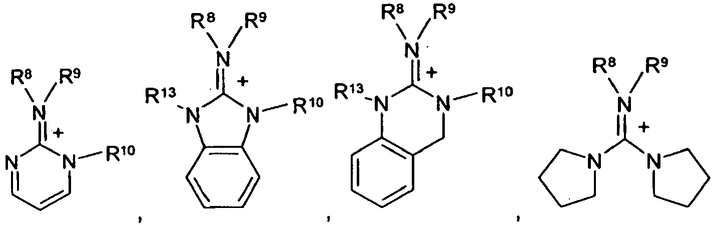 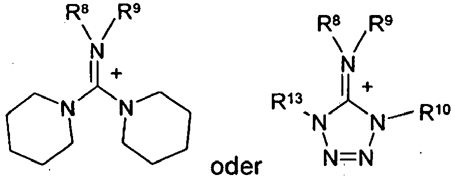 wobei die Substituenten R⁸ bis R¹⁰ und R¹³ eine zuvor angegebene oder besonders bevorzugte Bedeutung haben können.
Gegebenenfalls können die Carbocyclen oder Heterocyclen der zuvor angegebenen Guanidinium-Kationen noch durch geradkettiges oder verzweigtes C₁- bis C₆-Alkyl, C₁- bis C₆-Alkenyl, CN, NR¹₂, F, Cl, Br, I, geradkettiges oder verzweigtes C₁-C₆-Alkoxy, SCF₃, SO₂CF₃ oder SO₂NR¹₂ substituiert sein, wobei R¹ eine zuvor angegebene Bedeutung hat, substituiertes oder unsubstituiertes Phenyl oder unsubstituierter oder substituierter Heterocyclus substituiert sein.

Bis zu vier Substituenten des Thiouroniumkations [C(NR³R⁴)(SR⁵)(NR⁶R⁷)]⁺ können auch paarweise derart verbunden sein, dass mono-, bi- oder polycyclische Moleküle entstehen.

Ohne Einschränkung der Allgemeinheit sind im Folgenden Beispiele für solche Thiouroniumkationen angegeben: 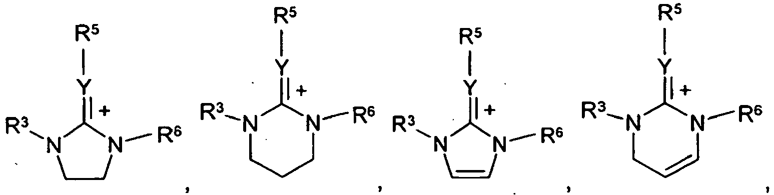 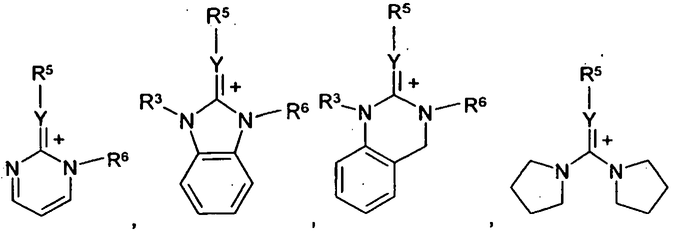 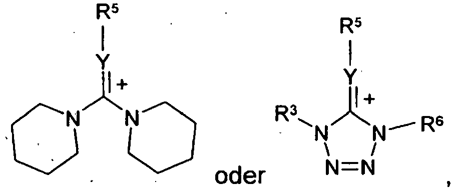 worin Y = S bedeutet
und wobei die Substituenten R³, R⁵ und R⁶ eine zuvor angegebene oder besonders bevorzugte Bedeutung haben können.
Gegebenenfalls können die Carbocyclen oder Heterocyclen der zuvor angegebenen Moleküle noch durch geradkettiges oder verzweigtes C₁- bis C₆-Alkyl, C₁- bis C₆-Alkenyl, CN, NR¹₂, F, Cl, Br, I, geradkettiges oder verzweigtes C₁-C₆-Alkoxy, SCF₃, SO₂CF₃ oder SO₂NR¹₂ oder substituiertes oder unsubstituiertes Phenyl oder unsubstituierter oder substituierter Heterocyclus substituiert sein, wobei R¹ eine zuvor angegebene Bedeutung hat.

Die Substituenten R³ bis R¹³ sind jeweils unabhängig voneinander bevorzugt eine geradkettige oder verzweigte Alkylgruppe mit 1 bis 10 C-Atomen. Die Substituenten R³ und R⁴, R⁶ und R⁷, R⁸ und R⁹, R¹⁰ und R¹¹ und R¹² und R¹³ in Verbindungen der Formeln (5) bis (7) können dabei gleich oder verschieden sein. Besonders bevorzugt sind R³ bis R¹³ jeweils unabhängig voneinander Methyl, Ethyl, n-Propyl, Isopropyl, n-Butyl, tert.-Butyl, sek.-Butyl, Phenyl oder Cyclohexyl, ganz besonders bevorzugt Methyl, Ethyl, n-Propyl, Isopropyl oder n-Butyl.

Als Substituenten R^{1'} und R^{4'} von Verbindungen der Formel (8) kommen erfindungsgemäß bevorzugt in Frage: geradkettige oder verzweigte C₁- bis C₂₀, insbesondere geradkettige oder verzweigte C₁- bis C₁₂-Alkylgruppen, gesättigte C₃- bis C₇-Cycloalkylgruppen, die mit geradkettigen oder verzweigten C₁- bis C₆-Alkylgruppen substituiert sein können oder Phenyl, das mit geradkettigen oder verzweigten C₁- bis C₆-Alkylgruppen substituiert sein kann.

Als Substituenten R^{2'} und R^{3'} von Verbindungen der Formel (8) kommen erfindungsgemäß dabei neben H bevorzugt in Frage: geradkettige oder verzweigte C₁- bis C₂₀, insbesondere geradkettige oder verzweigte C₁- bis C₁₂-Alkylgruppen.

Die Substituenten R^{1'} und R^{4'} sind jeweils unabhängig voneinander insbesondere bevorzugt Methyl, Ethyl, Isopropyl, Propyl, Butyl, sek.-Butyl, Pentyl, Hexyl, Octyl, Decyl, Cyclohexyl, Phenyl oder Benzyl. Sie sind ganz besonders bevorzugt Methyl, Ethyl, n-Butyl oder Hexyl. In Pyrrolidin-, Piperidin-, Indolin-, Pyrrolidinium-, Piperidinium- oder Indolinium-Verbindungen sind die beiden Substituenten R^{1'} und R^{4'} bevorzugt unterschiedlich.

Der Substituent R^{2'} oder R^{3'} ist jeweils unabhängig voneinander insbesondere H, Methyl, Ethyl, Isopropyl, Propyl, Butyl, sek.-Butyl, tert.-Butyl, Cyclohexyl, Phenyl oder Benzyl. Besonders bevorzugt ist R^{2'} H, Methyl, Ethyl, Isopropyl, Propyl, Butyl oder sek.-Butyl. Ganz besonders bevorzugt sind R^{2'} und R^{3'} H.

Ein geradkettiges oder verzweigtes Alkinyl mit 2 bis 20 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, -C₉H₁₅, -C₁₀H₁₇ bis -C₂₀H₃₇, vorzugsweise Ethinyl, 1- oder 2-Propinyl, 2- oder 3-Butinyl, 4-Pentinyl, 3-Pentinyl oder Hexinyl. Sind die Verbindungen teilfluoriert, so wird mindestens ein H-Atom durch ein F-Atom ausgetauscht. Sind die Verbindungen perfluoriert, so sind alle H-Atome der entsprechenden Alkylgruppe gegen F-Atome ausgetauscht.

Aryl-C₁-C₆-alkyl bedeutet beispielsweise Benzyl, Phenylethyl, Phenylpropyl, Phenylbutyl, Phenylpentyl oder Phenylhexyl, wobei sowohl der Phenylring als auch die Alkylenkette, wie zuvor beschrieben teilweise oder vollständig mit Halogenen, insbesondere -F und/oder -Cl, oder teilweise mit -OR¹,-NR¹₂, -CN, -C(O)NR¹₂, -SO₂NR¹₂ substituiert sein können.

Unsubstituierte gesättigte oder teilweise ungesättigte Cycloalkylgruppen mit 3-7 C-Atomen sind daher Cyclopropyl, Cyclobutyl, Cyclopentyl, Cyclohexyl, Cycloheptyl, Cyclopentenyl, Cyclohexenyl oder Cycloheptenyl, welche mit C₁- bis C₆-Alkylgruppen substituiert sein können, wobei wiederum die Cycloalkylgruppe oder die mit C₁- bis C₆-Alkylgruppen substituierte Cycloalkylgruppe auch mit Halogenatomen wie F, Cl, Br oder I, insbesondere F oder Cl oder mit -OR¹, -CN, -C(O)NR¹₂, -SO₂NR¹₂ substituiert sein kann.

In den Substituenten R⁰, R³ bis R¹³ oder R^{1'} bis R^{4'} können auch ein oder zwei nicht benachbarte und nicht α-ständig zum Heteroatom gebundene Kohlenstoffatome, durch Atome und/oder Atomgruppierungen ausgewählt aus der Gruppe -O-, -S-, -S(O)-, -SO₂-, -N⁺(R¹)₂-, -C(O)NR¹-, -SO₂NR¹-, oder -P(O)R¹- ersetzt werden, mit R¹ = H, nicht oder teilweise fluoriertes geradkettiges oder verzweigtes C₁- bis C₆-Alkyl, C₃- bis C₇-Cycloalkyl, unsubstituiertes oder substituiertes Phenyl.

Ohne Einschränkung der Allgemeinheit sind Beispiele für derart modifizierte Substituenten R⁰, R² bis R¹³ und R^{1'} bis R^{4'}:
-OCH₃, -OCH(CH₃)₂, -CH₂OCH₃, -CH₂-CH₂-O-CH₃, -C₂H₄OCH(CH₃)₂,-C₂H₄SC₂H₅, -C₂H₄SCH(CH₃)₂, -S(O)CH₃, -SO₂CH₃, -SO₂C₆H₅, -SO₂C₃H₇,-SO₂CH(CH₃)₂, -SO₂CH₂CF₃, -CH₂SO₂CH₃, -O-C₄H₈-O-C₄H₉, -CF₂SO₂CF₃, -C₂F₄N(C₂F₅)C₂F₅, -CHF₂, -CH₂CF₃, -C₂F₂H₃, -C₃FH₆, -CH₂C₃F₇, -C(CFH₂)₃, -CH₂C₆H₅ oder P(O)(C₂H₅)₂.

In R¹ ist C₃- bis C₇-Cycloalkyl beispielsweise Cyclopropyl, Cyclobutyl, Cyclopentyl, Cyclohexyl oder Cycloheptyl.

In R¹ bedeutet substituiertes Phenyl, durch C₁- bis C₆-Alkyl, C₁- bis C₆-Alkenyl, F, Cl, Br, I, -C₁-C₆-Alkoxy, NR"₂, -SR", -S(O)R", -SO₂R" oder SO₂NR"₂ substituiertes Phenyl, wobei R* ein nicht, teilweise oder perfluoriertes C₁- bis C₆-Alkyl oder C₃- bis C₇-Cycloalkyl wie für R¹ definiert bedeutet, beispielsweise, o-, m- oder p-Methylphenyl, o-, m- oder p-Ethylphenyl, o-, m- oder p-Propylphenyl, o-, m- oder p-Isopropylphenyl, o-, m- oder p-tert.-Butylphenyl, o-, m- oder p-Methoxyphenyl, o-, m- oder p-Ethoxyphenyl, o-, m- oder p-Fluorphenyl, o-, m- oder p-Chlorphenyl, o-, m-oder p-Bromphenyl, o-, m- oder p-lodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl.

In R^{1'} bis R^{4'} wird als Heteroaryl ein gesättigter oder ungesättigter mono- oder bicyclischer heterocyclischer Rest mit 5 bis 13 Ringgliedern verstanden, wobei 1, 2 oder 3 N- und/oder 1 oder 2 S- oder O-Atome vorliegen können und der heterocyclische Rest ein- oder mehrfach durch C₁- bis C₆-Alkyl, C₁- bis C₆-Alkenyl, CN, NR¹₂,F, Cl, Br, I, C₁-C₆-Alkoxy, SCF₃, SO₂CF₃ oder SO₂NR¹₂ substituiert sein kann, wobei R¹ eine zuvor angegebene Bedeutung hat.

Der heterocyclische Rest oder Het ist vorzugsweise substituiertes oder unsubstituiertes 2- oder 3-Furyl, 2- oder 3-Thienyl, 1-, 2- oder 3-Pyrrolyl, 1-, 2-, 4- oder 5-Imidazolyl, 3-, 4- oder 5-Pyrazolyl, 2-, 4- oder 5-Oxazolyl, 3-, 4- oder 5-Isoxazolyl, 2-, 4- oder 5-Thiazolyl, 3-, 4- oder 5-Isothiazolyl, 2-, 3-oder 4-Pyridyl, 2-, 4-, 5- oder 6-Pyrimidinyl, weiterhin bevorzugt 1,2,3-Triazol-1-, -4- oder -5-yl, 1,2,4-Triazol-1-, -4- oder -5-yl, 1- oder 5-Tetrazolyl, 1,2,3-Oxadiazol-4- oder -5-yl 1,2,4-Oxadiazol-3- oder -5-yl, 1,3,4-Thiadiazol-2- oder-5-yl, 1,2,4-Thiadiazol-3- oder -5-yl, 1,2,3-Thiadiazol-4- oder -5-yl, 2-, 3-, 4-, 5- oder 6-2H-Thiopyranyl, 2-, 3- oder 4-4H-Thiopyranyl, 3- oder 4-Pyridazinyl, Pyrazinyl, 2-, 3-, 4-, 5-, 6- oder 7-Benzofuryl, 2-, 3-, 4-, 5-, 6- oder 7-Benzothienyl, 1-, 2-, 3-, 4-, 5-, 6- oder 7-1H-Indolyl, 1-, 2-, 4- oder 5-Benzimidazolyl, 1-, 3-, 4-, 5-, 6- oder 7-Benzopyrazolyl, 2-, 4-, 5-, 6- oder 7-Benzoxazolyl, 3-, 4-, 5-, 6- oder 7-Benzisoxazolyl, 2-, 4-, 5-, 6- oder 7-Benzthiazolyl, 2-, 4-, 5-, 6- oder 7-Benzisothiazolyl, 4-, 5-, 6- oder 7-Benz-2,1,3-oxadiazolyl, 1-, 2-, 3-, 4-, 5-, 6-, 7- oder 8-Chinolinyl, 1-, 3-, 4-, 5-, 6-, 7- oder 8-Isochinolinyl, 1-, 2-, 3-, 4-oder 9-Carbazolyl, 1-, 2-, 3-, 4-, 5-, 6-, 7-, 8- oder 9-Acridinyl, 3-, 4-, 5-, 6-, 7- oder 8-Cinnolinyl, 2-, 4-, 5-, 6-, 7- oder 8-Chinazolinyl oder 1-, 2- oder 3-Pyrrolidinyl.

Unter Heteroaryl-C₁-C₆-alkyl wird nun in Analogie zu Aryl-C₁-C₆-alkyl beispielsweise Pyridinyl-methyl, Pyridinyl-ethyl, Pyridinyl-propyl, Pyridinylbutyl, Pyridinyl-pentyl, Pyridinyl-hexyl verstanden, wobei weiterhin die zuvor beschriebenen Heterocyclen in dieser Weise mit der Alkylenkette verknüpft werden können.

HetN⁺ ist bevorzugt 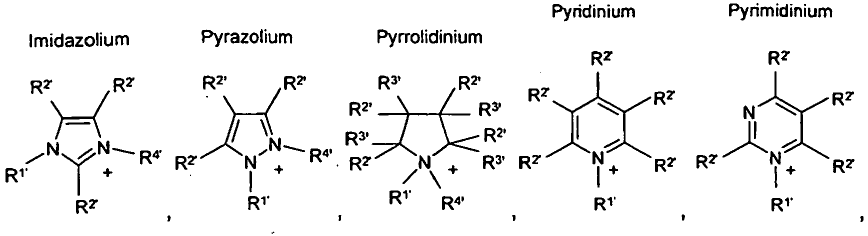 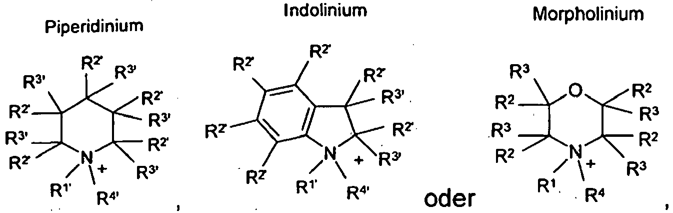 wobei die Substituenten R^{1'} bis R^{4'} jeweils unabhängig voneinander eine zuvor beschriebene Bedeutung haben.

Besonders bevorzugt ist das organische Kation [Kt]^{x+} ausgewählt aus der Gruppe umfassend Imidazolium-, Pyridinium-, Pyrrolidinium-, Ammonium- oder Phosphonium-Kationen, wie sie oben definiert sind.

Besonders geeignete Kationen werden ausgewählt aus der Gruppe Tetraalkylammonium, 1,1-Dialkylpyrrolidinium, 1-Alkyl-1-Alkoxyalkylpyrrolidnium oder 1,3-Dialkylimidazolium, wobei die Alkylgruppen oder die Alkoxygruppe in der Alkoxyalkylgruppe jeweils unabhängig voneinander 1 bis 10 C-Atome haben können. Ganz besonders bevorzugt haben die Alklygruppen 1 bis 6 C-Atome und die Alkoxygruppe 1 bis 3 C-Atome.
Die Alkylgruppen im Tetraalkylammonium können daher gleich oder verschieden sein. Bevorzugt sind drei Alkylgruppen gleich und eine Alkylgruppe verschieden oder zwei Alkylgruppen sind gleich und die anderen beiden sind verschieden. Bevorzugte Tetraalkylammonium-Kationen sind beispielsweise Trimethyl(ethyl)ammonium, Triethyl(methyl)ammonium, Tripropyl(methyl)ammonium, Tributyl(methyl)ammonium, Tripentyl(methyl)ammonium, Trihexyl(methyl)ammonium, Triheptyl(methyl)ammonium, Trioctyl(methyl)ammonium, Trinonyl(methyl)ammonium, Tridecyl(methyl)ammonium, Trihexyl(ethyl)ammonium, Ethyl(trioctyl)ammonium, Propyl(dimethyl)ethylammonium, Butyl(dimethyl)ethylammonium, Methoxyethyl(dimethyl)ethylammonium, Methoxyethyl(diethyl)methylammonium, Methoxyethyl(dimethyl)propylammonium, Ethoxyethyl(dimethyl)ethylammonium. Besonders bevorzugte quartäre Ammoniumkationen sind Propyl(dimethyl)ethylammonium und/oder Methoxyethyl(dimethyl)ethylammonium.

Bevorzugte 1,1-Dialkylpyrrolidinium-Kationen sind beispielsweise 1,1-Dimethyl-pyrrolidinium, 1-Methyl-1-ethyl-pyrrolidinium, 1-Methyl-1-propyl-pyrrolidinium, 1-Methyl-1-butyl-pyrrolidinium, 1-Methyl-1-pentyl-pyrrolidinium, 1-Methyl-1-hexyl-pyrrolidinium, 1-Methyl-1-heptyl-pyrrolidinium, 1-Methyl-1-octyl-pyrrolidinium, 1-Methyl-1-nonyl-pyrrolidinium, 1-Methyl-1-decyl-pyrrolidinium, 1,1-Diethyl-pyrrolidinium, 1-Ethyl-1-propyl-pyrrolidinium, 1-Ethyl-1-butyl-pyrrolidinium, 1-Ethyl-1-pentyl-pyrrolidinium, 1-Ethyl-1-hexyl-pyrrolidinium, 1-Ethyl-1-heptyl-pyrrolidinium, 1-Ethyl-1-octyl-pyrrolidinium, 1-Ethyl-1-nonyl-pyrrolidinium, 1-Ethyl-1-decyl-pyrrolidinium, 1,1-Dipropyl-pyrrolidinium, 1-Propyl-1-methyl-pyrrolidinium, 1-Propyl-1-butyl-pyrrolidinium, 1-Propyl-1-pentyl-pyrrolidinium, 1-Propyl-1-hexyl-pyrrolidinium, 1-Propyl-1-heptyl-pyrrolidinium, 1-Propyl-1-octyl-pyrrolidinium, 1-Propyl-1-nonyl-pyrrolidinium, 1-Propyl-1-decyl-pyrrolidinium, 1,1-Dibutyl-pyrrolidinium, 1-Butyl-1-methyl-pyrrolidinium, 1-Butyl-1-pentyl-pyrrolidinium, 1-Butyl-1-hexyl-pyrrolidinium, 1-Butyl-1-heptyl-pyrrolidinium, 1-Butyl-1-octyl-pyrrolidinium, 1-Butyl-1-nonyl-pyrrolidinium, 1-Butyl-1-decyl-pyrrolidinium, 1,1-Dipentyl-pyrrolidinium, 1-Pentyl-1-hexyl-pyrrolidinium, 1-Pentyl-1-heptyl-pyrrolidinium, 1-Pentyl-1-octyl-pyrrolidinium, 1-Pentyl-1-nonyl-pyrrolidinium, 1-Pentyl-1-decyl-pyrrolidinium, 1,1-Dihexyl-pyrrolidinium, 1-Hexyl-1-heptyl-pyrrolidinium, 1-Hexyl-1-octyl-pyrrolidinium, 1-Hexyl-1-nonyl-pyrrolidinium, 1-Hexyl-1-decyl-pyrrolidinium, 1,1-Dihexyl-pyrrolidinium, 1-Hexyl-1-heptyl-pyrrolidinium, 1-Hexyl-1-octyl-pyrrolidinium, 1-Hexyl-1-nonyl-pyrrolidinium, 1-Hexyl-1-decyl-pyrrolidinium, 1,1-Diheptyl-pyrrolidinium, 1-Heptyl-1-octyl-pyrrolidinium, 1-Heptyl-1-nonyl-pyrrolidinium, 1-Heptyl-1-decyl-pyrrolidinium, 1,1-Dioctylpyrrolidinium, 1-Octyl-1-nonyl-pyrrolidinium, 1-Octyl-1-decyl-pyrrolidinium, 1-1-Dinonyl-pyrrolidinium, 1-Nony-1-decyl-pyrrolidinium oder 1,1-Didecyl-pyrrolidinium. Ganz besonders bevorzugt ist 1-Butyl-1-methyl-pyrrolidinium oder 1-Propyl-1-methyl-pyrrolidinium.

Bevorzugte 1-Alkyl-1-Alkoxyalkylpyrrolidinium-Kationen sind beispielsweise 1-Methoxyethyl-1-methyl-pyrrolidinium, 1-Methoxyethyl-1-ethyl-pyrrolidinium, 1-Methoxyethyl-1-propyl-pyrrolidinium, 1-Methoxyethyl-1-butyl-pyrrolidinium, 1-Ethoxyethyl-1-methyl-pyrrolidinium, 1-Ethoxymethyl-1-methyl-pyrrolidinium. Ganz besonders bevorzugt ist 1-Methoxyethyl-1-methyl-pyrrolidinium.

Bevorzugte 1,3-Dialkylimidazolium-Kationen sind beispielsweise 1-Ethyl-3-methyl-imidazolium, 1-Methyl-3-propyl-imidazolium, 1-Butyl-3-methyl-imidazolium, 1-Methyl-3-pentylimidazolium, 1-Ethyl-3-propyl-imidazolium, 1-Butyl-3-ethyl-imidazolium, 1-Ethyl-3-pentyl-imidazolium, 1-Butyl-3-propyl-imidazolium, 1,3-Dimethyl-imidazolium, 1,3-Diethyl-imidazolium, 1,3-Dipropypylimidazolium, 1,3-Dibutylimidazolium, 1,3-Dipentylimidazolium, 1,3-Dihexylimidazolium, 1,3-Diheptylimidazolium, 1,3-Dioctylimidazolium, 1,3-Dinonylimidazolium, 1,3-Didecylimidazolium, 1-Hexyl-3-methyl-imidazolium, 1-Heptyl-3-methyl-imidazolium, 1-Methyl-3-octyl-imidazolium, 1-Methyl-3-nonyl-imidazolium, 1-Decyl-3-methyl-imidazolium, 1-Ethyl-3-hexyl-imidazolium, 1-Ethyl-3-heptyl-imidazolium, 1-Ethyl-3-octyl-imidazolium, 1-Ethyl-3-nonyl-imidazolium oder 1-Decyl-3-ethyl-imidazolium. Besonders bevorzugte Kationen sind 1-Ethyl-3-methyl-imidazolium, 1-Butyl-3-methyl-imidazolium oder 1-Methyl-3-propyl-imidazolium.

Besonders bevorzugte 1-Alkenyl-3-alkylimidazoliumkationen sind 1-Allyl-3-methylimidazolium oder 1-Allyl-2,3-dimethylimidazolium.

Die organischen Kationen der Verbindungen der Formel I sind bevorzugt heterocyclische Kationen der Formel (8), wobei HetN^{z+} Imidazolium, Pyrrolidinium oder Pyridinium ist, mit Substituenten R^{1'} bis R^{4'}, die jeweils unabhängig voneinander eine angegebene oder als bevorzugt angegebene Bedeutung haben. Das organische Kation der Verbindungen der Formel I sind insbesondere bevorzugt Imidazolium, wobei die Substituenten R^{1'} bis R^{4'} eine zuvor genannte Bedeutung oder bevorzugt angegebene Bedeutung haben oder Sie haben die Bedeutung der bevorzugt angegebenen Bedeutungen für 1,1-Dialkylpyrrolidinium, 1-Alkyl-1-alkoxyalkylalkylpyrrolidinium, 1,3-Dialkylimidazolium, 1-Alkenyl-3-alkylimidazolium oder 1-Alkoxyalkyl-3-alkylimidazolium, wie zuvor beschrieben.

Besonders bevorzugte organische Kationen der Formel I sind demzufolge 1-Butyl-1-methylpyrrolidinium, 1-Ethyl-3-methylimidazolium, 1-Ethyl-2,3-dimethylimidazolium, 1-Butyl-2,3-dimethylimidazolium, 1-(2-Methoxyethyl)-3-methylimidazolium, 1-Butyl-3-methylimidazolium, Tributyl-methylammonium, Tetra-n-butylammonium, Tributyl-methylphosphonium, Tetra-phenylphosphonium, Tetra-butylphosphonium, Diethylmethylsulfonium, S-Ethyl-N,N,N'.N'-tetramethylisothiouronium, 1-Allyl-3-methylimidazolium, 1-Allyl-2,3-dimethylimidazolium, 1-Cyanomethyl-3-methylimidazolium, 1-(2-Cyanoethyl)-3-methylimidazolium, 1-Methyl-3-propinylimidazlium, 1-Butyl-4-methylpyridinum, 1,1-Dimethylpyrrolidinium or Trimethylsulfonium.

Ein Alkalimetallkation ist ein Lithiumkation, ein Natriumkation, ein Kaliumkation, ein Rubidiumkation oder ein Cäsiumkation, insbesondere ein Lithiumkation, ein Natriumkation oder ein Kaliumkation.

Ein Erdalkalimetallkation ist ein Magnesiumkation, ein Calciumkation, ein Strontiumkation oder ein Bariumkation, bevorzugt ein Magnesiumkation oder ein Calciumkation.

Ein Metallkation der Gruppe 3 bis 12 des Periodensystems ist beispielsweise ein Kation der Metalle Silber, Kupfer, Yttrium, Ytterbium, Lanthan, Scandium, Cer, Neodym, Terbium, Samarium, Rhodium, Rhutenium, Iridium, Palladium, Platin, Osmium, Cobalt, Nickel, Eisen, Chrom, Molybdän, Wolfram, Vanadium, Titan, Zirconium, Hafnium, Thorium, Uran oder Gold, wobei auch die entsprechenden Metallkationen in solvatisierter Form oder durch Liganden stabilisiert umfasst sind.

Besonders bevorzugte Metallkationen sind Li⁺, Na⁺, K⁺, Mg²⁺, Ca²⁺, Ag⁺, Cu⁺, Y⁺³, Yb⁺³, La⁺³, Sc⁺³, Ce⁺², Pt⁺² oder Pd⁺².

Ein geeignetes Ausgangsmaterial zur Synthese der Verbindungen der Formel I sind Fluoralkylfluorphosphorane.

Ein weiterer Gegenstand der Erfindung ist demzufolge ein Verfahren zur Herstellung von Verbindungen der Formel I, nach Anspruch 3, wobei Kt ein durch eine organische Base stabilisiertes Proton bedeutet, dadurch gekennzeichnet, dass ein Fluoralkylfluorphosphoran der Formel II

(R_{f})ₙPF₅₋ₙ II,

wobei R_{f} jeweils unabhängig voneinander eine geradkettige oder verzweigte Perfluoralkylgruppe mit 2 bis 4 C-Atomen bedeutet und n 1, 2 oder 3 bedeutet, mit einer organischen Base umgesetzt wird, wobei eine Verbindung der Formel IIIa, IIIb oder IIIc entsteht 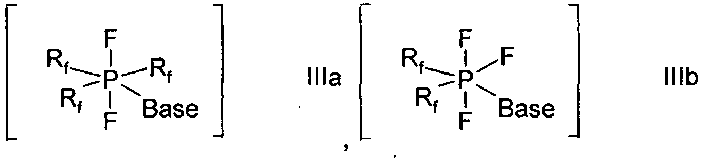 oder 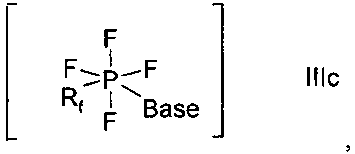 wobei R_{f} jeweils unabhängig voneinander eine zuvor angegebene Bedeutung hat und die Verbindung der Formel IIIa, IIIb oder IIIc öder deren tautomere oder stereoisomere Form anschließend mit HX umgesetzt wird, wobei
X eine in Anspruch 3 angegebene Bedeutung hat.

Die Herstellung von Perfluoralkylfluorphosphoranen gemäß Formel II kann nach üblichen, dem Fachmann bekannten Methoden erfolgen. Vorzugsweise werden diese Verbindungen durch elektrochemische Fluorierung geeigneter Ausgangsverbindungen hergestellt [V.Y. Semenii et al., 1985, Zh. Obshch. Khim. 55 (12): 2716-2720; N. V. Ignatyev, P. Sartori, 2000, J. Fluorine Chem. 103: 57-61; WO 00/21969].

Fluoralkylfluorphosphorane können durch eine radikalische Addition von Dialkylphosphiten, (RO)₂P(O)H oder Phosphinen an Fluorolefine erhalten werden [N.O. Brace, J. Org. Chem., 26 (1961), p. 3197-3201; P. Cooper, R. Fields, R.N. Haszeldine, J. Chem. Soc., Perkin I, 1975, p. 702-707; G.M. Burch, H. Goldwhite, R.N. Haszeldine, J. Chem. Soc., 1963, p. 1083-1091] oder zu Fluoralkylolefinen siehe P. Kirsch, Modern Fluoroorganic Chemistry, WILEY-VCH, 2004, p. 174], nachfolgend einer Chlorierung/Fluorierung oder einer oxidativen Fluorierung.
Die Reaktion des Phosphorans der Formel II mit der organischen Base, insbesondere den organischen Basen, wie zuvor beschrieben oder als bevorzugt beschrieben, erfolgt bei Temperaturen von 0 bis 80°C, bevorzugt von 15 bis 30°C, in Gegenwart eines organischen Lösungsmittels und in einer wasserfreien Atmosphäre.
Geeignete Lösemittel sind hier Acetonitril, Dioxan, Dichlormethan, Dimethoxyethan, Dimethylsulfoxid, Tetrahydrofuran oder Dialkylether, beispielsweise Diethylether oder Methyl-*t*-butylether.

Die Verbindungen der Formeln IIIa, IIIb oder IIIc können isoliert werden, sie werden aber bevorzugt nicht isoliert sondern in einer nachfolgenden Reaktion ohne Aufarbeitung des Reaktionsgemischs mit der Verbindung HX weiter umgesetzt, wobei X eine zuvor angegebene oder als bevorzugt beschriebene Bedeutung hat.

Auch die Reaktionstemperatur der Umsetzung mit der Verbindung HX liegt bei 0 bis 80°C, bevorzugt bei 15 bis 30°C, besonders bevorzugt bei Raumtemperatur.
Trägt die Verbindung HX mehr als eine OH-Gruppe, so reagiert je nach molarer Menge der Verbindung HX nur eine OH-Gruppe mit dem Phosphoran der Formel II, oder es reagieren mehrere OH-Gruppen mit dem Phosphoran der Formel II. Beispiele hierzu werden im Beispielteil beschrieben.

Ausgehend von den Verbindungen der Formel I, wobei das Kation ein durch eine organische Base stabilisiertes Proton ist, können nun die Verbindungen der Formel I mit den Kationen, ausgewählt aus durch basische Lösungsmittel stabilisiertes (solvatisiertes) Proton, Metallkation oder organische Kationen, wie zuvor beschrieben, hergestellt werden.

Dies erfolgt klassisch für die Metallkationen oder organischen Kationen durch eine Umsalzungsreaktion.

Die Verbindungen der Formel I, die ein durch ein basisches Lösungsmittel stabilisiertes Proton besitzen, können auch bei dem bereits beschriebenen Verfahren entstehen, je nachdem, ob die Affinität des Protons bevorzugt bei dem basischen Lösungsmittel oder der organischen Base liegt.
Ein weiterer Gegenstand der Erfindung ist daher ein Verfahren zur Herstellung von Verbindungen der Formel I, nach Anspruch 6, wobei Kt ein Metallkation oder ein organisches Kation bedeutet durch eine Umsalzungsreaktion, dadurch gekennzeichnet, dass eine Verbindung der Formel I, wobei Kt ein durch eine Base stabilisiertes Proton bedeutet, hergestellt nach dem zuvor beschriebenen Verfahren, mit einer Verbindung der Formel IV

KtA IV

umgesetzt wird, wobei Kt ein Metallkation oder ein organisches Kation bedeutet, wie zuvor beschrieben oder als bevorzugt beschrieben und A ein Anion bedeutet, ausgewählt aus Cl⁻, Br⁻, I⁻, OH⁻, [R₁COO]⁻, [R₁SO₃]⁻_{,} [R₂COO]⁻, [R₂SO₃]⁻, [R₁OSO₃]⁻, [BF₄]⁻, [SO₄]²⁻, [HSO₄]¹⁻, [NO₃]⁻, [(R₂)₂P(O)O]⁻, [R₂P(O)O₂]²⁻ oder [CO₃]²⁻, wobei R₁ jeweils unabhängig voneinander geradkettiges oder verzweigtes Alkyl mit 1 bis 4 C-Atomen bedeutet und R₂ jeweils unabhängig voneinander geradkettiges oder verzweigtes perfluoriertes Alkyl mit 1 bis 4 C-Atomen bedeutet, wobei die Elektroneutralität der Salze der Formel KtA zu beachten ist.

Die Umsalzungsreaktion wird vorteilhaft in Wasser durchgeführt, wobei Temperaturen von 0°-100°C, bevorzugt 15°-60°C geeignet sind. Besonders bevorzugt wird bei Raumtemperatur (25°C) umgesetzt.

Die Reaktion kann jedoch alternativ auch in organischen Lösemitteln bei Temperaturen zwischen -30° und 100°C stattfinden. Geeignete Lösemittel sind hier Acetonitril, Dioxan, Dichlormethan, Dimethoxyethan, Dimethylsulfoxid, Tetrahydrofuran, Dimethylformamid oder Alkohol, beispielsweise Methanol, Ethanol oder Isopropanol.

Die Umsalzungsreaktion kann auch direkt im Anschluss an das zuvor beschriebene Verfahren erfolgen, ohne dass eine Isolierung der Verbindungen der Formel I notwendig ist, deren Kation ein durch eine organische Base stabilisiertes Proton ist.

Durch die genannte Umsalzungsreaktion können Verbindungen der Formel I hergestellt werden, wie zuvor beschrieben, in denen das Metallkation ein Alkalimetall- oder Erdalkalimetallkation ist. Insbesondere Verbindungen der Formel I, wie zuvor beschrieben, mit Akalimetall- oder Erdalkalimetallkationen sind von Interessse, in denen X OR bedeutet, insbesondere Verbindungen der Formel I mit Alkalimetall- oder Erdalkalimetallkationen, in denen R im Rest OR nicht H bedeutet, sondern die übrigen Bedeutungen hat, wie zuvor beschrieben.

Insbesondere Lithiumsalze der Verbindungen der Formel I, abgekürzt als Formel I-1

Li⁺ [P(R_{f})ₙF₅₋ₙX]⁻ I-1,

wobei R_{f} jeweils unabhängig voneinander eine geradkettige oder verzweigte Fluoralkylgruppe mit 1 bis 8 C-Atomen bedeutet,
X OR, Ac, OAr oder OHet bedeutet,
Ac eine Carboxylgruppe OC(O)R bedeutet, umfassend auch Salze einer aliphatischen Dicarbonsäure mit der Formel Ib-1

2 [Li]⁺ [(R_{f})ₙPF₅₋ₙ(OC(O)-R'-C(O)O)F₅₋ₙP(R_{f})ₙ]²⁻ Ib-1

und R' eine Einfachbindung oder eine Alkylengruppe mit 1 bis 4 C-Atomen bedeutet,
Alk eine geradkettige oder verzweigte Alkylgruppe mit 1 bis 12 C-Atomen bedeutet,
Ar eine Arylgruppe mit 6 bis 12 C-Atomen bedeutet, die unsubstituiert oder durch Hal; NH₂, NAlk₂, NHAlk, NO₂, CN, SO₃H oder OR subsituiert sein kann,
Het eine Heteroarylgruppe mit 5 bis 13 C-Atomen bedeutet, die unsubstituiert oder durch Hal, NH₂, NAlk₂, NHAlk, NO₂, CN, SO₃H oder OR substituiert sein kann,
R H, eine geradkettige oder verzweigte Alkylgruppe mit 1 bis 20 C-Atomen bedeutet, die teilweise mit Hal, NH₂, NHAlk, NAlk₂, OH, NO₂, CN oder SO₃H substituiert sein kann oder eine geradkettige oder verzweigte Alkenylgruppe mit 2 bis 20 C-Atomen bedeutet, die mehrere Doppelbindungen enthalten kann, wobei ein oder zwei nicht benachbarte und nicht am Heteroatom gebundene Kohlenstoffatome der Alkyl- oder Alkenylgruppe durch Atome und/oder Atomgruppierungen ausgewählt aus der Gruppe -O-, -S-, -S(O)-, -SO₂-, NH, -C(O)-, -O-C(O)- oder -C(O)-O-ersetzt sein können,
Hal bedeutet F, Cl, Br oder I und
n 1, 2 oder 3 bedeutet und/oder ihre Tautomere oder Steroisomere, einschließlich deren Mischungen in allen Verhältnissen,
eignen sich zur Herstellung von Elektrolytzubereitungen, insbesondere für elektrochemische oder optoelektronische Vorrichtungen. Die Lithiumsalze der Formel I-1 eignen sich insbesondere als Leitsalz für elektrochemische Batterien, insbesondere Lithiumionenbatterien,
Lithiumionenkondendsatoren oder Lithiumbatterien. Besonders bevorzugt werden Lithiumsalze der Formel I-1 eingesetzt, in denen R eine geradkettige oder verzweigte Alkylgruppe mit 1 bis 20 C-Atomen bedeutet, die teilweise mit Hal, NH₂, NHAlk, NAlk₂, OH, NO₂, CN oder SO₃H substituiert sein kann oder eine geradkettige oder verzweigte Alkenylgruppe mit 2 bis 20 C-Atomen bedeutet, die mehrere Doppelbindungen enthalten kann, wobei ein oder zwei nicht benachbarte und nicht am Heteroatom gebundene Kohlenstoffatome der Alkyl- oder Alkenylgruppe durch Atome und/oder Atomgruppierungen ausgewählt aus der Gruppe -O-, -S-, -S(O)-, -SO₂-, NH, -C(O)-, -O-C(O)- oder -C(O)-O-ersetzt sein können.

Verbindungen der Formel I, in denen Kt^{z+} ein Alkalimetall- oder ein Erdalkalimetallkation bedeutet und X OR und R H bedeuten sind bei tiefen Temperaturen lagerfähig, zersetzen sich jedoch bei Erhitzen und/oder Anwesenheit von Wasser ohne oder in Anwesenheit von einer Base. Diese Verbindungen entstehen alternativ zu dem zuvor beschriebenen Verfahren, wenn eine anorganische Base, bevorzugt ein Alkalimetallhydroxid, ein Erdalkalimetallhydroxid und/oder ein Alkalimetallcarbonat oder Erdalkalimetallcarbonat, mit dem Phosphoran der Formel II, wie zuvor beschrieben, umgesetzt wird. Dies ist unabhängig von der verwendeten Reaktionstemperatur.

Verbindungen der Formel I, in denen Kt^{z+} ein Alkalimetall oder ein Erdalkalimetallkation bedeutet und X Ac bedeutet, entstehen alternativ, wenn ein Alkalimetallcarboxylat oder Erdalkalimetallcarboxylat, wie zuvor beschrieben, mit dem Phosphoran der Formel II, wie zuvor beschrieben, in Anwesenheit eines organischen Lösungsmittels umgesetzt wird. Verbindungen der Formel I, in denen Kt^{z+} einem Ammoniumkation der Formel (1) entspricht, wie zuvor beschrieben, und X Ac bedeutet bzw. Verbindungen der Formel Ib, in denen Kt^{z+} ein Ammoniumkation bedeutet, können alternativ hergestellt werden, indem ein Fluoralkylfluorphosphoran der Formel II

(R_{f})ₙPF₅₋ₙ II,

wobei R_{f} jeweils unabhängig voneinander eine geradkettige oder verzweigte Fluoralkylgruppe mit 1 bis 8 C-Atomen bedeutet und n 1, 2 oder 3 bedeutet, mit einem Ammoniumcarboxylat der Formel Va oder Vb

[N(R⁰)₄]⁺ [(OC(O)R)]⁻ Va

oder

2 [N(R⁰)₄]⁺ [(OC(O)-R'-C(O)O)]²⁻ Vb,

wobei R⁰, R und R' eine zuvor beschriebene oder bevorzugte Bedeutung haben,
in einem organischen Lösungsmittel umgesetzt wird und das Lösungsmittel anschließend entfernt wird.

Verbindungen der Formel I, in denen Kt^{z+} einem Ammoniumkation der Formel (1) oder einem Phosphoniumkation der Formel (2) entspricht, wie zuvor beschrieben, und X OR bedeutet und R H bedeutet können alternativ hergestellt werden, indem ein Fluoralkylfluorphosphoran der Formel II

(R_{f})ₙPF₅₋ₙ II,

wobei R_{f} jeweils unabhängig voneinander eine geradkettige oder verzweigte Fluoralkylgruppe mit 1 bis 8 C-Atomen bedeutet und n 1, 2 oder 3 bedeutet, mit einem Ammoniumhydroxid der Formel VIa oder einem Phosphoniumhyroxid der Formel Vlb

[N(R⁰)₄] [OH] VIa

oder

[P(R²)₄] [OH] VIb,

wobei R⁰ und R² eine zuvor genannte oder besonders bevorzugte Bedeutung haben, in einem organischen Lösungsmittel umgesetzt wird und das organische Lösungsmittel entfernt wird.

Die Verbindungen der Formel I, wie zuvor beschrieben, in denen das Kation Kt ein stabilisiertes (solvatisiertes) Proton ist, wie zuvor beschrieben, eignen sich insbesondere als Säurekatalysator für chemische Reaktionen, insbesondere für Polymerisationen und Isomerisationen.

Die Verbindungen der Formel I, wie zuvor beschrieben, in denen Kt ein Metallkation der Gruppen 3 bis 12 des Periodensystems ist, eignen sich insbesondere als Katalysator oder als Additiv in Elektrolyten.

Die Verbindungen der Formel I, wie zuvor beschrieben, in denen Kt ein organisches Kation ist, wie zuvor beschrieben oder als bevorzugt beschrieben, eignen sich insbesondere als Lösungsmittel oder Lösungsmittelzusatz, als Katalysator oder Phasentransfer-Katalysator, als Leitsalz oder als Elektrolytbestandteil, als Fluortensid, als Wärmeträger, alsTrennmittel oder Extraktionsmittel, als Antistatikum, als Weichmacher, als Schmiermittel oder Bestandteil von Schmierölen oder -fetten, als hydraulische Flüssigkeit oder Additiv für hydraulische Flüssigkeiten, als Flammschutzmittel oder als Additiv in Feuerlöschmitteln.
Die Verbindungen der Formel I mit organischen Kationen, wie zuvor beschrieben, sind ebenfalls ionische Flüssigkeiten.

Bei der Verwendung der Verbindungen der Formel I als Lösungsmittel eignen sich diese für jede dem Fachmann bekannte Art der Reaktion, beispielsweise für Übergängsmetall- oder Enzym-katalysierte Reaktionen, wie z.B. Hydroformylierungsreaktionen, Oligomerisierungsreaktionen, Veresterungen oder Isomerisierungen, wobei diese Liste keinen Anspruch auf Vollständigkeit erhebt.

Bei Verwendung als Extraktionsmittel können die Verbindungen der Formel I verwendet werden, um Reaktionsprodukte abzutrennen, aber auch, um Verunreinigungen abzutrennen, je nach Löslichkeit der jeweiligen Komponente in der ionischen Flüssigkeit. Außerdem können die ionischen Flüssigkeiten auch als Trennmedien bei der Trennung von mehreren Komponenten dienen, beispielsweise bei der destillativen Trennung mehrerer Komponenten eines Gemisches.

Weitere mögliche Anwendungen sind die Verwendung als Weichmacher in Polymermaterialien, als Flammverzögerer für eine Reihe von Materialien oder Anwendungen und als Leitsalz oder Zusatzstoff in verschiedenen elektrochemischen Zellen und Anwendungen, z.B. in galvanischen Zellen, in Kondensatoren oder in Brennstoffzellen.

Weitere Anwendungsgebiete der Verbindungen der Formel I gemäß dieser Erfindung sind Lösungsmittel für kohlehydrathaltige Feststoffe, insbesondere Biopolymere und deren Derivate oder Abbauprodukte. Zusätzlich können diese neuen Verbindungen als Schmiermittel, Arbeitsmedien für Maschinen, wie Kompressoren, Pumpen oder Hydraulikvorrichtungen eingesetzt werden. Ein weiterer Anwendungsbereich ist das Gebiet der Partikel- oder Nanomaterialsynthese, bei der diese ionischen Flüssigkeiten als Medium oder Zusatzstoff fungieren können.

Die Verbindungen der Formel I mit organischen Kationen, z.B. ionische Flüssigkeiten, können vorzugsweise in elektrochemischen und/oder optoelektronischen Vorrichtungen, insbesondere in Elektrolytformulierungen, verwendet werden.

Elektrolytformulierungen von Verbindungen der Formel I, in der [Kt]^{z+} Li⁺ oder ein organisches Kation bedeutet, können vorzugsweise in Primärbatterien, Sekundärbatterien, Kondensatoren, Superkondensatoren oder elektrochemischen Zellen, gegebenenfalls auch in Kombination mit weiteren Leitsalzen und/oder Zusatzstoffen, als Bestandteil eines Polymerelektrolyts oder Phasentransfermediums verwendet werden. Bevorzugte Batterien sind Lithiumbatterien oder Lithiumionen-Batterien. Ein bevorzugter Kondensator ist ein Lithiumionen-Kondensator. Die entsprechenden bevorzugten Lithiumverbindungen wurden zuvor beschrieben und gelten entsprechend.

Elektrolytformulierungen von Verbindungen der Formel I können vorzugsweise in elektrochemischen und/oder optoelektronischen Vorrichtungen wie einem Photoelement, einer Lichtemittervorrichtung, einer elektrochromen oder photo-elektrochromen Vorrichtung, einem elektrochemischen Sensor und/oder Biosensor, besonders bevorzugt in einer Farbstoffsolarzelle, verwendet werden.

Derartige Elektrolytformulierungen stellen einen kritischen Teil der offenbarten Vorrichtungen dar und die Leistung der Vorrichtung hängt weitgehend von den physikalischen und chemischen Eigenschaften der verschiedenen Komponenten dieser Elektrolyte ab.

Die beschriebenen Elektrolytformulierungen stellen Alternativen für bereits bekannte Elektrolytformulierungen dar.
Insbesondere im Bereich der Elektrolytformulierungen von Farbstoffsolarzellen weisen sie eine erhöhte Effizienz der Leistungsumwandlung auf, insbesondere bei niedriger Temperatur.

WO 2007/093961 und WO 2009/083901 beschreiben bis jetzt die beste Effizienz der Leistungsumwandlung bei Elektrolyten auf der Basis von ionischen Flüssigkeiten, die eine signifikante Menge an organischen Salzen mit Tetracyanoborat (TCB)-Anionen enthalten.

Chemisch gesehen ist ein Elektrolyt eine beliebige Substanz, die freie Ionen enthält und dadurch elektrisch leitfähig ist. Das typischste Elektrolyt ist eine ionische Lösung, aber Schmelz- und Festelektrolyte sind ebenfalls möglich.
Eine Elektrolytformulierung ist daher ein elektrisch leitfähiges Medium, hauptsächlich aufgrund der Anwesenheit mindestens einer Substanz, die in gelöstem und/oder in geschmolzenem Zustand vorliegt, d.h. eine elektrische Leitfähigkeit durch Bewegung von Ionenspezies unterstützt.

Typische Molaritäten der Verbindungen der Formel I, wie zuvor beschrieben, in den Elektrolytformulierungen liegen im Bereich von 0,1 bis 3,5 M, vorzugsweise im Bereich von 0,8 bis 2,5 M.
Vorzugsweise wird die Molarität mit mindestens einer Verbindung der Formel I erzielt, in der [Kt]^{z+} ein organisches Kation wie oben beschrieben oder bevorzugt beschrieben bedeutet.
Für die Zwecke der vorliegenden Beschreibung bezieht sich die Molarität auf die Konzentration bei 25°C.

Andere Komponenten der Elektrolytformulierung sind ein oder mehrere weitere Salze, Lösungsmittel, lod und andere, wie im Folgenden angegeben.

Handelt es sich bei der Elektrolytformulierung um ein Zweikomponentensystem, so enthält dieses zwei Salze, ein weiteres Salz und eine Verbindung der Formel I wie oben beschrieben. Handelt es sich bei der Elektrolytformulierung um ein Dreikomponentensystem, so enthält dieses zwei weitere Salze und eine Verbindung der Formel I wie oben beschrieben. Das Zweikomponentensystem enthält 90-20 Gew.-%, vorzugsweise 80-55 Gew.-%, besonders bevorzugt 70-60 Gew.-% des weiteren Salzes und 10-80 Gew.-%, vorzugsweise 20-45 Gew.-% oder besonders bevorzugt 30-40 Gew.-% der Verbindung der Formel I wie oben beschrieben. Die Prozentangaben in diesem Absatz beziehen sich auf die Gesamtmenge (= 100 Gew.-%) der in der Elektrolytformulierung vorhandenen Salze. Mengen an weiteren, im Allgemeinen optionalen, unten angegebenen Komponenten (Zusatzstoffen), wie z.B. N-haltige Verbindungen mit freien Elektronenpaaren, lod, Lösungsmittel, Polymere und Nanopartikel, sind hierin nicht berücksichtigt. Die gleichen Prozentangaben gelten für Dreikomponenten- oder Vierkomponentensysteme, was bedeutet, dass die Gesamtmenge der weiteren Salze in den angegebenen Bereichen verwendet werden muss, z.B. zwei weitere ionische Flüssigkeiten sind z.B. zu 90-20 Gew.-% in der Elektrolytformulierung enthalten.

Gemäß einer weiteren Ausführungsform enthält die Elektrolytformulierung mindestens ein weiteres Salz mit organischen Kationen enthaltend einen quaternären Stickstoff und ein Anion, das aus einem Halogenidion, wie F⁻, Cl⁻, I⁻, einem Polyhalogenidion, einem Fluoralkansulfonat, einem Fluoralkancarboxylat, einem Tri(fluoralkylsulfonyl)-methid, einem Bis(fluoralkylsulfonyl)imid, einem Nitrat, einem Hexafluorphosphat, einem Tris-, Bis- oder Mono-(fluoralkyl)fluorphosphat, einem Tetrafluorborat, einem Dicyanodifluorborat, einem Tricyanofluorborat, einem Tris-, Bis- oder Mono(perfluoralkyl)cyanoborat, einem Bis- oder Monocyano-perfluoralkyl-mono- oder bis fluorborat, einem Perfluoralkyl-alkoxy-fluorcyanoborat oder einem Perfluoralkyl-alkoxydicyanoborat, einem Dicyanamid, einem Tricyanomethid, einem Tetracyanoborat, einem Thiocyanat, einem Alkylsulfonat oder einem Alkylsulfat ausgewählt ist, wobei Fluoralkan 1 bis 20 C-Atome, vorzugsweise perfluoriert, Fluoralkyl 1 bis 20 C-Atome und Alkyl 1 bis 20 C-Atome aufweist. Fluoralkan oder Fluoralkyl ist vorzugsweise perfluoriert.

Vorzugsweise sind die weiteren Salze unter Salzen ausgewählt, die Anionen wie Iodid, Thiocyanat oder Tetracyanoborat enthalten; besonders bevorzugte weitere Salze sind Iodide.

Das Kation des mindestens einen weiteren Salzes oder eines bevorzugten weiteren Salzes kann aus organischen Verbindungen, die ein quaternäres Stickstoffatom enthalten, vorzugsweise cyclischen organischen Kationen wie Pyridinium, Imidazolium, Triazolium, Pyrrolidinium oder Morpholinium, ausgewählt werden.

Um jedoch die Menge unterschiedlicher Kationen in den Elektrolytformulierungen zu begrenzen, insbesondere für DSC, kann man die organischen Kationen unter den Definitionen für die Kationen der Verbindungen der Formel I auswählen. Gemäß einer weiteren bevorzugten Ausführungsform enthält die Elektrolytformulierung daher mindestens eine Verbindung der Formel I wie oben beschrieben und mindestens ein weiteres Iodid, in dem die organischen Kationen unabhängig ausgewählt sind aus der Gruppe 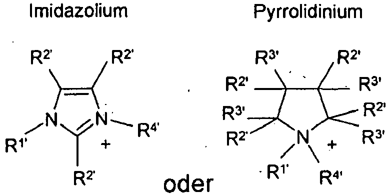 in denen die Substituenten R^{1'} bis R^{4'} eine Bedeutung wie oben beschrieben oder bevorzugt beschrieben besitzen.

Besonders bevorzugte Beispiele des mindestens einen weiteren Salzes sind 1-Ethyl-3-methylimidazoliumiodid, 1-(2-Methoxyethyl)-3-methylimidazoliumiodid, 1-Propyl-3rmethylimidazoliumiodid, 1-Butyl-3-methylimidazoliumiodid, 1-Hexyl-3-methylimidazoliumiodid, 1,3-Dimethylimidazoliumiodid, 1-Allyl-3-methylimidazoliumiodid, N-Butyl-N-methylpyrrolidiniumiodid oder N,N-Dimethylpyrrolidiniumiodid.

In einer weiteren Ausführungsform kann der Elektrolytformulierung Guanidiniumthiocyanat zugesetzt werden.

Die Elektrolytformulierung enthält vorzugsweise lod (I₂). Vorzugsweise enthält sie 0,01 bis 50 Gew.-%, besonders bevorzugt 0,1 bis 20 Gew.-% und am meisten bevorzugt 1 bis 10 Gew.-% I₂.

In einer bevorzugten Ausführungsform enthält die Elektrolytformulierung weiterhin mindestens eine Verbindung mit einem Stickstoffatom mit freien Elektronenpaaren. Beispiele derartiger Verbindungen finden sich in EP 0 986 079 A2, beginnend auf Seite 2, Zeile 40-55, und weiter von Seite 3, Zeile 14 bis Seite 7, Zeile 54, die hierin durch Bezugnahme aufgenommen sind. Bevorzugte Beispiele für Verbindungen mit freien Elektronenpaaren umfassen Imidazol und dessen Derivate, insbesondere Benzimidazol und dessen Derivate.

Die Elektrolytformulierung enthält weniger als 50% eines organischen Lösungsmittels. Vorzugsweise enthält die Elektrolytformulierung weniger als 40%, besonders bevorzugt weniger als 30%, noch stärker bevorzugt weniger als 20% und sogar weniger 10%. Am meisten bevorzugt enthält die Elektrolytformulierung weniger als 5% eines organischen Lösungsmittels. Sie ist beispielsweise im Wesentlichen frei von organischem Lösungsmittel. Prozentangaben beziehen sich auf Gew.-%.

Organische Lösungsmittel können, wenn sie in den oben angegebenen Mengen vorhanden sind, aus den in der Literatur offenbarten ausgewählt werden. Vorzugsweise weist das Lösungsmittel, wenn vorhanden, einen Siedepunkt über 160 Grad Celsius, besonders bevorzugt über 190 Grad auf, wie Propylencarbonat, Ethylencarbonat, Butylencarbonat, γ-Butyrolacton, γ-Valerolacton, Glutarnitril, Adiponitril, N-Methyloxazolidinon, N-Methylpyrrolidinon, N,N'-Dimethylimidazolidinon, N,N-Dimethylacetamid, cyclischen Harnstoffen, bevorzugt 1,3-Dimethyl-2-imidazolidinon oder 1,3-Dimethyl-3,4,5,6-tetrahydro-2(1 H)-pyrimidinon, Tetraglyme, Sulfolane, Sulfone, die vorzugsweise asymmetrisch substituiert sind, beispielsweise 2-ethansulfonyl-propan, 1-ethansulfonyl-2-methyl-propan oder 2-(Propan-2-sulfonyl)-butan, 3-Methylsulfolan, Dimethylsulfoxid, Trimethylphosphat und methoxysubstituierte Nitrile. Andere mögliche Lösungsmittels sind Acetonitril, Benzonitril oder Valeronitril.

Bei Vorhandensein eines Lösungsmittels in der Elektrolytformulierung kann weiterhin ein Polymer als Geliermittel enthalten sein, wobei es sich bei dem Polymer um Polyvinylidenfluorid, Polyvinyliden-Hexafluorpropylen-, Polyvinyliden-Hexafluorpropylen-Chlortrifluorethylen-Copolymere, Nafion, Polyethylenoxid, Polymethylmethacrylat, Polyacrylnitril, Polypropylen, Polystyrol, Polybutadien, Polyethylenglycöl, Polyvinylpyrrolidon, Polyanilin, Polypyrrol, Polythiophen handelt. Diese Polymere werden den Elektrolytformulierungen zugesetzt, um Flüssigelektrolyte in quasi-feste oder Festelektrolyte umzuwandeln und so die Lösungsmittelretention zu verbessern, vor allem beim Altern.

Die Elektrolytformulierung kann weiterhin Metalloxid-Nanopartikel wie z.B. SiO₂, TiO₂, Al₂O₃, MgO oder ZnO enthalten, die ebenfalls die Festigkeit und somit die Lösungsmittelretention erhöhen können.

Die Elektrolytformulierung kennt viele Anwendungen. Sie kann beispielsweise in einer optoelektronischen und/oder elektrochemischen Vorrichtung wie einem Photoelement, einer Lichtemittervorrichtung, einer elektrochromen oder photo-elektrochromen Vorrichtung, einem elektrochemischen Sensor und/oder Biosensor verwendet werden. Die Verwendung in elektrochemischen Batterien ist ebenfalls möglich, z.B. in einer Lithiumionen-Batterie oder einem Zweischichtkondensator.

Nach einer bevorzugten Ausführungsform handelt es sich bei der optoelektronischen und/oder elektronischen Vorrichtung um eine Farbstoff- oder Quantum-Dot-Solarzelle, besonders bevorzugt um eine Farbstoffsolarzelle.

Quantum-Dot-Solarzellen werden z.B. in US 6,861,722 offenbart. In Farbstoffsolarzellen wird ein Farbstoff verwendet, um das Sonnenlicht zu absorbieren und in elektrische Energie umzuwandeln. Es gibt an sich keine Beschränkung zur Art des Farbstoffs so lange der LUMO-Wert des Farbstoffs geringfügig über dem Leitungsband der Photoelektrode liegt. Beispiele für Farbstoffe werden in EP 0 986 079 A2, EP 1 180 774 A2 oder EP 1 507 307 A1 offenbart.
Bevorzugte Farbstoffe sind organische Farbstoffe, beispielsweise MK-1, MK-2 or MK-3 (deren Struktur is in Figur 1 von N. Koumura et al, J.Am.Chem.Soc. Vol 128, no.44, 2006, 14256-14257 beschrieben), D102 (CAS no. 652145-28-3), D-149 (CAS no. 786643-20-7), D205 (CAS no. 936336-21-9), D358 (CAS no. 1207638-53-6), YD-2 wie in T. Bessho et al, Angew. Chem. Int. Ed. Vol 49, 37, 6646-6649, 2010 beschrieben, Y123 (CAS no. 1312465-92-1), Bipyridin-Ruthenium Farbstoffe wie N3 (CAS no. 141460-19-7), N719 (CAS no. 207347-46-4), Z907 (CAS no. 502693-09-6), C101 (CAS no. 1048964-93-7), C106 (CAS no. 1152310-69-4), K19 (CAS no. 847665-45-6), SK-1 (CAS no. 906061-30-1) oder Terpyridin-Ruthenium-Farbstoffe wie N749 (CAS no. 359415-47-7).

Besonders bevorzugte Farbstoffe sind die Farbstoffe Z907 oder Z907Na, welche beide amphiphile Ruthenium-Sensibilisatoren sind oder D205. Der chemische Name für Z907Na lautet NaRu(2,2'-bipyridin-4-carboxylsäure-4'-carboxylat)(4,4'-dinonyl-2,2'-bipyridin)(NCS)₂.
Die Struktur des D205 ist

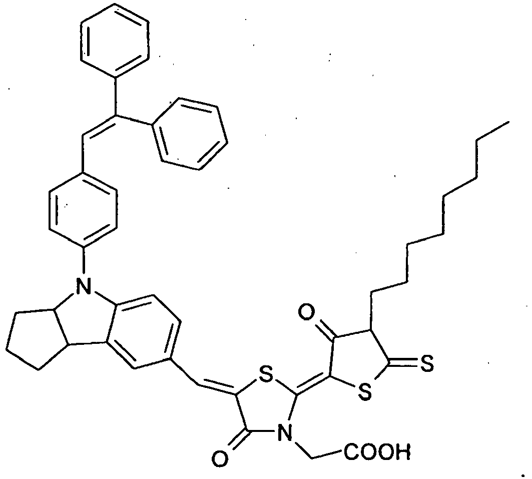

Ganz besonders bevorzugt werden die Farbstoffe Z907 oder Z907Na verwendet.

Eine Farbstoffsolarzelle enthält beispielsweise eine Photoelektrode, eine Gegenelektrode und zwischen der Photoelektrode und der Gegenelektrode eine Elektrolytformulierung oder ein Ladungstransportmaterial, wobei ein sensibilisierender Farbstoff auf der zur Gegenelektrode gerichteten Oberfläche der Photoelektrode absorbiert ist.

Nach einer bevorzugten Ausführungsform der Vorrichtung umfasst diese einen Halbleiter, die Elektrolytformulierung wie oben beschrieben und eine Gegenelektrode.
Nach einer bevorzugten Ausführungsform basiert der Halbleiter auf Material, das aus der Gruppe Si, TiO₂, SnO₂, Fe₂O₃, WO₃, ZnO, Nb₂O₅, CdS, ZnS, PbS, Bi₂S₃, CdSe, GaP, InP, GaAs, CdTe, CulnS₂ und/oder CulnSe₂ ausgewählt ist. Vorzugsweise umfasst der Halbleiter einer mesoporöse Oberfläche, was die Oberfläche vergrößert, die gegebenenfalls mit einem Farbstoff bedeckt ist und mit dem Elektrolyten in Kontakt steht. Vorzugsweise befindet sich der Halbleiter auf einem Glasträger oder einer Kunststoff- oder Metallfolie. Der Träger ist vorzugsweise leitfähig.

Die Vorrichtung enthält vorzugsweise eine Gegenelektrode. Beispielsweise fluordotiertes Zinnoxid oder zinndotiertes Indiumoxid auf Glas (FTO- bzw. ITO-Glas), das mit Pt, Kohlenstoff von vorzugsweise leitfähigen Allotropen, Polyanilin oder Poly(3,4-ethylendioxythiophen) (PEDOT) beschichtet ist. Neben Glas sind Metallsubstrate wie Edelstahl oder Titanblech mögliche Substrate.

Die Vorrichtung kann wie die entsprechende Vorrichtung des Standes der Technik hergestellt werden, indem man einfach den Elektrolyt durch die Elektrolytformulierung der vorliegenden Erfindung ersetzt. Beispielsweise ist für Farbstoffsolarzellen der Aufbau der Vorrichtung in zahlreichen Patentschriften, z.B. WO 91/16719 (Beispiele 34 und 35), aber auch in der wissenschaftlichen Literatur, z.B. in Barbe, C.J., Arendse, F., Comte, P., Jirousek, M., Lenzmann, F., Shklover, V., Grätzel, M. J. Am. Ceram. Soc. 1997, 80, 3157; und Wang, P., Zakeeruddin, S. M., Comte, P., Charvet, R., Humphry-Baker, R., Grätzel, M. J. Phys. Chem. B 2003, 107, 14336, offenbart.

Vorzugsweise dient das sensibilisierte Halbleitermaterial als Photoanode. Vorzugsweise handelt es sich bei der Gegenelektrode um eine Kathode.

Ein Verfahren zur Herstellung einer photoelektrischen Zelle umfasst den Schritt des Inkontaktbringens der Elektrolytformulierung mit einer Oberfläche eines Halbleiters, wobei die Oberfläche gegebenenfalls mit einem Sensibilisierer beschichtet ist. Der Halbleiter ist vorzugsweise aus den oben genannten Materialien und der Sensibilisierer vorzugsweise aus Quantum-Dots und/oder einem Farbstoff wie oben offenbart, besonders bevorzugt aus einem Farbstoff, ausgewählt.

Vorzugsweise kann die Elektrolytformulierung einfach auf den Halbleiter gegossen werden. Vorzugsweise wird sie auf die ansonsten fertige Vorrichtung aufgebracht, die bereits eine Gegenelektrode umfasst, indem man durch ein Loch in der Gegenelektrode ein Vakuum im inneren Lumen der Zelle erzeugt und die Elektrolytformulierung zugibt, wie in der Literaturstelle von Wang et al., J. Phys. Chem. B 2003, 107, 14336 offenbart.

Die folgenden Ausführungsbeispiele sollen die Erfindung erläutern, ohne sie zu begrenzen. Die Erfindung ist im gesamten beanspruchten Bereich entsprechend ausführbar. Ausgehend von den Beispielen lassen sich auch mögliche Varianten ableiten. Insbesondere sind die Merkmale und Bedingungen der in den Beispielen beschriebenen Reaktionen auch auf andere, nicht im Detail aufgeführte, aber unter den Schutzbereich der Ansprüche fallende Reaktionen anwendbar.

### Beispiele:

Die erhaltenen Stoffe werden Mittels Massenspektrometrie, Elementaranalyse und NMR- Spektroskopie charakterisiert. NMR-Spektren werden mit den Spektrometern Avance III 300, der Firma Bruker, Karlsruhe, aufgenommen. Aceton-d6 wird in einer Kapillare als Locksubstanz verwendet. Die Referenzierung erfolgt mit externer Referenz: TMS für ¹H und ¹³C Spektren; CCl₃F - für ¹⁹F und 80% H₃PO₄ - für ³¹P Spektren.

### Beispiel 1. Darstellung von [P(C₂F₅)₃F₂(dmap)]

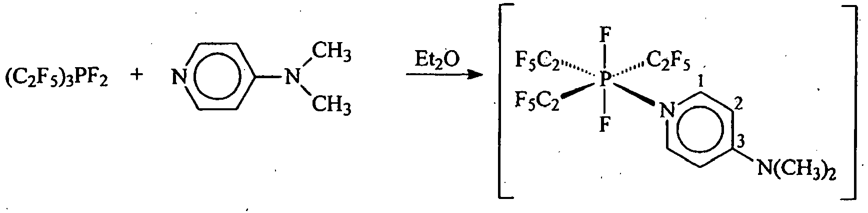

2,8 g (22,9 mmol) 4-(Dimethylamino)pyridin werden in 100 ml Diethylether vorgelegt und langsam mit 12,2 g (28,6 mmol) (C₂F₅)₃PF₂ versetzt. Nach 15 Minuten Rühren werden flüchtige Bestandteile im Vakuum entfernt. Es verbleibt ein farbloser Feststoff.
Ausbeute (bezogen auf DMAP): 12,1 g (97 %). Schmelzpunkt: 150 - 153 °C
³¹P-NMR-spektroskopische Daten von [P(C₂F₅)₃F₂(dmap)] in Et₂O

| δ, ppm | Multiplizität | *J* [Hz] | Zuordnung |
|---|---|---|---|
| -144,5 | t, quin, t | ¹*J*(PF) = 986 | [**P**(C₂F₅)₃F₂(dmap)] |
| | | ²*J*(PF*_{cis}*) = 107 | |
| | | ²*J*(PF*ₜᵣₐₙₛ*) = 97 | |

¹⁹F-NMR-spektroskopische Daten von [P(C₂F₅)₃F₂(dmap)] in Et₂O

| *δ*, ppm | Multiplizität | *J* [Hz] | Zuordnung | Integral |
|---|---|---|---|---|
| -80,4 | m | - | *trans*-C**F₃** | 1 |
| -81,6 | m | - | *cis*-C**F₃** | 2 |
| -99,4 | d | ¹*J*(PF) = 986 | P**F** | 0,6 |
| -111,5 | m (br) | - | *cis*-C**F₂** | 1 |
| -115,3 | d, m | ²*J*(PF) = 95 | *trans*-C**F₂** | 0,6 |

¹H-NMR-spektroskopische Daten von [P(C₂F₅)₃F₂(dmap)] in CDCl₃

| *δ*, ppm | Multiplizität | *J* [Hz] | Zuordnung | Integral |
|---|---|---|---|---|
| 3,2 | s | - | -N(C**H₃**)₂ | 3 |
| 6,7 | d | ³*J*(HH) = 7 | H2 | 1 |
| 8,4 | m (br) | - | H1 | 1 |

¹³C-NMR-spektroskopische Daten von [P(C₂F₅)₃F₂(dmap)] in CDCl₃

| | *δ*, ppm | Multiplizität | *J* [Hz] | Zuordnung |
|---|---|---|---|---|
| | 38,6 ^{a} | s | - | -N(CH₃)₂ |
| | 105,9 ^{a} | s | - | C1 |
| | 116,7 ^{b} | m | - | -**C**F₂CF₃ |
| | 118,2 ^{b} | m | - | -CF₂**C**F₃ |
| | 138,9 ^{a} | s | - | C2 |
| | 156,1 ^{a} | s | - | C3 |

| | | | | |
|---|---|---|---|---|
| ^{a} {¹H} ^{b} {¹⁹F} | | | | |

Elementaranalytische Daten von [P(C₂F₅)₃F₂(dmap)]

| | N | C | H |
|---|---|---|---|
| berechnet | 5,11 | 28,48 | 1,84 |
| experimentell | 4,91 | 28,63 | 1,67 |

Massenspektrometrische Daten (EI, 20 eV)

| m/z | rel. Intensität [%] | Zuordnung |
|---|---|---|
| 407 | 12 | [P(C₂F₅)₃F(dmap)]⁺ |
| 307 | 50 | [P(C₂F5)₂F₂(dmap)]⁺ |
| 207 | 15 | [P(C₂F₅)F₃(dmap)]⁺ |
| 122 | 100 | [C₇H₁₀N₂]⁺ |
| 69 | 6 | [CF₃]⁺ |

### Beispiel 2. Darstellung von [PPh₄][P(C₂F₅)₃F₂OH]

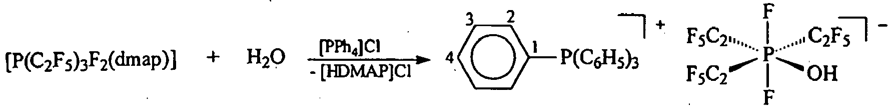

0,96 g (1,75 mmol) [P(C₂F₅)₃F₂(dmap)] werden in Ether vorgelegt und mit überschüssigem Wasser versetzt. Nach 30 Minuten Rühren werden 0,66 g (1,75 mmol) [PPh₄]Cl, in 2 ml Wasser gelöst, zugegeben und erneut 20 Minuten gerührt. Anschließend wird die wässrige Phase abgetrennt und die organische Phase dreimal mit Wasser extrahiert. Die organische Phase wird im Vakuum getrocknet. Als Rückstand verbleibt ein farbloser Feststoff. Ausbeute (bezogen auf [P(C₂F₅)₃F₂(dmap)]: 1,29 g (94 %). Schmelzpunkt: 139 °C
³¹P-NMR-spektroskopische Daten von [PPh₄][P(C₂F₅)₃F₂OH] in CD₃CN

| *δ*, ppm | Multiplizität | *J* [Hz] | Zuordnung | Integral |
|---|---|---|---|---|
| 23,2 | s | - | [**P**Ph₄][P(C₂F₅)₃F₂OH] | 1 |
| -148,3 | t, sept | ¹*J*(PF) = 845 | [PPh₄][**P**(C₂F₅)₃F₂OH] | |
| | | ²*J*(PF) = 86 | | |

¹⁹F-NMR-spektroskopische Daten von [PPh₄][P(C₂F₅)₃F₂OH] in CD₃CN

| *δ*, ppm | Multiplizität | *J* [Hz] | Zuordnung | Integral |
|---|---|---|---|---|
| -80,1 | m | - | *trans*-C**F₃** | 1 |
| -81,2 | m | - | *cis*-C**F₃** | 2,2 |
| -86,6 | d, m | ¹*J*(PF) = 846 | P**F** | 0,3 |
| -114,1 | d | ²*J*(PF) = 86 | *cis-, trans-CF₂* | 2,5 |

¹H-NMR-spektroskopische Daten von [PPh₄][P(C₂F₅)₃F₂OH] in CD₃CN

| *δ*, ppm | Multiplizität | *J* [Hz] | Zuordnung | Integral |
|---|---|---|---|---|
| 5,1 | t, d | ³*J*(FH) = 14 | [P(C₂F₅)₃F₂O **H**]⁻ | 1 |
| | | ²*J*(PH) = 3 | | |
| 7,8 - 8,1 | m | - | [P**Ph**₄]⁺ | 22 |

¹³C-NMR-spektroskopische Daten von [PPh₄][P(C₂F₅)₃F₂OH] in CD₃CN

| *δ*, ppm | Multiplizität | *J* [Hz] | Zuordnung |
|---|---|---|---|
| 118,5 ^{a} | d | ¹*J*(PC) = 90 | C1 |
| 119,1 ^{b} | m | - | -**C**F₂CF₃ |
| 120,7 ^{b} | m | - | -CF₂**C**F₃ |
| 130,3 ^{a} | d | ²*J*(PC) = 13 | C2 |
| 134,7 ^{a} | d | ³*J*(PC) = 10 | C3 |
| 135,4 ^{a} | d | ⁴*J*(PC) = 3 | C4 |

| | | | |
|---|---|---|---|
| ^{a} {¹H} ^{b} {¹⁹F} | | | |

Elementaranalytische Daten von [PPh₄][P(C₂F₅)₃F₂OH]

| | C | H |
|---|---|---|
| berechnet | 46,05 | 2,71 |
| experimentell | 46,40 | 2,79 |

Massenspektrometrische Daten (ESI, negativer Scanmodus)

| Signal | rel. Intensität [%] | Zuordnung |
|---|---|---|
| 443,18 | 100 | [P(C₂F₅)₃F₂OH]⁻ |
| 323,15 | 41 | [P(C₂F₅)₂F₂O]⁻ |

### Beispiel 3. Darstellung von [HDMAP][P(C₂F₅)₃F₂OC(O)CH₃], nicht erfindungsgemäß

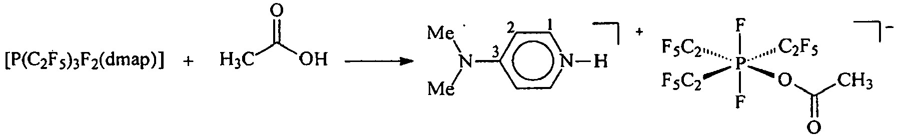

0,52 g (0,96 mmol) [P(C₂F₅)₃F₂(dmap)] werden in Dichlormethan vorgelegt. Bei Raumtemperatur werden 0,19 g (3,17 mmol) Essigsäure zugegeben und das Reaktionsgemisch 3 Stunden gerührt. Anschließend werden flüchtige Bestandteile im Vakuum entfernt. Es verbleibt ein farbloser Feststoff. Ausbeute (bezogen auf [P(C₂F₅)₃F₂(dmap)]): 0,54 g (93 %)
³¹P-NMR-spektroskopische Daten von [HDMAP][P(C₂F₅)₃F₂OC(O)CH₃] in CD₃CN

| *δ*, ppm | Multiplizität | *J* [Hz] | Zuordnung |
|---|---|---|---|
| -146,3 | t, quin, t | ¹*J*(PF) = 915 | [**P**(C₂F₅)₃F₂OC(O)CH₃]⁻ |
| | | ²*J*(PF*_{cis}*) = 103 | |
| | | ²*J*(PF*ₜᵣₐₙₛ*) = 84 | |

¹⁹F-NMR-spektroskopische Daten von [HDMAP][P(C₂F₅)₃F₂OC(O)CH₃] in CD₃CN

| *δ*, ppm | Multiplizität | *J* [Hz] | Zuordnung | Integral |
|---|---|---|---|---|
| -80,2 | m | - | *trans*-C**F₃** | 1 |
| -81,8 | m | - | *cis*-C**F₃** | 2 |
| -86,9 | d, m | ¹*J*(PF) = 923 | P**F** | 0,6 |
| -115,3 | d, m | ²*J*(PF) = 85 | *trans-*C**F₂** | - |
| -116,0 | d, m | ²*J*(PF) = 103 | *cis*-C**F**₂ | - |

¹H-NMR-spektroskopische Daten von [HDMAP][P(C₂F₅)₃F₂OC(O)CH₃] in CD₃CN

| *δ*, ppm | Multiplizität | *J* [Hz] | Zuordnung | Integral |
|---|---|---|---|---|
| 1,9 | s | - | -OC(O)C**H**₃ | 1,6 |
| 3,2 | s | - | -N(C**H**₃)₂ | 3 |
| 6,9 | d | ³*J*(HH) = 7 | H1 | 1 |
| 7,9 | d | ³*J*(HH) = 7 | H2 | 1 |

¹³C-NMR-spektroskopische Daten von [HDMAP][P(C₂F₅)₃F₂OC(O)CH₃] in CD₃CN

| *δ*, ppm | Multiplizität | *J*[Hz] | Zuordnung |
|---|---|---|---|
| 23,3 ^{a} | s | - | -OC(O)**C**H₃ |
| 39,6 ^{a} | s | - | -N(**C**H₃)₂ |
| 107,1 ^{a} | s | - | C1 |
| 116,7 ^{b} | m | - | -**C**F₂CF₃ |
| 120,0 ^{b} | m | - | -CF₂**C**F₃ |
| 138,6 ^{a} | s | - | C2 |
| 157,7 ^{a} | s | - | C3 |
| 166,3 ^{a} | d | ²*J*(PC) = 18 | -O**C**(O)CH₃ |

| | | | |
|---|---|---|---|
| ^{a} {¹H} ^{b} {¹⁹F} | | | |

### Beispiel 4. Darstellung von [HDMAP][P(C₂F₅)₃F₂OPh], nicht erfindungsgemäß

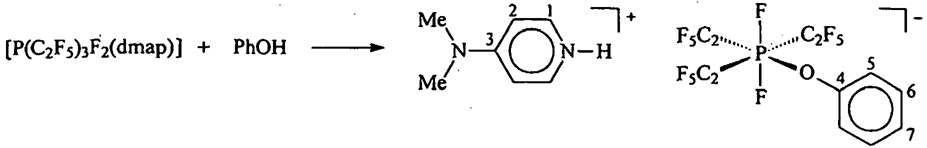

0,52 g (0,95 mmol) [P(C₂F₅)₃F₂(dmap)] werden in Diethylether vorgelegt. Bei Raumtemperatur werden 0,13 g (1,34 mmol) Phenol zugegeben und das Reaktionsgemisch 12 Stunden gerührt. Dabei bilden sich zwei Phasen aus. Das Lösungsmittel wird im Vakuum entfernt. Es verbleibt eine klare, farblose Flüssigkeit.
³¹P-NMR-spektroskopische Daten von [HDMAP][P(C₂F₅)₃F₂OPh] in CD₃CN

| *δ*, ppm | Multiplizität | *J* [Hz] | Zuordnung |
|---|---|---|---|
| -147,5 | t, quin, t | ¹*J*(PF) = 893 | [**P**(C₂F₅)₃F₂O Ph]⁻ |
| | | ²*J*(PF*_{cis}*) = 98 | |
| | | ²*J*(PF*ₜᵣₐₙₛ*) = 84 | |

¹⁹F-NMR-spektroskopische Daten von [HDMAP][P(C₂F₅)₃F₂OPh] in CD₃CN

| *δ*, ppm | Multiplizität | *J* [Hz] | Zuordnung | Integral |
|---|---|---|---|---|
| -79,4 | m | - | *trans*-C**F₃** | - |
| -80,5 | m | - | *cis*-C**F₃** | - |
| -85,5 | d, m | ¹*J*(PF) = 896 | P**F** | - |
| -111,5 | d, m | ²*J*(PF) = 97 | *cis*-C**F₂** | - |
| -112,7 | d, m | ²*J*(PF) = 79 | *trans*-C**F₂** | - |

¹H-NMR-spektroskopische Daten von [HDMAP][P(C₂F₅)₃F₂OPh] in CD₃CN

| *δ*, ppm | Multiplizität | *J* [Hz] | Zuordnung | Integral |
|---|---|---|---|---|
| 3,4 | s | - | -N(C**H**₃)₂ | 3 |
| 6,7 | d | ³*J*(HH) = 7 | H1 | 1 |
| 7,1 | m | - | -OC₆**H₅** | 2,2 |
| 8,3 | d | ³*J*(HH) = 7 | H2 | 1 |

¹³C-NMR-spektroskopische Daten von [HDMAP][P(C₂F₅)₃F₂C)Ph] in CD₃CN

| *δ*, ppm | Multiplizität | *J* [Hz] | Zuordnung |
|---|---|---|---|
| 39,7 ^{a} | s | - | -N(**C**H₃)₂ |
| 106,9 ^{a} | s | - | C1 |
| 115,2 ^{a} | s | - | C5 |
| 118,1 ^{b} | m | - | -CF₂CF₃ |
| 119,7 ^{b} | m | - | -CF₂CF₃ |
| 120,4 ^{b} | s | - | C6/7 |
| 128,9 ^{a} | s | - | C6/7 |
| 138,8 ^{a} | s | - | C2 |
| 157,0 ^{a} | s | - | C4 |
| 157,6 ^{a} | s | - | C3 |

| | | | |
|---|---|---|---|
| ^{a} {¹H} ^{b} {¹⁹F} | | | |

### Beispiel 5. Darstellung von [HDMAP]₂[{P(C₂F₅)₃F₂O}₂C₆H₄], nicht erfindungsgemäß

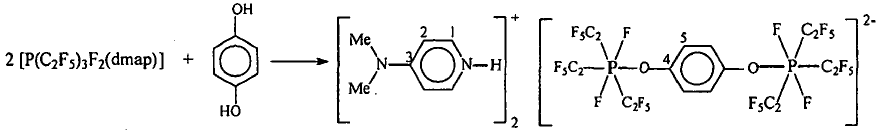

1,11 g (2 mmol) [P(C₂F₅)₃F₂(dmap)] werden in Diethylether vorgelegt. Bei Raumtemperatur werden 0,11 g (1 mmol) Hydrochinon zugegeben und das Reaktionsgemisch 4 Stunden gerührt. Anschließend werden flüchtige Bestandteile im Vakuum entfernt. Es verbleibt ein farbloser Feststoff. Ausbeute (bezogen auf Hydrochinon): 0,85 g (78 %).
³¹P-NMR-spektroskopische Daten von [HDMAP]₂[{P(C₂F₅)₃F₂O}₂C₆H₄] in CD₃CN

| *δ*, ppm | Multiplizität | *J* [Hz] | Zuordnung |
|---|---|---|---|
| -148,0 | t, quin, t | ¹*J*(PF) = 882 | [{**P**(C₂F₅)₃F₂O}₂C₆H₄]²⁻ |
| | | ²*J*(PF*_{cis}*) = 96 | |
| | | ²*J*(PF*ₜᵣₐₙₛ*) = 78 | |

¹⁹F-NMR-spektroskopische Daten von [HDMAP]₂[{P(C₂F₅)₃F₂O}₂C₆H₄] in CD₃CN

| *δ*, ppm | Multiplizität | *J* [Hz] | Zuordnung | Integral |
|---|---|---|---|---|
| -80,4 | m | - | *trans*-C**F₃** | 1 |
| -81,6 | m | - | *cis*-C**F₃** | 2 |
| -86,9 | d, m | ¹*J*(PF) = 881 | P**F** | 0,6 |
| -112,9 | d, m | ²*J*(PF) = 98 | *cis*-C**F₂** | 1,3 |
| -113,9 | d, m | ²*J*(PF) = 80 | *trans*-C**F₂** | 0,7 |

¹H-NMR-spektroskopische Daten von [HDMAP]₂[{P(C₂F₅)₃F₂O}₂C₆H₄] in CD₃CN

| δ, ppm | Multiplizität | *J* [Hz] | Zuordnung | Integral |
|---|---|---|---|---|
| 3,1 | s | - | -N(C**H₃**)₂ | 3 |
| 6,8 | m | - | H5/6 | 0,5 |
| 6,8 | d | ³*J*(HH) = 8 | H1 | 1 |
| 7,9 | d | ³*J*(HH) = 8 | H2 | 1 |

Elementaranalytische Daten von [HDMAP]₂[{P(C₂F₅)₃F₂O}₂C₆H₄]

| | N | C | H |
|---|---|---|---|
| berechnet | 4,67 | 32,07 | 1,51 |
| experimentell | 4,73 | 32,40 | 2,26 |

### Beispiel 6. Darstellung von [HDMAP][P(C₂F₅)₃F₂OEt]

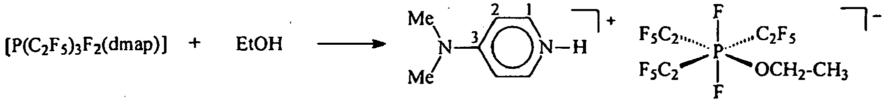

10,6 g (230 mmol) Ethanol werden in 100 ml Et₂O vorgelegt. Bei Raumtemperatur werden 12,5 g (23 mmol) [P(C₂F₅)₃F₂(dmap)] zugegeben und 30 Minuten gerührt. Anschließend werden flüchtige Substanzen über Nacht im Vakuum entfernt. Es verbleibt ein farbloser Feststoff. Ausbeute (bezogen auf [P(C₂F₅)₃F₂(dmap)]): 13,6 g (100 %). Schmelzpunkt: 75 - 78 °C
³¹P-NMR-spektroskopische Daten von [HDMAP][P(C₂F₅)₃F₂OEt] in CD₃CN

| *δ*, ppm | Multiplizität | *J* [Hz] | Zuordnung |
|---|---|---|---|
| -149,4 | t, sept | ¹*J*(PF) = 869 | [**P**(C₂F₅)₃F₂OC₂H₅]⁻ |
| | | ²*J*(PF) = 88 | |

¹⁹F-NMR-spektroskopische Daten von [HDMAP][P(C₂F₅)₃F₂OEt] in CD₃CN

| *δ*, ppm | Multiplizität | *J* [Hz] | Zuordnung | Integral |
|---|---|---|---|---|
| -80,6 | m | - | *trans*-C**F**₃ | 1 |
| -81,8 | m | - | *cis*-C**F**₃ | 2 |
| -94,5 | d | ¹*J*(PF) = 869 | P**F** | 0,6 |
| -113,5 | d, m | ²*J*(PF) = 83 | *trans*-C**F₂** | 0,6 |
| -114,4 | d, m | ²*J*(PF) = 86 | *cis*-C**F**₂ | 1,3 |

¹H-NMR-spektroskopische Daten von [HDMAP][P(C₂F₅)₃F₂OEt] in CD₃CN

| *δ*, ppm | Multiplizität | *J* [Hz] | Zuordnung | Integral |
|---|---|---|---|---|
| 1,1 | t, d | ³*J*(HH) = 7 | -OCH₂C**H**₃ | 1,4 |
| | | ⁴*J*(PH) = 1 | | |
| 3,2 | s | - | -N(C**H**₃)₂ | 3 |
| 4,0 | pseudoquin | ³*J*(PH) = 7 | -OC**H**₂CH₃ | 0,9 |
| | | ³*J*(HH) = 7 | | |
| 5,3 | s | - | -NH⁺ | 1 |
| 6,8 | d | ³*J*(HH) = 7 | H1 | 1 |
| 8,0 | d | ³*J*(HH) = 7 | H2 | 1 |

¹³C-NMR-spektroskopische Daten von [HDMAP][P(C₂F₅)₃F₂OEt] in CD₃CN

| *δ*, ppm | Multiplizität | *J* [Hz] | Zuordnung |
|---|---|---|---|
| 16,0 ^{a} | d | ³*J*(CP) = 10 | -OCH₂CH₃ |
| 39,6 ^{a} | s | - | (CH₃)₂N- |
| 61,8 ^{a} | m | - | -O**C**H₂CH₃ |
| 107,1 ^{a} | s | - | C1 |
| 118,8 ^{b} | m | - | -**C**F₂CF₃ |
| 122,5 ^{b} | m | - | -CF₂CF₃ |
| 138,5 ^{a} | s | - | C2 |
| 157,9 ^{a} | s | - | C3 |

| | | | |
|---|---|---|---|
| ^{a} {¹H} ^{b} {¹⁹F} | | | |

Elementaranalytische Daten von [HDMAP][P(C₂F₅)₃F₂OEt]

| | N | C | H |
|---|---|---|---|
| berechnet | 4,71 | 30,32 | 2,71 |
| experimentell | 4,74 | 30,32 | 2,69 |

Massenspektrometrische Daten (ESI, negativer Scanmodus)

| Signal | rel. Intensität [%] | Zuordnung |
|---|---|---|
| 965,04 | 9 | - |
| 471,16 | 100 | [P(C₂F₅)₃F₂OC₂H₅]⁻ |
| 445,11 | 21 | [P(C₂F₅)₃F₃]⁻ |

### Beispiel 7. Darstellung von [HDMAP][P(C₂F₅)₃F₂OCH₂CF₃]

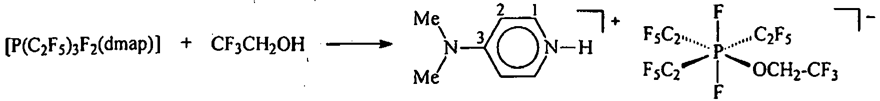

2,5 g (4,5 mmol) [P(C₂F₅)₃F₂(dmap)] werden in Diethylether vorgelegt. Bei Raumtemperatur werden 0,9 g (9.0 mol) Trifluorethanol zugegeben und das Reaktionsgemisch 12 Stunden gerührt. Anschließend werden flüchtige Bestandteile im Vakuum entfernt. Es verbleibt ein farbloser Feststoff. Ausbeute (bezogen auf [P(C₂F₅)₃F₂(dmap)]): 2,8 g (95 %). Schmelzpunkt: 91 - 93 °C.
³¹P-NMR-spektroskopische Daten von [HDMAP][P(C₂F₅)₃F₂OCH₂CF₃] in CD₃CN

| *δ*, ppm | Multiplizität | *J* [Hz] | Zuordnung |
|---|---|---|---|
| -149,9 | t, sept | ¹*J*(PF) = 886 | [**P**(C₂F₅)₃F₂OCH₂CF ₃]⁻ |
| | | ²*J*(PF) = 88 | |

¹⁹F-NMR-spektroskopische Daten von [HDMAP][(C₂F₅)₃PF₂OCH₂CF₃] in CD₃CN

| *δ*, ppm | Multiplizität | *J* [Hz] | Zuordnung | Integral |
|---|---|---|---|---|
| -75,4 | s | - | [P(C₂F₅)₃F₂OCH₂C**F ₃**]⁻ | 1 |
| -79,6 | m | - | *trans*-C**F₃** | 1 |
| -80,8 | m | - | *cis*-C**F₃** | 2 |
| -93,8 | d, m | ¹*J*(PF) = 883 | P**F** | 0, |
| | | | | 5 |
| -112,2 | d, m | - | *trans-, cis*-C**F₃** | 2, |
| | | | | 2 |

¹H-NMR-spektroskopische Daten von [HDMAP][P(C₂F₅)₃F₂OCH₂CF₃] in CD₃CN

| *δ*, ppm | Multiplizität | *J*[Hz] | Zuordnung | Integral |
|---|---|---|---|---|
| 3,2 | s | - | -N(C**H₃**)₂ | 3 |
| 4,4 | quar, d | ³*J*(FH) = 9 | | 1 |
| | | ³*J*(PH) = 4 | OC**H₂**CF₃ | |
| 6,8 | d | ³*J*(HH) = 7 | H1 | 1 |
| 8,0 | d | - | H2 | 1 |

¹³C-NMR-spektroskopische Daten von [HDMAP][P(C₂F₅)₃F₂OCH₂CF₃] in CD₃CN

| *δ*, ppm | Multiplizität | *J* [Hz] | Zuordnung |
|---|---|---|---|
| 39,6 ^{a} | s | - | -N(CH₃)₂ |
| 64,1 ^{a} | m | - | -OCH₂CF₃ |
| 106,9 ^{a} | s | - | C1 |
| 118,8^{b} | m | - | -**CF**₂CF₃ |
| 120,4^{b} | m | - | -CF₂**C**F₃ |
| 124,5^{b} | m | - | -OCH₂**C**F₃ |
| 138,9^{a} | s | - | C2 |
| 157,7^{a} | s | - | C3 |

| | | | |
|---|---|---|---|
| ^{a} {¹H} ^{b} {¹⁹F} | | | |

Elementaranalytische Daten von [HDMAP][P(C₂F₅)₃F₂OCH₂CF₃]

| | N | C | H |
|---|---|---|---|
| berechnet | 4,32 | 27,79 | 2,02 |
| experimentell | 4,47 | 28,10 | 1,64 |

Massenspektrometrische Daten (ESI, negativer Scanmodus)

| Signal | rel. Intensität [%] | Zuordnung |
|---|---|---|
| 1088,97 | 13 | - |
| 525,15 | 100 | (P(C₂F₅)₃F₂OCH₂CF₃]⁻ |

### Beispiel 8. Darstellung von [HDMAP][P(C₂F₅)₃F₂ODec]

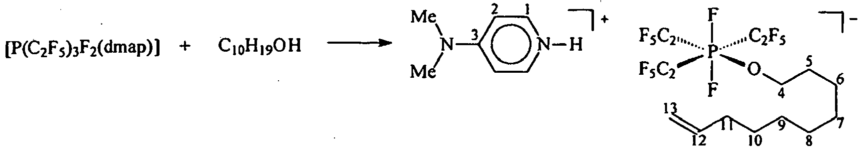

0,69 g (1,25 mmol) [P(C₂F₅)₃F₂(dmap)] werden in Et₂O gelöst. Bei Raumtemperatur werden 0,20 g (1,25 mmol) 9-Decen-1-ol zugegeben und 1,5 Stunden gerührt. Anschließend wird das Reaktionsgemisch im Vakuum getrocknet. Es verbleibt eine klare viskose Flüssigkeit. Ausbeute (bezogen auf [P(C₂F₅)₃F₂(dmap)]): 0,88 g (99 %). Schmelzpunkt: < 20 °C
³¹P-NMR-spektroskopische Daten von [HDMAP][P(C₂F₅)₃F₂ODeC] in CDCl₃

| *δ*, ppm | Multiplizität | *J* [Hz] | Zuordnung |
|---|---|---|---|
| -147,2 | t, sept | ¹*J*(PF) = 873 | [P(C₂F₅)₃F₂OC₁₀H₁₉]⁻ |
| | | ²*J*(PF) = 88 | |

¹⁹F-NMR-spektroskopische-Daten von [HDMAP][P(C₂F₅)₃F₂ODec] in CDCl₃

| *δ*, ppm | Multiplizität | *J* [Hz] | Zuordnung | Integral |
|---|---|---|---|---|
| -79,7 | m | - | *trans*-CF₃ | 1 |
| -81,0 | m | - | *cis*-CF₃ | 2,1 |
| -94,9 | d, m | ¹*J*(PF) = 876 | PF | 0,5 |
| -113,0 | d, m | - | *cis*-, *trans*-C**F**₂ | 2,1 |

¹H-NMR-spektroskopische Daten von [HDMAP][P(C₂F₅)₃F₂ODec] in CDCl₃

| *δ*, ppm | Multiplizität | *J*[Hz] | Zuordnung | Integral |
|---|---|---|---|---|
| 1,2-1,6 | m | - | H6- | 5,7 |
| | | | H10 | |
| 1,5 | t | ³*J*(HH) = 7 | H5 | - |
| 2,0 | quin | ³*J*(HH) = 7 | H11 | 1 |
| 3,2 | s | - | -N(CH₃)₂ | 3 |
| 3,7 | t | ³*J*(HH) = 7 | H4 | 0,6 |
| 4,9-5,0 | m | - | H13 | 0,9 |
| 5,8 | m | - | H12 | 0,5 |
| 6,7 | d | ³*J*(HH) = 7 | H1 | 1 |
| 7,8 | d | ³*J*(HH) = 7 | H2 | 1 |

¹³C{¹H}-NMR-spektroskopische Daten von [HDMAP][P(C₂F₅)₃F₂ODec] in CDCl₃

| δ, ppm | Multiplizität | *J* [Hz] | Zuordnung |
|---|---|---|---|
| 25,7; 28,9; | s | - | C6-C10 |
| 29,0; 29,3; | | | |
| 29,4 | | | |
| 32,8 | s | - | C5 |
| 33,8 | s | - | C11 |
| 40,0 | s | - | -N(CH₃)₂ |
| 63,2 | s | - | C4 |
| 107,0 | s | - | C1 |
| 114,1 | s | - | C13 |
| 138,5 | s | - | C2 |
| 139,3 | s | - | C12 |
| 157,4 | s | - | C3 |

### Beispiel 9. Darstellung von [BMMIM][P(C₂F₅)₃F₂OEt]

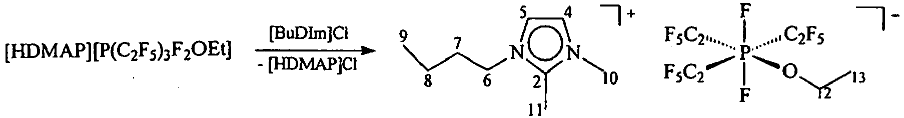

5,3 g (9 mmol) [HDMAP][P(C₂F₅)₃F₂OEt] werden in 50 ml Dichlormethan gelöst und mit 1,7 g (9 mmol) 1-Butyl-2,3-dimethylimidazoliumchlorid, gelöst in 5 ml Dichlormethan, versetzt. Das Reaktionsgemisch wird 1,5 Stunden bei Raumtemperatur gerührt und anschließend dreimal mit Wasser extrahiert. Flüchtige Bestandteile der organischen Phase werden im Vakuum entfernt. Es verbleibt eine farblose Flüssigkeit. Ausbeute (bezogen auf 1-Butyl-2,3-dimethylimidazoliumchlorid): 4,9 g (87 %).
Analytische Daten von [BuDlm][P(C₂F₅)₃F₂OEt]

| | |
|---|---|
| Glasübergang [°C] | -57 |
| Zersetzung [°C] | 120 |
| H₂O-Gehalt [ppm] | 13,1 |
| Cl⁻-Gehalt [ppm] | 87,5 |
| F⁻-Gehalt [ppm] | 1202 |

³¹P-NMR-spektroskopische Daten von [BuDlm][P(C₂F₅)₃F₂OEt] in CD₃CN

| δ, ppm | Multiplizität | *J* [Hz] | Zuordnung |
|---|---|---|---|
| -149,5 | t, sept | ¹*J*(PF) = 866 | [P(C₂F₅)₃F₂OEt]⁻ |
| | | ²*J*(PF) = 84 | |

¹⁹F-NMR-spektroskopische Daten von [BuDlm][P(C₂F₅)₃F₂OEt] in CD₃CN

| *δ*, ppm | Multiplizität | *J* [Hz] | Zuordnung | Integral |
|---|---|---|---|---|
| -80,1 | m | - | *trans*-CF₃ | 3 |
| -81,3 | m | - | *cis*-CF₃ | 6 |
| -93,9 | d, m | ¹*J*(PF) = 870 | PF | 2 |
| -113,3 | d, m | ²*J*(PF) = 84 | *trans*-CF₂ | 2 |
| -116,9 | d, m | ²*J*(PF) = 86 | *cis*-CF₂ | 4 |

¹H-NMR-spektroskopische Daten von [BuDlm][P(C₂F₅)₃F₂OEt] in CD₃CN

| *δ*, ppm | Multiplizität | *J* [Hz] | Zuordnung | Integral |
|---|---|---|---|---|
| 0,9 | t | ³*J*(HH) = 7 | H9/H13 | 3 |
| 1,0 | t | ³*J*(HH) = 7 | H13/H9 | 3 |
| 1,3 | sext | ³*J*(HH) = 8 | H8 | 2 |
| 1,7 | quin | ³*J*(HH) = 7 | H7 | 2 |
| 2,5 | s | - | H11 | 3 |
| 3,7 | s | - | H10 | 3 |
| 3,9 | m | - | H6, H12 | 4 |
| 7,2 | m | - | H4, H5 | 2 |

¹³C{¹H}-NMR-spektroskopische Daten von [BuDlm][P(C₂F₅)₃F₂OEt] in CD₃CN

| *δ*, ppm | Multiplizität | *J* [Hz] | Zuordnung |
|---|---|---|---|
| 9,0 | s | - | C11 |
| 12,7 | s | - | C9 |
| 16,0 | s | - | C13 |
| 19,1 | s | - | C8 |
| 31,2 | s | - | C7 |
| 34,7 | s | - | C10 |
| 48,0 | s | - | C6 |
| 61,8 | s | - | C12 |
| 120,8 | s | - | C4/5 |
| 122,2 | s | - | C4/5 |
| 144,3 | s | - | C2 |

### Beispiel 10. Darstellung von [BMMIM][P(C₂F₅)₃F₂OCH₂CF₃]

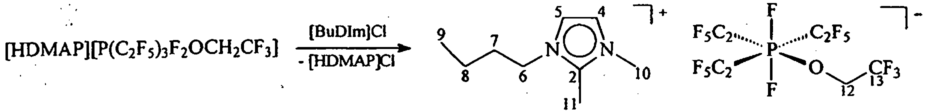

4,7 g (7,3 mmol) [HDMAP][P(C₂F₅)₃F₂OCH₂CF₃] werden in 50 ml Dichlormethan gelöst und mit 1,4 g (7,4 mmol) 1-Butyl-2,3-dimethylimidazoliumchlorid, gelöst in 3 ml Dichlormethan, versetzt. Das Reaktionsgemisch wird 1 Stunde bei Raumtemperatur gerührt und anschließend dreimal mit Wasser extrahiert. Flüchtige Bestandteile der organischen Phase werden im Vakuum entfernt. Es verbleibt eine farblose Flüssigkeit. Ausbeute (bezogen auf 1-Butyl-2,3-dimethylimidazoliumchlorid): 4,5 g (91 %)

**Tabelle: Analytische Daten von [BuDlm][P(C₂F₅)₃F₂OCH₂CF₃]**

| | |
|---|---|
| Glasübergang [°C] | -58 |
| Zersetzung [°C] | 212 |
| H₂O-Gehalt [ppm] | 24,4 |
| Cl⁻-Gehalt [ppm] | <5 |
| F⁻-Gehalt [ppm] | 74 |

³¹F-NMR-spektroskopische Daten von [BuDlm][P(C₂F₅)₃F₂OCH₂CF₃] in CD₃CN

| δ, ppm | Multiplizität | *J* [Hz] | Zuordnung |
|---|---|---|---|
| -149,9 | t, sept | ¹*J*(PF) = 885 | [**P**(C₂F₅)₃F₂OCH₂CF₃]⁻ |
| | | ²*J*(PF) = 85 | |

¹⁹F-NMR-spektroskopische Daten von [BuDlm][P(C₂F₅)₃F₂OCH₂CF₃] in CD₃CN

| *δ*, ppm | Multiplizität | *J* [Hz] | Zuordnung | Integral |
|---|---|---|---|---|
| -75,9 | s | - | -OCH₂C**F**₃ | 3 |
| -80,3 | m | - | *trans*-C**F**₃ | 3 |
| -81,7 | m | - | *cis*-C**F**₃ | 6 |
| -94,5 | d, m | ¹*J*(PF) = 884 | P**F** | 2 |
| -113,4 | m | - | *cis*-, *trans*-C**F**₂ | 6 |

¹H-NMR-spektroskopische Daten von [BuDlm][P(C₂F₅)₃F₂OCH₂CF₃] in CD₃CN

| *δ*, ppm | Multiplizität | *J* [Hz] | Zuordnung | Integral |
|---|---|---|---|---|
| 0,9 | t | ³*J*(HH) = 7 | H9 | 3 |
| 1,3 | sext | ³*J*(HH) = 8 | H8 | 2 |
| 1,7 | quin | ³*J*(HH) = 7 | H7 | 2 |
| 2,5 | s | - | H11 | 3 |
| 3,7 | s | - | H10 | 3 |
| 4,0 | t | ³*J*(HH) = 7 | H6 | 2 |
| 4,4 | m | - | H12 | 2 |
| 7,2 | m | - | H4, H5 | 2 |

¹³C{¹H}-NMR-spektroskopische Daten von [BuDlm][P(C₂F₅)₃F₂OCH₂CF₃] in CD₃CN

| *δ*, ppm | Multiplizität | *J* [Hz] | Zuordnung |
|---|---|---|---|
| 9,0 | s | - | C11 |
| 12,7 | s | - | C9 |
| 19,1 | s | - | C8 |
| 31,2 | s | - | C7 |
| 34,7 | s | - | C10 |
| 48,0 | s | - | C6 |
| 64,2 | m | - | C12 |
| 120,8 | s | - | C4/5 |
| 122,3 | s | - | C4/5 |
| 124,5 | m | - | C13 |
| 144,8 | s | - | C2 |

### Beispiel 11. Darstellung von [HDMAP](P(C₂F₅)₃F₂OC₂H₄OH]

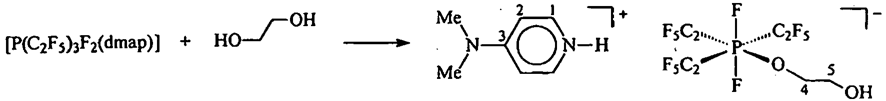

0,60 g (1,1 mmol) [P(C₂F₅)₃F₂(dmap)] werden in Diethylether vorgelegt. Bei Raumtemperatur werden 0,10 g (1,6 mmol) Ethylenglykol zugegeben und das Reaktionsgemisch 24 Stunden gerührt. Anschließend werden flüchtige Bestandteile im Vakuum entfernt. Es verbleibt ein farbloser Feststoff. Ausbeute (bezogen auf [P(C₂F₅)₃F₂(dmap)]): 0,61 g (89 %). Schmelzpunkt: 88 °C (Erweichen der Probe), 91 °C Zersetzung.
³¹P-NMR-spektroskopische Daten von [HDMAP][P(C₂F₅)₃F₂OC₂H₄OH]

| δ, ppm | Multiplizität | *J* [Hz] | Zuordnung |
|---|---|---|---|
| -149,2 | sept | ¹*J*(PF) = 871 | [**P**(C₂F₅)₃F₂OC₂H₄OH]⁻ |
| | | ²*J*(PF) = 86 | |

¹⁹F-NMR-spektroskopische Daten von [HDMAP][P(C₂F₅)₃F₂OC₂H₄OH]

| *δ*, ppm | Multiplizität | *J*[Hz] | Zuordnung | Integral |
|---|---|---|---|---|
| -79,3 | m | - | *trans*-C**F**₃ | 1 |
| -80,4 | m | - | *cis*-C**F**₃ | 1,8 |
| -93,2 | d, m | ¹*J*(PF) = 873 | P**F** | 0,3 |
| -112,6 | d, m | ²*J*(PF) = 83 | *trans*-, *cis*-C**F**₂ | 1,8 |

¹H-NMR-spektroskopische Daten von [HDMAP][P(C₂F₅)₃F₂OC₂H₄OH]

| *δ*, ppm | Multiplizität | *J*[Hz] | Zuordnung | Integral |
|---|---|---|---|---|
| 3,2 | s | - | N(CH₃)₂ | 3 |
| 3,5 | t | ³*J*(HH) = 4 | H5 | 0,8 |
| 4,0 | pseudo-quar | ³*J*(HH) = 4 | H4 | 0,6 |
| | | ³*J*(PH) = 4 | | |
| 6,8 | d | ³*J*(HH) = 8 | H1 | 1 |
| 8,0 | d | ³*J*(HH) = 8 | H2 | 1 |

¹³C-NMR-spektroskopische Daten von [HDMAP][P(C₂F₅)₃F₂OC₂H₄OH]

| δ, ppm | Multiplizität | *J* [Hz] | Zuordnung |
|---|---|---|---|
| 39,6^{a} | s | - | -N(CH₃)₂ |
| 62,1^{a} | d | ²*J*(PC) = 9 | C4 |
| 67,8^{a} | s | - | C5 |
| 106,8^{a} | s | - | C1 |
| 116,7^{b} | m | - | -CF₂CF₃ |
| 120,6^{b} | m | - | -CF₂CF₃ |
| 138,6^{a} | s | - | C2 |
| 157,6^{a} | s | - | C3 |

| | | | |
|---|---|---|---|
| ^{a}{1H} ^{b}{¹⁹F} | | | |

Elementaranalytische Daten von [HDMAP][P(C₂F₅)₃F₂OC₂H₄OH]

| | N | C | H |
|---|---|---|---|
| berechnet | 4,59 | 29,52 | 2,64 |
| experimentell | 4,62 | 29,54 | 2,28 |

### Beispiel 12. Darstellung von [P(C₂F₅)₃F₂(dmf)]

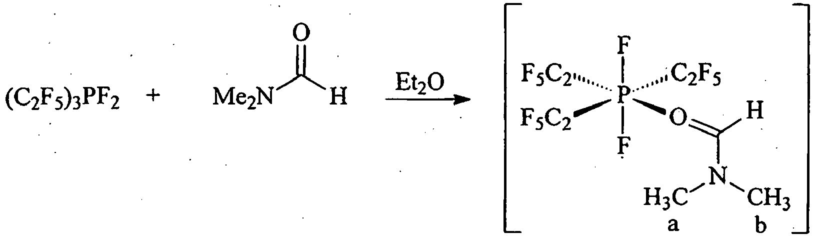

0,12 g (1,7 mmol) DMF werden in ca. 15 ml Diethylether vorgelegt und mit 1,02 g (2,4 mmol) (C₂F₅)₃PF₂ versetzt. Das Reaktionsgemisch wird 45 Minuten bei Raumtemperatur gerührt. Anschließend werden das Lösungsmittel und überschüssiges (C₂F₅)₃PF₂ im Vakuum entfernt. Es verbleibt ein farbloser Feststoff. Ausbeute (bezogen auf DMF): 0,84 g (99 %).
³¹P-NMR-spektroskopische Daten von [P(C₂F₅)₃F₂(dmf)] in DMF

| δ, ppm | Multiplizität | *J* [Hz] | Zuordnung |
|---|---|---|---|
| -142,1 | t, t, quin | ¹*J*(PF) = 960 | [**P**(C₂F₅)₃F₂(dmf)] |
| | | ²*J*(PF*ₜᵣₐₙₛ*) = 87 | |
| | | ²*J*(PF*_{cis}*) = 103 | |

¹⁹F-NMR-spektroskopische Daten von [P(C₂F₅)₃F₂(dmf)] in DMF

| δ, ppm | Multiplizität | *J* [Hz] | Zuordnung | Integral |
|---|---|---|---|---|
| -81,4 | m | - | *trans*-C**F**₃ | 1 |
| -82,4 | m | - | *cis*-C**F**₃ | 2 |
| -92,6 | d, m (br) | ¹*J*(PF) = 947 | P**F** | 0, 3 |
| -113,8 | m (br) | - | *cis*-C**F**₂ | 1 |
| -116,4 | d | ²*J*(PF) = 88 | *trans*-C**F**₂ | 0, 6 |

¹H-NMR-spektroskopische Daten von [P(C₂F₅)₃F₂(dmf)] in DMF

| δ, ppm | Multiplizität | *J* [Hz] | Zuordnung | Integral |
|---|---|---|---|---|
| 2,7 | s | - | C**H**₃ (a) | 1 |
| 3,1 | s | - | C**H**₃ (b) | 0,9 |
| 8,4 | s | - | [P(C₂F₅)₃F₂(OC**H**NMe₂)] | 0,3 |

¹³C-NMR-spektroskopische Daten von [P(C₂F₅)₃F₂(dmf)] in DMF

| δ, ppm | Multiplizität | *J* [Hz] | Zuordnung |
|---|---|---|---|
| 34,6^{a} | (verdeckt) | - | **C**H₃ (a) |
| 39,8^{a} | quar | ¹*J*(CH) = 143 | **C**H₃ (b) |
| 117,0^{b} | d, m | ¹*J*(CP) = 249 | -**C**F₂CF₃ |
| 119,0^{b} | d, m | ²*J*(CP) = 30 | -**C**F₂CF₃ |
| 163,2^{a} | d | ¹*J*(CH) = 218 | [P(C₂F₅)₃F₂(O**C**HNMe₂)] |

| | | | |
|---|---|---|---|
| ^{a} {¹H} ^{b} {¹⁹F} | | | |

### Beispiel 13. Umsetzung von [P(C₂F₅)₃F₂(dmF] mit H₂O

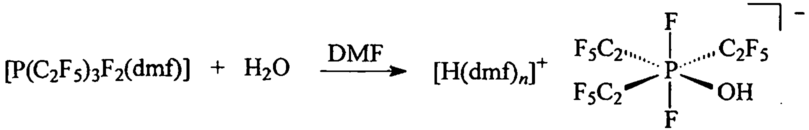

[P(C₂F₅)₃F₂(dmf)] wird in DMF mit wenigen Tropfen Wasser versetzt. Die Reaktionslösung wird NMR-spektroskopisch untersucht.
³¹P-NMR-spektroskopische Daten von [H(dmf)*ₙ*][P(C₂F₅)₃F₂OH] in Aceton-d₆

| δ, ppm | Multiplizität | *J* [Hz] | Zuordnung |
|---|---|---|---|
| -147,9 | t, sept | ¹*J*(PF) = 847 | [H(dmf)*ₙ*][P(C₂F₅)₃F₂OH] |
| | | ²*J*(PF) = 86 | |

¹⁹F-NMR-spektroskopische Daten von [H(dmf)*ₙ*][P(C₂F₅)₃F₂OH) in Aceton-d₆

| δ, ppm | Multiplizität | *J* [Hz] | Zuordnung | Integral |
|---|---|---|---|---|
| -80,5 | m | - | *trans*-C**F**₃ | 1 |
| -81,5 | m | - | *cis*-C**F**₃ | 1,9 |
| -87,0 | d, m | ¹*J*(PF) = 839 | P**F** | 0,6 |
| -114,5 | d | ²*J*(PF) = 85 | *cis*-, *trans*-C**F**₂ | 1,9 |

¹H-NMR-spektroskopische Daten von [H(dmf)*ₙ*](P(C₂F₅)₃F₂OH] in Aceton-d₆

| δ, ppm | Multiplizität | *J* [Hz] | Zuordnung | Integral |
|---|---|---|---|---|
| 2,7 | s | - | C**H**₃ (a) | 1,1 |
| 3,0 | s | - | C**H**₃ (b) | 1 |
| 8,8 | s | - | [H(OHCNMe₂)*ₙ*] | - |

### Beispiel 14. Umsetzung von (P(C₂F₅)₃F₂(dmf)] mit EtOH

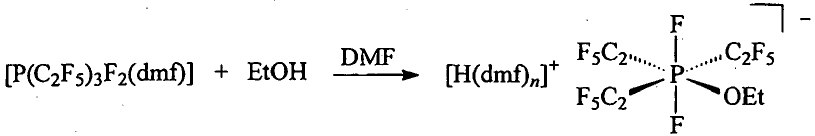

[P(C₂F₅)₃F₂(dmf)] wird in DMF mit wenigen Tropfen Ethanol versetzt. Die Reaktionslösung wird NMR-spektroskopisch untersucht.
³¹P-NMR-spektroskopische Daten von [H(dmf)*ₙ*][P(C₂F₅)₃F₂OEt] in DMF

| δ, ppm | Multiplizität | *J* [Hz] | Zuordnung |
|---|---|---|---|
| -148,6 | t, pseudo-sept | ¹*J*(PF) = 871 | [H(dmf)*ₙ*][**P**(C₂F₅)₃F₂OEt] |

¹⁹F-NMR-spektroskopische Daten von [H(dmf)*ₙ*][P(C₂F₅)₃F₂OEt] in DMF

| δ, ppm | Multiplizität | *J* [Hz] | Zuordnung | Integral |
|---|---|---|---|---|
| -79,2 | m | - | *trans*-C**F**₃ | 1 |
| -80,5 | m | - | *cis*-C**F**₃ | 1,9 |
| -93,1 | d, m | ¹*J*(PF) = 871 | P**F** | 0,6 |
| -112,3 | d, m | ²*J*(PF) = 83 | *trans*-C**F**₂ | - |
| -113,1 | d, m | ²*J*(PF) = 86 | *cis*-C**F**₂ | - |

### Beispiel 15. Umsetzung von (C₄F₉)₃PF₂ mit DMF

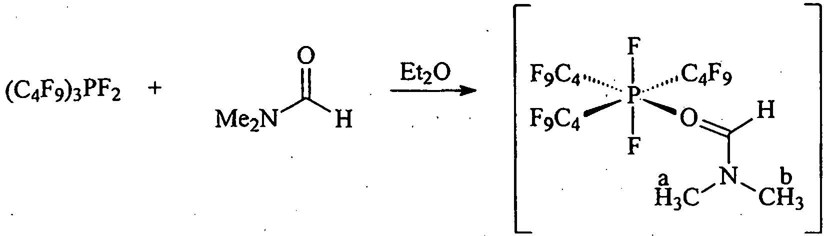

Überschüssiges DMF wird mit (C₄F₉)₃PF₂ versetzt. Die Reaktionslösung wird NMR-spektroskopisch untersucht.
³¹P-NMR-spektroskopische Daten von [P(C₄F₉)₃F₂(dmf)] in DMF

| *δ*, ppm | Multiplizität | *J* [Hz] | Zuordnung |
|---|---|---|---|
| -135,5 | t, m | ¹*J*(PF) = 999 | [**P**(C₄F₉)₃F₂(dmf)] |
| | | ²*J*(PF) = 102 | |

¹⁹F-NMR-spektroskopische Daten von [P(C₄F₉)₃F₂(dmf)] in DMF ^{a}

| *δ*, ppm | Multiplizität | *J* [Hz] | Zuordnung | Integral |
|---|---|---|---|---|
| -82,1 | s | - | C**F**₃ | - |
| -108,1 | m | - | C**F**₂ | - |
| -126,2 | | | | |

| | | | | |
|---|---|---|---|---|
| ^{a} Die Resonanz der an das Phosphoratom gebundenen Fluoratome wird von anderen Resonanzen überlagert. | | | | |

¹H-NMR-spektroskopische Daten von [P(C₄F₉)₃F₂(dmf)] in DMF

| *δ*, ppm | Multiplizität | *J* [Hz] | Zuordnung | Integral |
|---|---|---|---|---|
| 2,7 | s | - | C**H**₃ (a) | 0,9 |
| 3,1 | s | - | C**H**₃ (b) | 1 |
| 8,4 | s | - | [P(C₄F₉)₃F₂(OC**H**NMe₂)] | 0,3 |

### Beispiel 16. Umsetzung von [P(C₄F₉)₃F₂(dmf)] mit EtOH

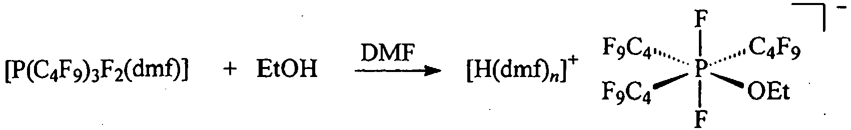

[P(C₄F₉)₃F₂(dmf)] wird in DMF mit wenigen Tropfen Ethanol versetzt. Das Reaktionsgemisch wird NMR-spektroskopisch untersucht.
³¹P-NMR-spektroskopische Daten von [H(dmf)*ₙ*][P(C₄F₉)₃F₂OEt] in DMF

| *δ*, ppm | Multiplizität | *J* [Hz] | Zuordnung |
|---|---|---|---|
| -143,3 | t, m | ¹*J*(PF) = 903 | [H(dmf)*n*][**P**(C₄F₉)₃F₂OEt] |
| | | ²*J*(PF) = 88 | |

¹⁹F-NMR-spektroskopische Daten von H[P(C₄F₉)₃F₂OEt) · *n*DMF in DMF

| *δ*, ppm | Multiplizität | *J* [Hz] | Zuordnung | Integral |
|---|---|---|---|---|
| -82,3 | m | - | C**F**₃ | - |
| -92,3 | d, m | ¹*J*(PF) = 899 | P**F** | - |
| -109,6 | m | - | C**F**₂ | - |
| -127,6 | | | | |

### Beispiel 17. Darstellung von [P(C₂F₅)₂F₃(dmf)]

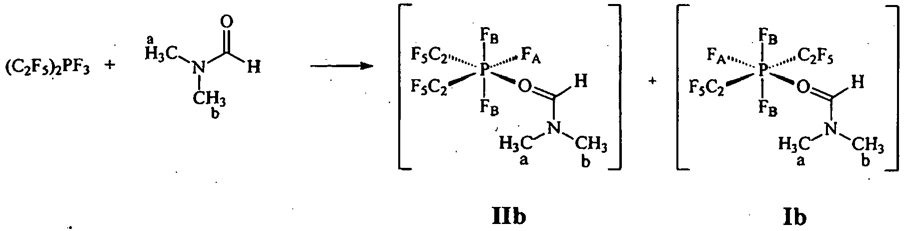

0,09 g (1,2 mmol) DMF werden in ca. 15 ml Diethylether vorgelegt und 1,5 mmol (C₂F₅)₂PF₃ aufkondensiert. Das Reaktionsgemisch wird NMR-spektroskopisch untersucht. Es bilden sich bei langsamem Auftauen zwei Konformere, **IIb** und **Ib. IIb** wandelt sich innerhalb weniger Stunden bei Raumtemperatur in **Ib** um. Nach 30-minütigem Rühren bei Raumtemperatur wird das Lösungsmittel im Vakuum entfernt. Es verbleibt ein farbloser Feststoff. Ausbeute (bezogen auf DMF): 0,47 g (97 %).
³¹P-NMR-spektroskopische Daten der beiden Konformere von [P(C₂F₅)₂F₃(dmf)] in DMF

| *δ*, ppm | Multiplizität | *J* [Hz] | Zuordnung |
|---|---|---|---|
| -146,6 | d, t, quin, d | ¹*J*(PF_{A}) = 847 | [**P**(C₂F₅)₂F₃(dmf)] (**IIb**) |
| | | ¹*J*(PF_{B}) = 922 | |
| | | ²*J*(PF) = 95 | |
| | | ³*J*(PH) = 7 | |
| -148,7 | d, t, quin | ¹*J*(PF_{A}) = 947 | [**P**(C₂F₅)₂F₃(dmf)] (**Ib**) |
| | | ¹*J*(PF_{B}) = 986 | |
| | | ²*J*(PF) = 108 | |

¹⁹F-NMR-spektroskopische Daten der beiden Konformere von [P(C₂F₅)₂F₃(dmf)] in DMF

| *δ*, ppm | Multiplizität | *J* [Hz] | Zuordnung | Integral |
|---|---|---|---|---|
| -58,7 | d, m | ¹*J*(PF_{A}) = 848 | **PF_{A} (IIb)** | 0,3 |
| -69,1 | d, m | ¹*J*(PF_{A}) = 948 | **PF_{A} (Ib)** | 0,8 |
| -74,9 | d, d, m | ¹*J*(PF_{B}) = 987 | **PF_{B} (Ib)** | 1,7 |
| | | ²*J*(F_{B}F_{A}) = 45 | | |
| -76,2 | d, d, m | ¹*J*(PF_{B}) = 922 | **PF_{B} (IIb)** | 0,7 |
| | | ²*J*(F_{B}F_{A}) = 46 | | |
| -82,7 | m | - | **CF₃ (IIb)** | 1,0 |
| -83,4 | m | - | **CF₃ (IIb)** / **CF₃ (Ib)** | 6,2 |
| -117,5 | d, m | ²*J*(PF) = 95 | **CF₂ (IIb)** | 0,6 |
| -118,7 | d, d, t, | ²*J*(PF) = 108 | **CF₂ (Ib)** | 3,4 |
| | m | ³*J*(FF_{A}) = 10 | | |
| | | ³*J*(FF_{B}) = 11 | | |
| -119,5 | d, m | ²*J*(PF) = 93 | CF₂ (**IIb**) | 0,6 |

¹H-NMR-spektroskopische Daten der beiden Konformere von [P(C₂F₅)₂F₃(dmf)] in DMF

| *δ*, ppm | Multiplizität | *J* [Hz] | Zuordnung | Integral |
|---|---|---|---|---|
| 2,1 | s | - | C**H**₃ (a) (**IIb**) | 0,3 |
| 2,1 | s | - | C**H**₃ (a) (**Ib**) | 1 |
| 2,4 | s | - | C**H**₃ (b) (**IIb**) | 0,2 |
| 2,5 | s | - | C**H**₃ (b) (**Ib**) | 1 |
| 7,8 | s | - | [P(C₂F₅)₂F₃(OC**H**NMe₂)] (**Ib**) | 0,3 |
| 10,5 | s (br) | - | [P(C₂F₅)₂F₃(OC**H**NMe₂)] (**IIb**) | - |

¹³C-NMR-spektroskopische Daten der beiden Konformere von [P(C₂F₅)₂F₃(dmf)] in DMF

| *δ*, ppm | Multiplizität | *J* [Hz] | Zuordnung |
|---|---|---|---|
| 35,0 ^{a} | (verdeckt) | - | CH₃ (a) (**Ib**) |
| 40,0 ^{a} | quar | ¹*J*(CH) = 144 | CH₃ (b) (**Ib**) |
| 115,5 ^{b} | d, m | ¹*J*(CP) = 329 | -**C**F₂CF₃ |
| 119,4 ^{b} | d, m | ²*J*(CP) = 32 | -CF₂**C**F₃ |
| 163,4 ^{a} | d, t | ¹*J*(CH) = 214 | [P(C₂F₅)₂F₃(O**C**HNMe₂)] (**Ib**) |

| | | | |
|---|---|---|---|
| ^{a} {¹H} ^{b} {¹⁹F} | | | |

### Beispiel 18. Umsetzung von [P(C₂F₅)₂F₃(dmf)] mit H₂O

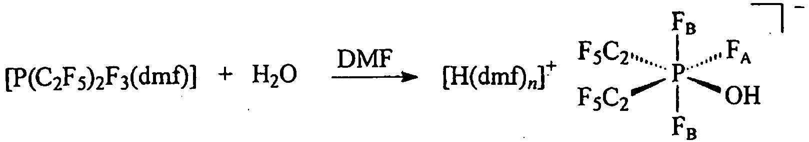

Auf eine Lösung von [P(C₂F₅)₂F₃(dmf)] (**Ib**) in DMF wird bei -196 °C Wasser kondensiert. Das Reaktionsgemisch wird auf Raumtemperatur erwärmt und NMR-spektroskopisch untersucht.
³¹P-NMR-spektroskopische Daten von [H(dmf)*ₙ*][P(C₂F₅)₂F₃OH] in DMF

| *δ*, ppm | Multiplizität | *J* [Hz] | Zuordnung |
|---|---|---|---|
| -154,4 | d, t, quin | ¹*J*(PF_{A}) = 910 | [H(dmf)*ₙ*][P(C₂F₅)₂F₃OH] |
| | | ¹*J*(PF_{B}) = 926 | |
| | | ²*J*(PF) = 108 | |

¹⁹F-NMR-spektroskopische Daten von [H(dmf)*ₙ*][P(C₂F₅)₂F₃OH] in DMF

| *δ*, ppm | Multiplizität | *J* [Hz] | Zuordnung | Integral |
|---|---|---|---|---|
| -63,2 | d, m | ¹*J*(PF) = 910 | P**F**_{A} | 0,6 |
| -76,0 | d, d, m | ¹*J*(PF) = 926 | P**F**_{B} | 2 |
| | | ²*J*(FF) = 46 | | |
| -83,4 | d, t | ³*J*(PF) = 11 | C**F**₃ | 6 |
| | | ³*J*(FF) = 7 | | |
| -118,9 | d, quar | ²*J*(PF) = 103 | C**F**₂ | 4 |
| | | ³*J*(FF) = 10 | | |

### Beispiel 19. Umsetzung von [P(C₂F₅)₂F₃(dmf)] mit EtOH

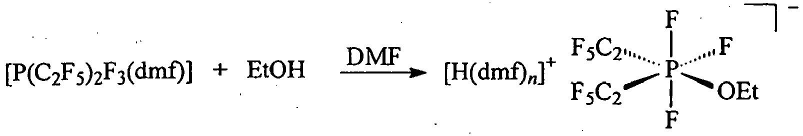

Auf eine Lösung von [P(C₂F₅)₂F₃(dmf)] (**Ib**) in DMF wird bei -196 °C Ethanol kondensiert. Das Reaktionsgemisch wird auf Raumtemperatur erwärmt und NMR-spektroskopisch untersucht.
³¹P-NMR-spektroskopische Daten von [H(dmf)*ₙ*][P(C₂F₅)₂F₃OEt] in DMF

| *δ*, ppm | Multiplizität | *J* [Hz] | Zuordnung |
|---|---|---|---|
| -152,6 | d, t, quin | ¹*J*(PF_{A}) = 860 | [H(dmf)*ₙ*][**P**(C₂F₅)₂F₃OEt ] |
| | | ¹*J*(PF_{B}) = 876 | |
| | | ²*J*(PF) = 94 | |

¹⁹F-NMR-spektroskopische Daten von [H(dmf)*ₙ*][P(C₂F₅)₂F₃OEt] in DMF

| *δ*, ppm | Multiplizität | *J*[Hz] | Zuordnung | Integral |
|---|---|---|---|---|
| -57,2 | d, m | ¹*J*(PF) = 860 | P**F**_{A} | 1 |
| -78,5 | d, d, m | ¹*J*(PF) = 876 | P**F**_{B} | 2,5 |
| | | ²*J*(FF) = 47 | | |
| -83,5 | d, t | ³*J*(PF) = 13 | C**F**₃ | 8 |
| | | ³*J*(FF) = 7 | | |
| -119,3 | d, d, t | ²*J*(PF) = 94 | C**F**₂ | 5 |
| | | ³*J*(FF_{A}) = 16 | | |
| | | ³*J*(FF_{B}) = 8 | | |

### Beispiel 20: Umsetzung von (C₂F₅)₃PF₂ · DMAP mit 2-[2-(Aminoethyl)-amino]ethanol

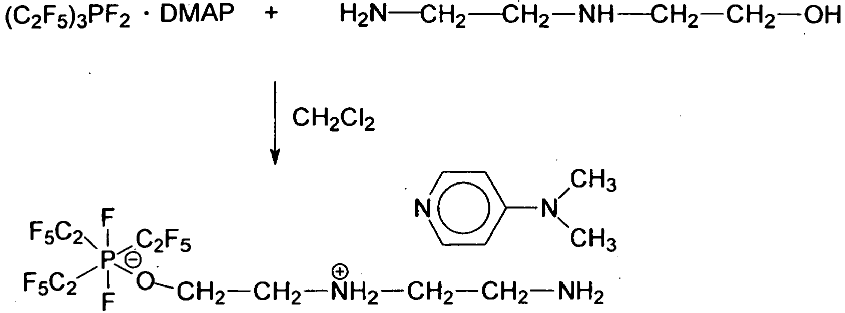

### Versuchsdurchführung:

In einem 100 mL-Schlenkkolben werden unter Schutzgas 6.50 g (11.86 mmol) (C₂F₅)₃PF₂ · DMAP in 80 mL Dichlormethan vorgelegt und die Lösung bei 0 °C tropfenweise mit 1.23 g (11.86 mmol) 2-[2-(Aminoethyl)-amino]ethanol versetzt. Nach der Zugabe wird das Eisbad entfernt und über Nacht bei RT gerührt. Am nächsten Morgen werden ¹⁹F- und ³¹P-NMR-Reaktionskontrollen aufgenommen.
Die Reaktionslösung wird nun im Vakuum vom CH₂Cl₂ und allen flüchtigen Bestandteilen befreit. Zurück bleibt ein leicht gelbes Pulver.
Rohausbeute: 7.71 g (91.7 % d. Th.)

Wird die Reaktion statt in CH₂Cl₂ in DMF durchgeführt, bildet sich ein anderes Isomer, bei dem die beiden F-Atome am Phosphor unterschiedlich sind.
NMR-Daten: in CD₂Cl₂

| **Kern** | **δ (ppm)** | **Aufspaltung** | **Kopplung** | **Zuordnung** |
|---|---|---|---|---|
| ³¹P | -148.9 | t, sept | ¹J_{PF} = 879 | -***P***F₂(C₂F₅)₃ |
| | | | ²J_{PF} = 87 | |
| ¹⁹F | -94.6 | d | ¹J_{PF} = 879 | -P***F***₂(CF₂CF₃)₃ |
| | -81.2 | m | | -PF₂(CF₂C***F***₃)₃ (6F) |
| | -80.0 | m | | |
| | -113.4 | m | | -PF₂(CF₂C***F***₃)₃ (3F) |
| | -113.7 | m | | |
| | | | | -PF₂(C***F***₂CF₃)₃ (4F) |
| | | | | -PF₂(C***F***₂CF₃)₃ (2F) |
| ¹H | 8.02 | d | ³J_{HH} = 7.0 | DMAP (2H) |
| | 6.67 | d | ³J_{HH} = 7.0 | DMAP (2H) |
| | 5.61 | s, br | | 4H |
| | 4.19 | m | | 2H |
| | 3.13 | s | | DMAP (6H) |
| | 2.89 | m | | 6H |
| ¹³C | 155.9 | s | | DMAP |
| | 144.1 | s | | DMAP |
| | 106.8 | s | | DMAP |
| | 63.2 | m | | -O-*C*H₂- |
| | 48.9 | d | ³J_{CP} = 8.7 | -O-CH₂-*C*H₂-N- |
| | 48.1 | s | | |
| | | | | H₂N-(*C*H₂)₂-N- |
| | 39.2 | s | | DMAP |
| | 38.2 | s | | H₂N-(***C***H₂)₂-N- |

### Beispiel 21: Umsetzung von (C₂F₅)₃PF₂ · DMAP mit 6-Hydroxyhexansäureethylester

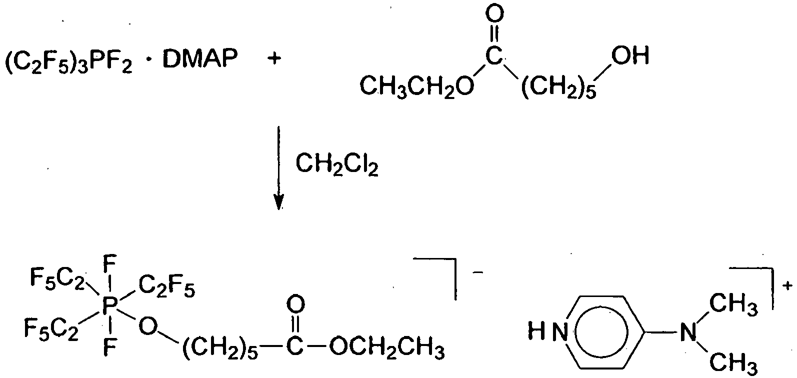

### Versuchsdurchführung:

In einem 100 mL-Schlenkkolben werden unter Schutzgas 3.30 g (6.02 mmol) (C₂F₅)₃PF₂ · DMAP in 40 mL Dichlormethan vorgelegt und die Lösung bei 0 °C tropfenweise mit 0.96 g (6.02 mmol) 6-Hydroxyhexansäureethylester versetzt. Nach der Zugabe wird das Eisbad entfernt und über Nacht bei RT gerührt. Am nächsten Morgen werden ¹⁹F-und ³¹P-NMR-Reaktionskontrollen aufgenommen.
Die Reaktionslösung wird im Vakuum vom CH₂Cl₂ und allen flüchtigen Bestandteilen befreit. Zurück bleibt ein oranges Öl.
Rohausbeute: 4.2 g (98.6 % d. Th.
NMR-Daten: in CD₂Cl₂

| **Kern** | **δ (ppm)** | **Aufspaltung** | **Kopplung** | **Zuordnung** |
|---|---|---|---|---|
| ³¹P | -147.9 | t, sept | ¹J_{PF} = 870 | -***P***F₂(C₂F₅)₃ |
| | | | ²J_{PF} = 89 | |
| ¹⁹F | -94.4 | d | ¹J_{PF} = 870 | -P***F***₂(CF₂CF₃)₃ |
| | -80.9 | m | | -PF₂(CF₂C***F***₃)₃ (6F) |
| | 79.8 | m | | -PF₂(CF₂C***F***₃)₃ (3F) |
| | -113.0 | m | | -PF₂(C***F***₂CF₃)₃ (4F) |
| | -113.3 | m | | -PF₂(C***F***₂CF₃)₃(2F) |
| ¹H | 7.92 | d | ³J_{HH} = 7.0 | DMAP (2H) |
| | 6.80 | d | ³J_{HH} = 7.0 | DMAP (2H) |
| | 4.13 | q | | -O-C***H***₂CH₃ (2H) |
| | 3.99 | q | | -O-(C***H***₂)₄-CH₂-(2H) |
| | 3.26 | s | | |
| | 2.32 | t | ³J_{HH} = 7.4 | DMAP (6H) |
| | 1.62 | m | | -O-(CH₂)₄-C***H***₂-C(O)- (2H) |
| | 1.53 | m | | |
| | 1.32 | m | | -O-(C***H***₂)₄-CH₂-(2H) |
| | 1.27 | t | ³J_{HH} = 7.0 | -O-(C***H***₂)₄-CH₂-(2H) |
| | | | | -O-(C***H***₂)₄-CH₂-(2H) |
| | | | | -O-CH₂-C***H***₃ (3H) |
| ¹³C | 174.8 | s | | -C(O)- |
| | 157.5 | s | | DMAP |
| | 138.4 | s | | DMAP |
| | 107.1 | s | | DMAP |
| | 66.8 | m | | -O-***C***H₂-(CH₂)₄--O-***C***H₂CH₃ |
| | 60.5 | s | | |
| | 40.0 | s | | DMAP |
| | 34.3 | s | | -O-CH₂-CH₂-(***C***H₂)₃- |
| | 30.7 | d | ³J_{PC} = 8.1 | |
| | 25.2 | s | | -O-CH₂-***C***H₂-(CH₂)₃- |
| | 24.7 | s | | |
| | 13.8 | s | | -O-CH₂-CH₂-(***C***H₂)₃- |
| | | | | -O-CH₂-CH₂-(***C***H₂)₃- |
| | | | | -O-CH₂-***C***H₃ |

### Beispiel 22: (C₂F₅)₃PF₂ · DMAP mit Ethanolamin

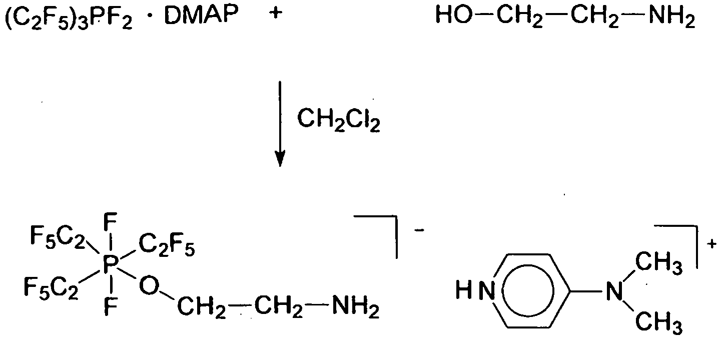

In einem 100 mL-Schlenkkolben werden unter Schutzgas 4.27 g (7.79 mmol) (C₂F₅)₃PF₂ · DMAP in 60 mL Dichlormethan vorgelegt und die Lösung bei 0 °C tropfenweise mit 0.48 g (7.79 mmol) Ethanolamin versetzt. Nach der Zugabe wird das Eisbad entfernt und über Nacht bei RT gerührt. Am nächsten Morgen werden ¹⁹F- und ³¹P-NMR-Reaktionskontrollen aufgenommen.
Die Reaktionslösung wird nun im Vakuum vom CH₂Cl₂ und allen flüchtigen Bestandteilen befreit. Zurück bleibt ein leicht gelbes Pulver.
Rohausbeute: 4.55 g (95.8 % d. Th.)
NMR-Daten: in CD₂Cl₂

| **Kern** | **δ (ppm)** | **Aufspaltung** | **Kopplung** | **Zuordnung** |
|---|---|---|---|---|
| 31p | -148.4 | t, sept | ¹J_{PF} = 875 | -***P***F₂(C₂F₅)₃ |
| | | | ²J_{PF} = 87 | |
| ¹⁹F | -94.7 | d | ¹J_{PF} = 875 | -P***F***₂(CF₂CF₃)₃ |
| | -81.3 | m | | -PF2(CF₂C***F***₃)₃ (6F) |
| | -80.0 | m | | -PF₂(CF₂C***F***₃)₃ (3F) |
| | -113.3 | m | | -PF₂(C***F***₂CF₃)₃ (4F) |
| | -113.5 | m | | -PF₂(C***F***₂CF₃)₃ (2F) |
| ¹H | 8.00 | d | ³J_{HH} =5.2 | DMAP (2H) |
| | 7.73 | s, br | | -NH₂ (2H) |
| | 6.73 | d | ³J_{HH} = 5.2 | DMAP (2H) |
| | 4.15 | m | | -O-(C***H***₂)-NH₂(2H) |
| | 3.19 | s | | DMAP (6H) |
| | 2.94 | m | | -O-(C***H***₂)-NH₂(2H) |
| ¹³C | 156.7 | s | | DMAP |
| | 141.4 | s | | DMAP |
| | 106.9 | s | | DMAP |
| | 65.2 | m | | -O-CH₂-CH₂-NH₂ |
| | 41.8 | d | ³J_{CP} = 8.7 | -O-CH₂-CH₂-NH₂ |
| | 39.6 | s | | DMAP |

### Bemerkung:

Wird die Reaktion statt in CH₂Cl₂ in DMF durchgeführt, bildet sich ein anderes Isomer, bei dem die beiden F-Atome am Phosphor unterschiedlich sind.

### Beispiel 23: Umsetzung von (C₂F₅)₃PF₂ · DMAP mit 2-Methoxyethanol

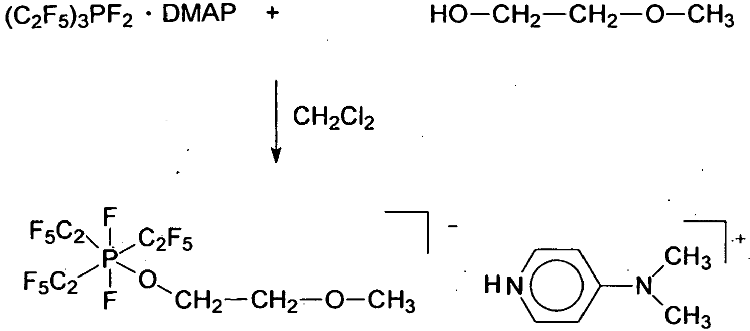

In einem 100 mL-Schlenkkolben werden unter Schutzgas 3.86 g (7.04 mmol) (C₂F₅)₃PF₂ · DMAP in 60 mL Dichlormethan vorgelegt und die Lösung bei 0 °C tropfenweise mit 0.54 g (7.04 mmol) 2-Methoxyethanol versetzt. Nach der Zugabe wird das Eisbad entfernt und über Nacht bei RT gerührt. Am nächsten Morgen werden ¹⁹F- und ³¹P-NMR-Reaktionskontrollen aufgenommen.
Die Reaktionslösung wird nun im Vakuum vom CH₂Cl₂ und allen flüchtigen Bestandteilen befreit. Zurück bleibt ein leicht gelbes Pulver.
Rohausbeute: 4.38 g (99.8 % d. Th.)
NMR-Daten: in CD₂Cl₂

| **Kern** | **δ (ppm)** | **Aufspaltung** | **Kopplung** | **Zuordnung** |
|---|---|---|---|---|
| ³¹P | -147.8 | t, sept | ¹J_{PF} = 878 | -***P***F₂(C₂F₅)₃ |
| | | | ²J_{PF} = 89 | |
| ¹⁹F | -94.8 | d | ¹J_{PF} = 878 | -P***F***₂(CF₂CF₃)₃ |
| | -81.0 | m | | -PF₂(CF₂C***F***₃)₃ (6F) |
| | -79.9 | m | | -PF₂(CF₂C***F***₃)₃ (3F) |
| | -113.2 | m | | -PF₂(C***F***₂CF₃)₃ (4F) |
| | -113.5 | m | | -PF₂(C***F***₂CF₃)₃ (2F) |
| ¹H | 8.03 | d | ³J_{HH} = 6.3 | DMAP (2H) |
| | 6.75 | d | ³J_{HH} = 6.3 | DMAP (2H) |
| | 4.27 | m | | -O-(C***H***₂)₂-O-CH₃(2H) |
| | 3.62 | m | | |
| | 3.32 | s | | -O-(C***H***₂)₂-O-CH₃(2H) |
| | 3.24 | s | | -O-C***H***₃ |
| | | | | DMAP (6H) |
| ¹³C | 157.3 | s | | DMAP |
| | 139.3 | s | | DMAP |
| | 106.6 | s | | DMAP |
| | 73.5 | d | ³J_{CP} = 7.9 | -O-CH₂-***C***H₂-O-CH₃ |
| | 65.6 | m | | |
| | 57.6 | s | | -O-***C***H₂-CH₂-O-CH₃ |
| | 40.1 | s | | -O-***C***H₃ DMAP |

### Beispiel 24: Mg[(C₂F₅)₃PF₂(OH)]₂

4.48 g (10.5 mmol) Tris(pentafluorethyl)difluorphosphoran werden in 20 ml Et₂O gelöst und auf -60 °C gekühlt. Anschließend wird auf einmal eine Suspension aus 0.24 g (6.0 mmol) Magnesiumoxid in 18 ml Wasser zugegeben, das Gemisch auf 0°C erwärmt, die Et₂O-Phase abgetrennt und mit 20 ml Eiswasser gewaschen. Die Et₂O-Lösung laut ¹⁹F-NMR-Untersuchungen setzt sich zusammen aus: 81 % Mg[(C₂F₅)₃PF₂(C)H)]₂, 12 % Magnesium Tris(pentafluorethyl)-trifluorphosphat (FAP) und 7 % Magnesium Bis(pentafluorethyl)phosphinat.

Die gesammelte wässrige Phase wird mit 10 ml Et₂O extrahiert und die vereinigte Et₂O-Lösung wird im Vakuum trocken gezogen. Es werden 3.64 g eines hell-rosafarbenen Feststoffes erhalten.

### Beispiel 25: Na[(C₂F₅)₃PF₂(OH)]

4.26 g (10.0 mmol) Tris(pentafluorethyl)difluorphosphoran werden in 20 ml Et₂O gelöst und auf -60 °C gekühlt, anschließend werden tropfenweise 20.5 ml einer wässrigen 0.5 M Natriumhydroxid-Lösung zugegeben. Das Gemisch wird auf 0 °C erwärmt, die Et₂O-Phase abgetrennt und mit 20 ml Eiswasser gewaschen. Die gesammelte wässrige Phase wird mit 10 ml Et₂O extrahiert und die vereinigte Et₂O-Lösung wird im Vakuum trocken gezogen. Es werden 1.96 g eines weißen Feststoffes erhalten.
Laut ¹⁹F-NMR-spektroskopischen Untersuchungen der Reaktionslösung besteht die Et₂O-Phase fast ausschließlich (>95 %) aus Na[(C₂F₅)₃PF₂(OH)]. Nach Aufarbeitung und Trockenziehen der abgetrennten ätherischen Phase setzt sich der erhaltene Feststoff laut ¹⁹F-NMR zu 55 % aus Na[(C₂F₅)₃PF₂(OH)], 30 % Natrium Tris(pentafluorethyl)trifluorphosphat (FAP) und 15 % Natrium Bis(pentafluorethyl)phosphinat zusammen.
NMR-Daten (Lösungsmittel: CD₃CN; Referenz Substanz: ¹H, TMS; ¹⁹F, CCl₃F; ³¹P, 85% H₃PO₄):
Natrium Tris(pentafluorethyl)difluorhydroxy-phosphat:
¹H, δ, ppm = 4.83 t (1H), ³*J*_{H,F} = 14 Hz;
¹⁹F, δ, ppm = -81.3 s (3F, CF₃); -82.3 s (6F, 2CF₃); -87.5 d,m (2F, PF₂), ¹*J*_{P,F} = 842 Hz; -114.8 d,m (6F, 3CF₂), ²J_{P,F} = 86 Hz;
³¹P, δ, ppm = -147.3 t, sept; ¹J_{P,F} = 842 Hz, ²J_{P,F} = 86 Hz.

### Beispiel 26: K[(C₂F₅)₃PF₂(OH)]

4.58 g (10.8 mmol) Tris(pentafluorethyl)difluorphosphoran werden in 20 ml Et₂O gelöst und auf -60 °C gekühlt. Anschließend werden tropfenweise 22 ml einer wässrigen 0.5 M Kaliumhydroxid-Lösung zugegeben. Das Gemisch wird auf 0 °C erwärmt, die Et₂O-Phase abgetrennt und mit 20 ml Eiswasser gewaschen. Die gesammelte wässrige Phase wird mit 10 ml Et₂O extrahiert und die vereinigte Et₂O-Lösung wird im Vakuum trocken gezogen. Es werden 3.59 g eines weißen Feststoffes erhalten. Der erhaltene Feststoff setzt sich laut ¹⁹F-NMR zu 87 % aus K[(C₂F₅)₃PF₂(OH)], 10 % Kalium Tris(pentafluorethyl)trifluorphosphat (FAP) und 3 % Kalium Bis(pentafluorethyl)phosphinat zusammen.
NMR-Daten (Lösungsmittel: CD₃CN; Referenz Substanz: ¹H, TMS; ¹⁹F, CCl₃F; ³¹P, 85% H₃PO₄):
Kalium Tris(pentafluorethyl)difluorhydroxy-phosphat:
¹H, δ, ppm = 3.27 br.s (1H);
¹⁹F, δ, ppm = -80.7 m (3F, CF₃); -81.7 m (6F, CF₃); -87.0 d,m (2F, PF₂), ¹*J*_{P,F} = 842 Hz; -114,6 d,m (6F, 3CF₂), ²*J*_{P,F} = 85 Hz;
³¹P, δ, ppm = -147.2 t,sept, ¹*J*_{P,F} = 842 Hz, ²*J*_{P,F} = 85 Hz.

### Beispiel 27: Cs[(C₂F₅)₃PF₂(OH)]

4.30 g (10.1 mmol) Tris(pentafluorethyl)difluorphosphoran werden in 20 ml Et₂O gelöst und auf -60 °C gekühlt. Anschließend werden tropfenweise 26 ml einer wässrigen 0.5 M Caesiumhydroxid-Lösung zugegeben. Das Gemisch wird auf 0°C erwärmt, die Et₂O-Phase abgetrennt und mit 20 ml Eiswasser gewaschen. Die gesammelte wässrige Phase wird mit 10 ml Et₂O extrahiert und die vereinigte Et₂O-Lösung wird im Vakuum trocken gezogen. Es werden 4.18 g eines weißen Feststoffes erhalten. Der erhaltene Feststoff setzt sich laut ¹⁹F-NMR zu 94 % aus Cs[(C₂F₅)₃PF₂(OH)], 5 % Cäsium Tris(pentafluorethyl)trifluorphosphat (FAP) und 1 % Cäsium Bis(pentafluorethyl)phosphinat zusammen.
NMR-Daten (Lösungsmittel: CD₃CN; Referenz Substanz: ¹H, TMS; ¹⁹F, CCl₃F; ³¹P, 85% H₃PO₄):
Cäsium Tris(pentafluorethyl)difluorhydroxy-phosphat:
¹H, δ, ppm = 4.83 t (1H), ³*J*_{H,F} = 14 Hz;
¹⁹F, δ, ppm = -80.7 s (3F, CF₃); -81.7 s (6F, 2CF₃); -87.0 d,m (2F, PF₂), ¹*J*_{P,F} = 842 Hz; -114,6 d,m (6F, 3CF₂), ²*J*_{P,F} = 85 Hz;
³¹P, δ, ppm = -147.2 t,sept, ¹*J*_{P,F} = 842 Hz, ²*J*_{P,F} = 85 Hz.

### Beispiel 28: [(CH₃)₄N]⁺[(C₂F₅)₃PF₂OH]⁻

3.63 g (8.5 mmol) Tris(penfafluorethyl)difluorphosphoran werden auf -50 °C gekühlt und mit 3.13 g (8.6 mmol) einer wässrigen 25%-igen Lösung von Tetramethylammonium Hydroxid versetzt. Der weißen Niederschlag wurde abfiltriert und im Vakuum getrocknet. Es werden 3,4 g eines weißen Feststoffes erhalten. Der erhaltene Feststoff setzt sich laut ¹⁹F-NMR zu 74 % aus Hydroxy-komplex [(CH₃)₄N]⁺[(C₂F₅)₃PF₂OH]⁻, 4 % Tetramethylammonium Tris(pentafluor-ethyl)trifluorphosphat (FAP) und 22 % Tetramethylammonium Bis(pentafluorethyl)phosphinat zusammen.
NMR-Daten (Lösungsmittel: CD₃CN; Referenz Substanz: ¹H, TMS; ¹⁹F, CCl₃F; ³¹P, 85% H₃PO₄):
Tris(pentafluorethyl)difluorhydroxy-phosphat Tetramethylammonium Salz, Hydroxy-komplex:
¹H, δ, ppm = 3.07 s, (12H, 4CH₃); 4.92 t,d (1H), ³*J*_{H,F} = 14 Hz, ²*J*_{P,H} = 2 Hz.
¹⁹F, δ, ppm = -80.7 m (3F, CF₃); -81.8 m (6F, 2CF₃); -87.3 d,m (2F, PF₂), ¹*J*_{P,F} = 842 Hz; -114.7 d,m (6F, 3CF₂), ²*J*_{P,F} = 86 Hz.
³¹P, δ, ppm = -147.2 t,sept, ¹*J*_{P,F} = 842 Hz, ²*J*_{P,F} = 86 Hz.

### Beispiel 29: [(C₂H₅)₄N]⁺[(C₂F₅)₃PF₂OH]⁻ · 3H₂O

4.46 g (10.5 mmol) Tris(pentafluorethyl)difluorphosphoran werden in 20 ml Et₂O gelöst und auf -60 °C gekühlt. Anschließend werden tropfenweise 17.2 g (10.7 mmol) einer wässrigen Tetraethylammonium Hydroxid Lösung (ca. 0.6 M) zugegeben. Das Gemisch wird auf 0°C erwärmt und der ausfallende weiße Feststoff wird abfiltriert und an der Luft getrocknet. Es werden 5.66 g eines weißen Feststoffes erhalten, der laut ¹⁹F-NMR und ¹H-NMR Spektra zu 95% aus [(C₂H₅)₄N]⁺[(C₂F₅)PF₂OH]⁻ · 3H₂O besteht. Ausbeute ist 86%. Bei Trocknung des Feststoffs im Vakuum über Nacht, spaltet dieser Komplex Wasser und C₂F₅H ab und bildet [(C₂H₅)₄N]⁺[(C₂F₅)₂PF₂O]⁻.
NMR-Daten (Lösungsmittel: CD₃CN; Referenz Substanz: ¹H, ¹³C, TMS; ¹⁹F, CCl₃F; ³¹P, 85% H₃PO₄):
Tris(pentafluorethyl)difluorhydroxy-phosphat Tetraethylammonium Salz · 3H₂O, Hydroxy-komplex · 3H₂O:
¹H, δ, ppm = 1.20 t,t (12H, 4CH₃), ³*J*_{H,H} = 7 Hz, ³*J*_{H,14N} = 2 Hz; 2.22 s, (6H, 3H₂O); 3.14 q (8H, 4CH₂), ³*J*_{H,H} = 7 Hz; 4.86 t,d (1H), ³*J*_{H,F} = 14 Hz, ²*J*_{H,P} = 2 Hz.
¹³C{¹H}, δ, ppm = 115-128 m, (CF₂CF₃); 53.2 t, (4C, CH₂), ¹*J*_{14N,13C} = 3 Hz; 7.7 s, (4C, CH₃).
¹⁹F, δ, ppm = -80.7 m (3F, CF₃); -81.8 m (6F, 2CF₃); -87.4 d,m (2F, PF₂), ¹*J*_{P,F} = 842 Hz; -114.8 d,m (6F, 3CF₂), ²*J*_{P,F} = 86 Hz.
³¹P, δ, ppm = -147.3 t,sept, ¹*J*_{P,F} = 842 Hz, ²*J*_{P,F} = 86 Hz.

### Beispiel 30: [(C₄H₉)₄H]⁺[(C₂F₅)₃PF₂OCH₂]⁻.

4.20 g (9,9 mmol) Tris(pentafluorethyl)difluorphosphoran werden auf-50 °C gekühlt und mit 10 ml (10 mmol) einer 1M-Lösung von Tetrabutylammonium Hydroxid in Methanol versetzt unter intensivem Rühren. Laut ¹⁹F- und ¹H-NMR Spektra wird ein Gemisch bestehend aus zwei Komplexen: [(C₄H₉)₄N]⁺[(C₂F₅)₃PF₂OH]⁻ und [(C₄H₉)₄Nr[(C₂F₅)₃PF₂OCH₃]⁻ gebildet. Nach Entfernen flüchtiger Bestandteile werden 6.0 g von weißem Feststoff erhalten, der laut ¹⁹F- und ¹H-NMR Spektra zu 40% aus [(C₄H₉)_{4]}N⁺[(C₂F₅)₂PF₂O]⁻ und zu 60% aus [(C₄H₉)₄]N⁺[(C₂F₅)₃PF₂OCH₃]⁻ besteht.
NMR-Daten (Lösungsmittel: Methanol; Lock: CD₃CN; Referenz Substanz: ¹H, TMS; ¹⁹F, CCl₃F; ³¹P, 85% H₃PO₄):
Tris(pentafluorethyl)difluorhydroxy-phosphat Tetrabutylammonium Salz, Hydroxy-komplex:
¹H, δ, ppm = 0.98 t (12H, 4CH₃), ³*J*_{H,H} = 7 Hz; 1.36 m, (8H, 4CH₂); 1,61 m, (8H, 4CH₂); 3.10 m, (8H, 4CH₂); 4.86 t,d (1 H), ³*J*_{H,F} = 14 Hz, ²*J*_{H,P} = 2 Hz.
¹⁹F, δ, ppm = -80.7 m (3F, CF₃); -81.8 m (6F, 2CF₃); -87.4 d,m (2F, PF₂), ¹*J*_{P,F} = 842 Hz; -114.8 d,m (6F, 3CF₂), ²*J*_{P,F} = 86 Hz.
³¹P, δ, ppm = -147.3 t,sept, ¹*J*_{P,F} = 842 Hz, ²*J*_{P,F} = 86 Hz.

Tris(pentafluorethyl)difluormethoxy-phosphat Tetrabutylammonium Salz, [(C₄H₉)₄N]⁺[(C₂F₅)₃PF₂OCH₃]⁻.
¹H, δ, ppm = 0.98 t (12H, 4CH₃), ³*J*_{H,H} = 7 Hz; 1.36 m, (8H, 4CH₂); 1,61 m, (8H, 4CH₂); 3.10 m, (8H, 4CH₂); 3.56 d,m (3H, CH₃), ³*J*_{H,P} = 13 Hz.
¹⁹F, ö, ppm = -80.7 m (3F, CF₃); -81.8 m (6F, 2CF₃); -95.9 d,m (2F, PF₂), ¹*J*_{P,F} = 867 Hz; -114.1 d,m (6F, 3CF₂), ²*J*_{P,F} = 84 Hz.
³¹P, δ, ppm = -148.5 t,sept,q, ¹*J*_{P,F} = 867 Hz, ²*J*_{P,F} = 84 Hz, ³*J*_{P,H} = 13 Hz.

Bis(pentafluorethyl)difluorxo-phosphoran Tetrabutylammonium Salz, [(C₂F₅)₂PF₂O]⁻ [(C₄H₉)₄N]⁺ :
¹H, δ, ppm = 0.98 t (12H, 4CH₃), ³*J*_{H,H} = 7 Hz; 1.36 m, (8H, 4CH₂); 1,61 m, (8H, 4CH₂); 3.10 m, (8H, 4CH₂); 3.56 d,m (3H, CH₃), ³*J*_{H,P} = 13 Hz.
¹⁹F, δ, ppm = -67,5 d,m (2F, PF₂), ¹*J*_{P,F} = 1108 Hz; -81.9 t, (6F, 2CF₃), ⁴*J*_{F,F} = 11 Hz; -124.8 d,t (4F, 2CF₂), ²*J*_{P,F} = 78 Hz; ³*J*_{F,F} = 7 Hz.
³¹P, δ, ppm = -62,5 t,quin, ¹*J*_{P,F} = 1108 Hz, ²*J*_{P,F} = 78 Hz.

### Beispiel 31: [(C₄H₉)₄P]⁺[(C₂F₅)₃PF₂OH]⁻

4.66 g (10.9 mmol) Tris(pentafluorethyl)difluorphosphoran werden in 20 ml Et₂O gelöst und auf-60 °C gekühlt. Anschließend werden 20 ml (10.9 mmol) einer wässrigen Tetrabutylphosphonium Hydroxid 0.55M-Lösung unter intensivem Rühren zugegeben. Das Gemisch wird auf 0°C erwärmt und der ausfallende weiße Feststoff wird abfiltriert und an der Luft getrocknet. Es werden 5.68 g eines weißen Feststoffes erhalten, der laut ¹⁹F NMR Spektrum zu 85 % aus Hydroxykomplex [(C₄H₉)₄P]⁺[(C₂F₅)₃PF₂OH]⁻, 11 % Tetrabutylphosphonium Tris(pentafluorethyl)-trifluorphosphat (FAP) und 4 % Tetrabutylphosphonium Bis(pentafluorethyl)phosphinat besteht.
NMR-Daten (Lösungsmittel: CD₃CN; Referenz Substanz: ¹⁹F, CCl₃F; ³¹P, 85% H₃PO₄):
Tris(pentafluorethyl)difluorhydroxy-phosphat Tetrabutylphosphonium Salz, Hydroxy-komplex:
¹⁹F, δ, ppm = -80.7 m (3F, CF₃); -81.7 m (6F, 2CF₃); -87.0 d,m (2F, PF₂), ¹*J*_{P,F} = 842 Hz; -114.6 d,m (6F, 3CF₂), ²*J*_{P,F} = 85 Hz.
³¹P, δ, ppm = -147.2 t,sept, ¹*J*_{P,F} = 842 Hz, ²*J*_{P,F} = 85 Hz.

### Beispiel 32: K[(C₂F₅)₃PF₂(OH)]

0.98 g (10 mmol) Kaliumacetat werden in 10 ml Wasser gelöst und bei 0° C mit 4.34 g (10.2 mmol) Tris(pentafluorethyl)difluorphosphoran unter intensivem Rühren langsam versetzt. Nach 10 Minuten werden alle flüchtigen Komponenten bei 0° C im Vakuum entfernt. Es werde 4.9 g einen farblosen Feststoff erhalten, der laut ¹⁹F-NMR Spektrum zu 91% K[(C₂F₅)₃PF₂(OH)] Hydroxykomplex, 6 % Kalium Tris(pentafluorethyl)trifluorphosphat (FAP) und 3 % Kalium Bis(pentafluorethyl)-phosphinat besteht. Der Stoff zeigt bei 104° C 24 % - ige Massenverlust, welcher einer Freisetzung von C₂F₅H entspricht.

Kalium Tris(pentafluoroethyl)difluorohydroxy-phosphat, Hydroxy-komplex: NMR-Daten (Lösungsmittel: CD₃CN; Referenz Substanz: ¹⁹F, CCl₃F; ³¹P, 85% H₃PO₄):
¹⁹F, δ, ppm = -80.7 m (3F, CF₃); -81.7 m (6F, 2CF₃); -87.0 d,m (2F, PF₂), ¹*J*_{P,F} = 842 Hz; -114.6 d (6F, 3CF₂), ²*J*_{P,F} = 85 Hz.
³¹P, δ, ppm = -147.2 t,sept, ¹*J*_{P,F} = 842 Hz, ²*J*_{P,F} = 85 Hz.

## Patentansprüche

1. Verbindungen der Formel I
Kt^{z+} z[P(R_{f})ₙF₅₋ₙX]⁻ I,
wobei R_{f} jeweils unabhängig voneinander eine geradkettige oder verzweigte Perfluoralkylgruppe mit 2 bis 4 C-Atomen bedeutet,
X OR bedeutet,
Alk eine geradkettige oder verzweigte Alkylgruppe mit 1 bis 12 C-Atomen bedeutet,
R H bedeutet, eine geradkettige oder verzweigte Alkylgruppe mit 1 bis 20 C-Atomen bedeutet, die teilweise mit Hal, NH₂, NHAlk, NAlk₂, OH, NO₂, CN oder SO₃H substituiert sein kann oder eine geradkettige oder verzweigte Alkenylgruppe mit 2 bis 20 C-Atomen bedeutet, die mehrere Doppelbindungen enthalten kann, wobei ein oder zwei nicht benachbarte und nicht am Heteroatom gebundene Kohlenstoffatome der Alkyl- oder Alkenylgruppe durch Atome und/oder Atomgruppierungen ausgewählt aus der Gruppe -O-, -S-, -S(O)-, -SO₂-, NH, -C(O)-, -O-C(O)- oder -C(O)-O- ersetzt sein können
und
Kt ein stabilisiertes Proton, ein Metallkation oder ein organisches Kation bedeutet,
Hal F, Cl, Br oder I bedeutet,
z 1, 2, 3 oder 4 bedeutet und
n 1, 2 oder 3 bedeutet und/oder ihre Tautomere oder Steroisomere, einschließlich deren Mischungen in allen Verhältnissen, wobei das organische Kation ausgewählt wird aus
Amoniumkationen der Formel (1), Sulfoniumkationen der Formel (2) oder Oxoniumkationen der Formel (3)
[N(R⁰)₄]⁺ (1)
[S(R⁰)₃]⁺ (2)
oder
[O(R⁰)₃]⁺ (3),
wobei
R⁰ jeweils unabhängig voneinander
- H, wobei nicht alle Substituenten R⁰ in Formel (2) gleichzeitig H sein dürfen,
- geradkettiges oder verzweigtes Alkyl mit 1-20 C-Atomen,
- gesättigtes Cycloalkyl mit 3-7 C-Atomen, das mit geradkettigen oder verzweigten Alkylgruppen mit 1-6 C-Atomen substituiert sein kann,
- Phenyl, das mit geradkettigen oder verzweigten C₁- bis C₆-Alkylgruppen substituiert sein kann, bedeutet, oder Phosphoniumkationen der Formel (4)
[P(R²)₄]⁺ (4),
wobei
R² jeweils unabhängig voneinander
- geradkettiges oder verzweigtes Alkyl mit 1-20 C-Atomen,
- gesättigtes Cycloalkyl mit 3-7 C-Atomen, das mit geradkettigen oder verzweigten Alkylgruppen mit 1-6 C-Atomen substituiert sein kann,
- Phenyl, das mit geradkettigen oder verzweigten C₁- bis C₆-Alkylgruppen substituiert sein kann,
bedeutet,
oder
Uroniumkationen der Formel (5) oder Thiouroniumkationen der Formel (6)
[C(NR³R⁴)(OR⁵)(NR⁶R⁷)]⁺ (5)
oder
[C(NR³R⁴)(SR⁵)(NR⁶R⁷)]⁺ (6),
wobei
R³ bis R⁷ jeweils unabhängig voneinander
- H,
- geradkettiges oder verzweigtes Alkyl mit 1 bis 20 C-Atomen,
- gesättigtes Cycloalkyl mit 3-7 C-Atomen, das mit geradkettigen oder verzweigten Alkylgruppen mit 1-6 C-Atomen substituiert sein kann,
- Phenyl, das mit geradkettigen oder verzweigten C₁- bis C₆-Alkylgruppen substituiert sein kann,
bedeuten,
oder
Guanidiniumkationen der Formel (7)
[C(NR⁸R⁹)(NR¹⁰R¹¹)(NR¹²R¹³)]⁺ (7),
wobei
R⁸ bis R¹³ jeweils unabhängig voneinander
- H,
- geradkettiges oder verzweigtes Alkyl mit 1 bis 20 C-Atomen,
- gesättigtes Cycloalkyl mit 3-7 C-Atomen, das mit geradkettigen oder verzweigten Alkylgruppen mit 1-6 C-Atomen substituiert sein kann,
- Phenyl, das mit geradkettigen oder verzweigten C₁- bis C₆-Alkylgruppen substituiert sein kann,
bedeuten,
oder
heterocyclische Kationen der Formel (8)
[HetN]⁺ (8),
wobei [HetN]⁺ ein heterocyclisches Kation ist, ausgewählt aus der Gruppe umfassend 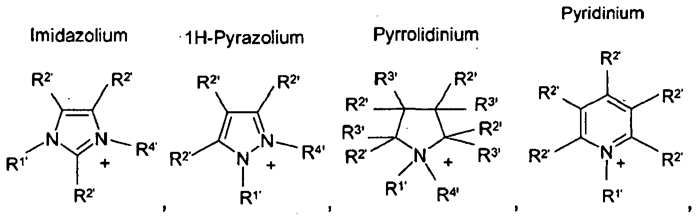 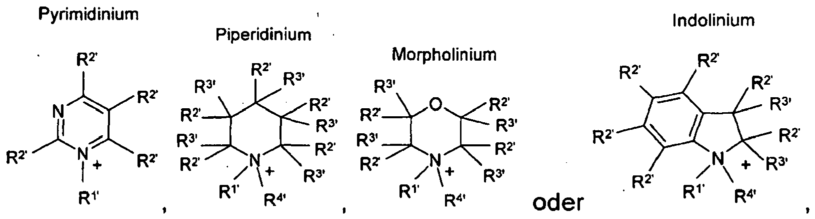 wobei die Substituenten R^{1'} und R^{4'} jeweils unabhängig voneinander
- geradkettiges oder verzweigtes Alkyl mit 1-20 C-Atomen, welche auch fluoriert oder perfluoriert sein können,
- gesättigtes Cycloalkyl mit 3-7 C-Atomen, das mit geradkettigen oder verzweigten Alkylgruppen mit 1-6 C-Atomen substituiert sein kann,
- Phenyl, das mit geradkettigen oder verzweigten C₁- bis C₆-Alkylgruppen substituiert sein kann,
bedeuten,
und
wobei die Substituenten R^{2'} und R^{3'} jeweils unabhängig voneinander H oder eine geradkettige oder verzweigte Alkylgruppe mit 1-20 C-Atomen bedeuten,
und
wobei das Metallkation aus den Kationen Li⁺, Na⁺, K⁺, Mg²⁺, Ca²⁺, Ag⁺, Cu⁺, Y⁺³, Yb⁺³, La⁺³, Sc⁺³, Ce⁺², Pt⁺² oder Pd⁺² ausgewählt wird.

2. Verbindungen der Formel I nach Anspruch 1, wobei Kt ein stabilisiertes Proton ist, welches durch eine organische Base oder ein basisches Lösungsmittel stabilisiert wird.

3. Verbindungen der Formel I nach Anspruch 2, wobei Kt ein durch eine organische Base stabilisiertes Proton ist, welches durch ein aromatisches Amin, ein Dialkylformamid oder Dialkylacetamid, deren Alkylgruppen jeweils unabhängig voneinander 1 bis 8 C-Atome haben als organische Base stabilisiert wird.

4. Verbindungen der Formel nach Anspruch 2, wobei Kt ein durch ein basisches Lösungsmittel stabilisiertes Proton ist, wobei das basische Lösungsmittel ausgewählt wird aus der Gruppe Wasser, Dialkylether mit geradkettigen oder verzweigten Alkylgruppen, die jeweils unabhängig voneinander 1 bis 4 C-Atome haben, aliphatische Alkohole mit 1 bis 8 C-Atomen, Ethylacetat, Acetonitril, Dimethylslulfoxid oder N-Alkyl-2-pyrrolidon mit einer geradkettigen oder verzweigten Alkylgruppe, die 1 bis 8 C-Atome hat.

5. Verfahren zur Herstellung von Verbindungen der Formel I nach Anspruch 3, wobei Kt ein durch eine organische Base stabilisiertes Proton bedeutet, wobei die organische Base ein aromatisches Amin, ein Dialkylformamid oder Dialkylacetamid bedeutet, deren Alkylgruppen jeweils unabhängig voneinander 1 bis 8 C-Atome haben,
**dadurch gekennzeichnet, dass** ein Perfluoralkylfluorphosphoran der Formel II
(R_{f})ₙPF₅₋ₙ II,
wobei R_{f} jeweils unabhängig voneinander eine geradkettige oder verzweigte Perfluoralkylgruppe mit 2 bis 4 C-Atomen bedeutet und n 1, 2 oder 3 bedeutet, mit einer organischen Base, ausgewählt aus der Gruppe aromatisches Amin, Dialkylformamid oder Dialkylacetamid, deren Alkylgruppen jeweils unabhängig voneinander 1 bis 8 C-Atome haben, umgesetzt wird, wobei eine Verbindung der Formel IIIa, IIIb oder IIIc entsteht 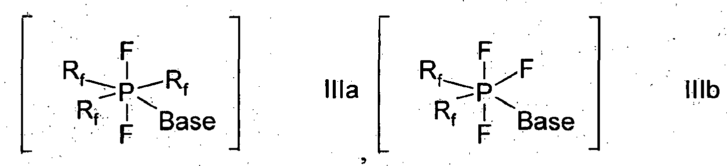 oder 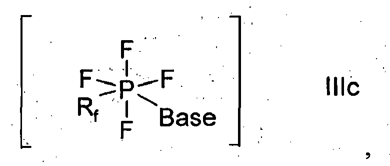 wobei R_{f} jeweils unabhängig voneinander eine zuvor angegebene Bedeutung hat und die Verbindung der Formel IIIa, IIIb oder IIIc oder deren tautomere oder stereoisomere Form anschließend mit HX bei einer Reaktionstemperatur von 0°C bis 80°C in Gegenwart eines organischen Lösungsmittels und in einer wasserfreien Atmosphäre umgesetzt wird, wobei
X eine in Anspruch 3 angegebene Bedeutung hat.

6. Verfahren zur Herstellung von Verbindungen der Formel I nach Anspruch 1, wobei Kt ein Metallkation oder ein organisches Kation bedeutet, durch eine Umsalzungsreaktion, **dadurch gekennzeichnet, dass** eine Verbindung der Formel I, wobei Kt ein durch eine Base stabilisiertes Proton bedeutet mit einer Verbindung der Formel IV
KtA IV
umgesetzt wird, wobei Kt ein Metallkation oder ein organisches Kation nach Anspruch 1 bedeutet und
A ein Anion bedeutet, ausgewählt aus Cl⁻, Br⁻, I⁻, OH⁻, [R₁COO]⁻, [R₁SO₃]⁻, [R₂COO]⁻, [R₂SO₃]⁻, [R₁OSO₃]⁻, [BF₄]⁻, [SO₄]²⁻, [HSO₄]¹⁻, [NO₃]⁻, [(R₂)₂P(O)O]⁻, [R₂P(O)O₂]²⁻ oder [CO₃]²⁻, wobei R₁ jeweils unabhängig voneinander geradkettiges oder verzweigtes Alkyl mit 1 bis 4 C-Atomen bedeutet und R₂ jeweils unabhängig voneinander geradkettiges oder verzweigtes perfluoriertes Alkyl mit 1 bis 4 C-Atomen bedeutet, wobei die Elektroneutralität der Salze der Formel KtA zu beachten ist.

7. Verwendung von Verbindungen der Formel nach Anspruch 2, 3 oder 4 in einer Umsalzungsreaktion zur Herstellung von Verbindungen der Formel I nach Anspruch 1, wobei Kt ein Metallkation oder ein organisches Kation bedeutet.

8. Verwendung von Verbindungen der Formel I nach Anspruch 1, wobei Kt ein organisches Kation ist, als Lösungsmittel oder Lösungsmittelzusatz, alsTrennmittel oder Extraktionsmittel, als Schmiermittel oder Bestandteil von Schmierölen oder -fetten, als hydraulische Flüssigkeit oder Additiv für hydraulische Flüssigkeiten, als Flammschutzmittel oder als Additiv in Feuerlöschmitteln.

## Claims

1. Compounds of the formula I
Kt^{z+} z[P(R_{f})ₙF₅₋ₙX]⁻ I,
where R_{f} in each case, independently of one another, denotes a straight-chain or branched perfluoroalkyl group having 2 to 4 C atoms,
X denotes OR,
Alk denotes a straight-chain or branched alkyl group having 1 to 12 C atoms,
R denotes H, a straight-chain or branched alkyl group having 1 to 20 C atoms, which may be partially substituted by Hal, NH₂, NHAlk, NAlk₂, OH, NO₂, CN or SO₃H, or denotes a straight-chain or branched alkenyl group having 2 to 20 C atoms, which may contain a plurality of double bonds, where one or two carbon atoms of the alkyl or alkenyl group which are not adjacent and not bonded to the heteroatom may be replaced by atoms and/or atom groups selected from the group -O-, -S-, -S(O)-, -SO₂-, NH, -C(O)-, -O-C(O)- or -C(O)-O-
and
Kt denotes a stabilised proton, a metal cation or an organic cation,
Hal denotes F, Cl, Br or I,
z denotes 1, 2, 3 or 4 and
n denotes 1, 2 or 3, and/or tautomers or stereoisomers thereof, including mixtures thereof in all ratios, where the organic cation is selected from
ammonium cations of the formula (1), sulfonium cations of the formula (2) or oxonium cations of the formula (3)
[N(R⁰)₄]⁺ (1)
[S(R⁰)₃]⁺ (2)
or
[O(R⁰)₃]⁺ (3)
where
R⁰ in each case, independently of one another, denotes
- H, where all substituents R⁰ in formula (2) cannot simultaneously be H
- straight-chain or branched alkyl having 1-20 C atoms,
- saturated cycloalkyl having 3-7 C atoms, which may be substituted by straight-chain or branched alkyl groups having 1-6 C atoms,
- phenyl, which may be substituted by straight-chain or branched C₁- to C₆-alkyl groups, or
phosphonium cations of the formula (4)
[P(R²)₄]⁺ (4),
where
R² in each case, independently of one another, denotes
- straight-chain or branched alkyl having 1-20 C atoms,
- saturated cycloalkyl having 3-7 C atoms, which may be substituted by straight-chain or branched alkyl groups having 1-6 C atoms,
- phenyl, which may be substituted by straight-chain or branched C₁- to C₆-alkyl groups,
or
uronium cations of the formula (5) or thiouronium cations of the formula (6)
[C(NR³R⁴)(OR⁵)(NR⁶R⁷)]⁺ (5)
or
[C(NR³R⁴)(SR⁵)(NR⁶R⁷)]⁺ (6),
where
R³ to R⁷ each, independently of one another, denote
- H,
- straight-chain or branched alkyl having 1 to 20 C atoms,
- saturated cycloalkyl having 3-7 C atoms, which may be substituted by straight-chain or branched alkyl groups having 1-6 C atoms,
- phenyl, which may be substituted by straight-chain or branched C₁- to C₆-alkyl groups,
or
guanidinium cations of the formula (7)
[C(NR⁸R⁹)(NR¹⁰R¹¹)(NR¹²R¹³)]⁺ (7),
where
R⁸ to R¹³ each, independently of one another, denote
- H,
- straight-chain or branched alkyl having 1 to 20 C atoms,
- saturated cycloalkyl having 3-7 C atoms, which may be substituted by straight-chain or branched alkyl groups having 1-6 C atoms,
- phenyl, which may be substituted by straight-chain or branched C₁- to C₆-alkyl groups,
or
heterocyclic cations of the formula (8)
[HetN]⁺ (8),
where [HetN]⁺ is a heterocyclic cation selected from the group comprising 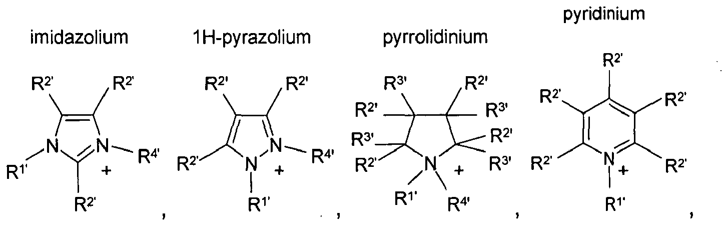 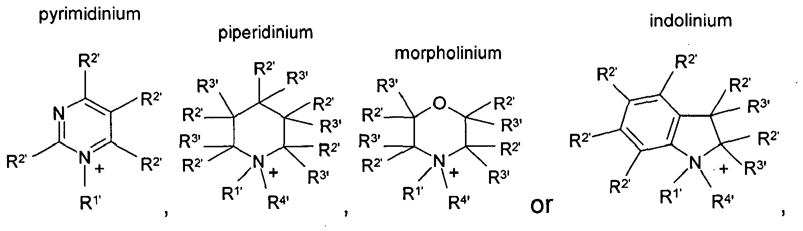 where the substituents R^{1'} and R^{4'} each, independently of one another, denote
- straight-chain or branched alkyl having 1-20 C atoms, which may also be fluorinated or perfluorinated,
- saturated cycloalkyl having 3-7 C atoms, which may be substituted by straight-chain or branched alkyl groups having 1-6 C atoms,
- phenyl, which may be substituted by straight-chain or branched C₁- to C₆-alkyl groups,
and
where the substituents R^{2'} and R^{3'} each, independently of one another, denote H or a straight-chain or branched alkyl group having 1-20 C atoms,
and
where the metal cation is selected from the cations Li⁺, Na⁺, K⁺, Mg²⁺, Ca²⁺, Ag⁺, Cu⁺, Y³⁺, Yb³⁺, La³⁺, Sc³⁺, Ce²⁺, Pt²⁺ or Pd²⁺.

2. Compounds of the formula I according to Claim 1, where Kt is a stabilised proton which is stabilised by an organic base or a basic solvent.

3. Compounds of the formula I according to Claim 2, where Kt is a proton which is stabilised by an organic base, where the organic base is an aromatic amine, a dialkylformamide or dialkylacetamide whose alkyl groups each have, independently of one another, 1 to 8 C atoms.

4. Compounds of the formula I according to Claim 2, where Kt is a proton which is stabilised by a basic solvent, where the basic solvent is selected from the group water, dialkyl ethers containing straight-chain or branched alkyl groups, which each have, independently of one another, 1 to 4 C atoms, aliphatic alcohols having 1 to 8 C atoms, ethyl acetate, acetonitrile, dimethyl sulfoxide or N-alkyl-2-pyrrolidone containing a straight-chain or branched alkyl group which has 1 to 8 C atoms

5. Process for the preparation of compounds of the formula I according to Claim 3, where Kt denotes a proton which is stabilised by an organic base, where the organic base denotes an aromatic amine, a dialkylformamide or dialkylacetamide whose alkyl groups each have, independently of one another, 1 to 8 C atoms,
**characterised in that** a perfluoroalkylfluorophosphorane of the formula II (R_{f})ₙPF₅₋ₙ II,
where R_{f} in each case, independently of one another, denotes a straight-chain or branched perfluoroalkyl group having 2 to 4 C atoms and n denotes 1, 2 or 3, is reacted with an organic base selected from the group aromatic amine, dialkylformamide or dialkylacetamide whose alkyl groups each have, independently of one another, 1 to 8 C atoms, where a compound of the formula IIIa, IIIb or IIIc is formed 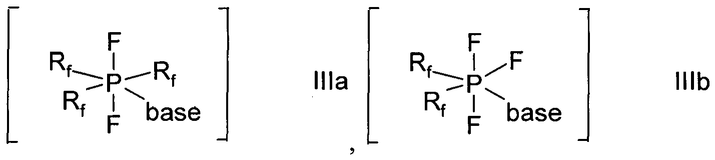 or 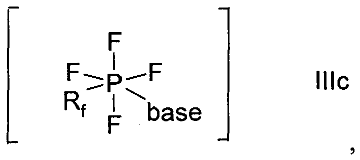 where R_{f} in each case, independently of one another, has a meaning indicated above and the compound of the formula IIIa, IIIb or IIIc or a tautomeric or stereoisomeric form thereof is subsequently reacted with HX at a reaction temperature of 0°C to 80°C in the presence of an organic solvent and in a water-free atmosphere, where X has a meaning indicated in Claim 3.

6. Process for the preparation of compounds of the formula I according to Claim 1, where Kt denotes a metal cation or an organic cation, by a salt-exchange reaction, **characterised in that** a compound of the formula I, where Kt denotes a proton which is stabilised by a base, is reacted with a compound of the formula IV
KtA IV,
where Kt denotes a metal cation or an organic cation according to Claim 1 and
A denotes an anion selected from Cl⁻, Br⁻, I⁻, OH⁻, [R₁COO]⁻, [R₁SO₃]⁻, [R₂COO]⁻, [R₂SO₃]⁻, [R₁OSO₃]⁻, [BF₄]⁻, [SO₄]²⁻, [HSO₄]¹⁻, [NO₃]⁻, [(R₂)₂P(O)O]⁻, [R₂P(O)O₂]²⁻ or [CO₃]²⁻, where R₁ in each case, independently of one another, denotes straight-chain or branched alkyl having 1 to 4 C atoms and R₂ in each case, independently of one another, denotes straight-chain or branched perfluorinated alkyl having 1 to 4 C atoms, where the electroneutrality of the salts of the formula KtA must be observed.

7. Use of compounds of the formula I according to Claim 2, 3 or 4 in a salt-exchange reaction for the preparation of compounds of the formula I according to Claim 1, where Kt denotes a metal cation or an organic cation.

8. Use of compounds of the formula I according to Claim 1, where Kt is an organic cation, as solvent or solvent additive, as separating agent or extractant, as lubricant or constituent of lubricating oils or greases, as hydraulic fluid or additive for hydraulic fluids, as flameproofing agent or as additive in fire-extinguishing agents.

## Revendications

1. Composés de formule I
Kt²⁺z[P(R_{f})ₙF₅₋ₙX]⁻ I,
dans laquelle R_{f} dans chaque cas, indépendamment les uns des autres, désigne un groupement perfluoroalkyle à chaîne linéaire ou ramifiée ayant de 2 à 4 atomes de C,
X désigne OR,
Alk désigne un groupement alkyle à chaîne linéaire ou ramifiée ayant de 1 à 12 atomes de C,
R désigne H, un groupement alkyle à chaîne linéaire ou ramifiée ayant de 1 à 20 atomes de C, pouvant être partiellement substitué par Hal, NH₂, NHAlk, NAlk₂, OH, NO₂, CN ou SO₃H, ou désigne un groupement alcényle à chaîne linéaire ou ramifiée ayant de 2 à 20 atomes de C, pouvant contenir une pluralité de doubles liaisons, où un ou deux atomes de carbone du groupement alkyle ou alcényle qui ne sont pas adjacents ni liés à l'hétéroatome peuvent être remplacés par des atomes et/ou des groupes d'atomes choisis dans le groupe constitué par -O-, -S-, -S(O)-, -SO₂-, NH, -C(O)-, -O-C(O)- ou -C(O)-O-
et
Kt désigne un proton stabilisé, un cation métallique ou un cation organique,
Hal désigne F, Cl, Br ou I,
z désigne 1, 2, 3 ou 4 et
n désigne 1, 2 ou 3, et/ou des tautomères ou des stéréoisomères de ceux-ci, y compris des mélanges de ceux-ci en toutes proportions, où le cation organique est choisi parmi
des cations d'ammonium de formule (1), des cations de sulfonium de formule (2) ou des cations d'oxonium de formule (3)
[N(R⁰)₄]⁺ (1)
[S(R⁰)₃]⁺ (2)
ou
[O(R⁰)₃]⁺ (3)
où
R⁰ dans chaque cas, indépendamment les uns des autres, désigne
- H, où tous les substituants R⁰ dans la formule (2) ne peuvent simultanément être H
- alkyle à chaîne linéaire ou ramifiée ayant 1-20 atomes de C,
- cycloalkyle saturé ayant 3-7 atomes de C, pouvant être substitué par des groupements alkyle à chaîne linéaire ou ramifiée ayant 1-6 atomes de C,
- phényle, pouvant être substitué par des groupements C₁- à C₆-alkyle à chaîne linéaire ou ramifiée, ou
des cations de phosphonium de formule (4)
IP(R²)₄]⁺ (4),
où
R² dans chaque cas, indépendamment les uns des autres, désigne
- alkyle à chaîne linéaire ou ramifiée ayant 1-20 atomes de C,
- cycloalkyle saturé ayant 3-7 atomes de C, pouvant être substitué par des groupements alkyle à chaîne linéaire ou ramifiée ayant 1-6 atomes de C,
- phényle, pouvant être substitué par des groupements C₁- à C₆-alkyle à chaîne linéaire ou ramifiée,
ou
des cations d'uronium de formule (5) ou des cations de thiouronium de formule (6)
[C(NR³R⁴)(OR⁵)(NR⁶R⁷)]⁺ (5)
ou
[C(NR³R⁴)(SR⁵)(NR⁶R⁷)]⁺ (6),
où
R³ à R⁷ désignent chacun, indépendamment les uns des autres,
- H,
- alkyle à chaîne linéaire ou ramifiée ayant de 1 à 20 atomes de C,
- cycloalkyle saturé ayant 3-7 atomes de C, pouvant être substitué par des groupements alkyle à chaîne linéaire ou ramifiée ayant 1-6 atomes de C,
- phényle, pouvant être substitué par des groupements C₁- à C₆-alkyle à chaîne linéaire ou ramifiée,
ou
des cations de guanidinium de formule (7)
[C(NR⁸R⁹)(NR¹⁰R¹¹)(NR¹²R¹³)]⁺ (7),
où
R⁸ à R¹³ désignent chacun, indépendamment les uns des autres,
- H,
- alkyle à chaîne linéaire ou ramifiée ayant de 1 à 20 atomes de C,
- cycloalkyle saturé ayant 3-7 atomes de C, pouvant être substitué par des groupements alkyle à chaîne linéaire ou ramifiée ayant 1-6 atomes de C,
- phényle, pouvant être substitué par des groupements C₁- à C₆-alkyle à chaîne linéaire ou ramifiée,
ou
des cations hétérocycliques de formule (8)
[HétN]⁺ (8),
où [HétN]⁺ est un cation hétérocyclique choisi dans le groupe comprenant 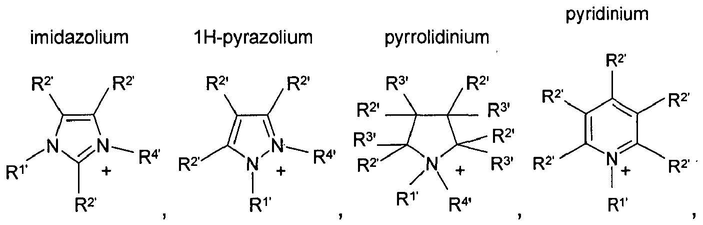 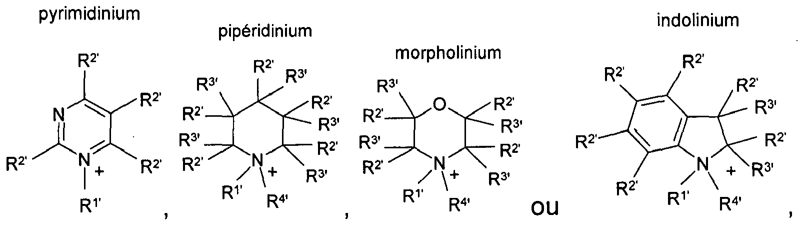 où les substituants R^{1'} et R^{4'} désignent chacun, indépendamment l'un de l'autre,
- alkyle à chaîne linéaire ou ramifiée ayant 1-20 atomes de C, pouvant également être fluoré ou perfluoré,
- cycloalkyle saturé ayant 3-7 atomes de C, pouvant être substitué par des groupements alkyle à chaîne linéaire ou ramifiée ayant 1-6 atomes de C,
- phényle, pouvant être substitué par des groupements C₁- à C₆-alkyle à chaîne linéaire ou ramifiée,
et
où les substituants R^{2'} et R^{3'} désignent chacun, indépendamment l'un de l'autre, H ou un groupement alkyle à chaîne linéaire ou ramifiée ayant 1-20 atomes de C,
et
où le cation métallique est choisi parmi les cations Li⁺, Na⁺, K⁺, Mg²⁺, Ca²⁺, Ag⁺, Cu⁺, Y³⁺, Yb³⁺, La³⁺, Sc³⁺, Ce²⁺, Pt²⁺ ou Pd²⁺.

2. Composés de formule I selon la revendication 1, dans lesquels Kt est un proton stabilisé qui est stabilisé par une base organique ou un solvant basique.

3. Composés de formule I selon la revendication 2, dans lesquels Kt est un proton qui est stabilisé par une base organique, où la base organique est une amine aromatique, un dialkylformamide ou dialkylacétamide dont les groupements alkyle possèdent chacun, indépendamment les uns des autres, de 1 à 8 atomes de C.

4. Composés de formule I selon la revendication 2, dans lesquels Kt est un proton qui est stabilisé par un solvant basique, où le solvant basique est choisi dans le groupe constitué par l'eau, les dialkyl éthers contenant des groupements alkyle à chaîne linéaire ou ramifiée, possédant chacun, indépendamment les uns des autres, de 1 à 4 atomes de C, les alcools aliphatiques ayant de 1 à 8 atomes de C, l'acétate d'éthyle, l'acétonitrile, le diméthylsulfoxyde ou une N-alkyl-2-pyrrolidone contenant un groupement alkyle à chaîne linéaire ou ramifiée ayant de 1 à 8 atomes de C.

5. Procédé de préparation de composés de formule I selon la revendication 3, où Kt désigne un proton qui est stabilisé par une base organique, où la base organique désigne une amine aromatique, un dialkylformamide ou dialkylacétamide dont les groupements alkyle possèdent chacun, indépendamment les uns des autres, de 1 à 8 atomes de C, **caractérisé en ce qu'**un perfluoroalkylfluorophosphorane de formule II (R_{f})ₙPF₅₋ₙ II,
où R_{f} dans chaque cas, indépendamment les uns des autres, désigne un groupement perfluoroalkyle à chaîne linéaire ou ramifiée ayant de 2 à 4 atomes de C et n désigne 1, 2 ou 3, est réagi avec une base organique choisie dans le groupe constitué par une amine aromatique, un dialkylformamide ou dialkylacétamide dont les groupements alkyle possèdent chacun, indépendamment les uns des autres, de 1 à 8 atomes de C, où un composé de formule IIIa, IIIb ou IIIc est formé 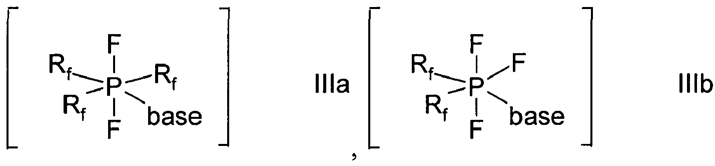 ou 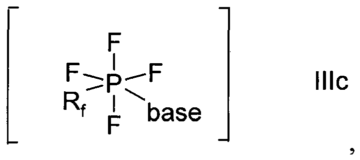 où R_{f} dans chaque cas, indépendamment les uns des autres, revêt une signification indiquée ci-dessus et le composé de formule IIIa, IIIb ou IIIc ou une forme tautomère ou stéréoisomère de celui-ci est ensuite réagi(e) avec HX à une température de réaction allant de 0°C à 80°C en présence d'un solvant organique et dans une atmosphère dépourvue d'eau, où
X revêt une signification indiquée selon la revendication 3.

6. Procédé de préparation de composés de formule I selon la revendication 1, où Kt désigne un cation métallique ou un cation organique, par une réaction d'échange de sels, **caractérisé en ce qu'**un composé de formule I, où Kt désigne un proton qui est stabilisé par une base, est réagi avec un composé de formule IV
KtA IV,
où Kt désigne un cation métallique ou un cation organique selon la revendication 1 et
A désigne un anion choisi parmi Cl⁻, Br-, I⁻, OH-, [R₁COO]⁻, [R₁SO₃]⁻, [R₂COO]⁻, [R₂SO₃]⁻, [R₁OSO₃]⁻, [BF₄]⁻, [SO₄]²⁻, [HSO₄]¹⁻, [NO₃]⁻, [(R₂)₂P(O)O]⁻, [R₂P(O)O₂]²⁻ ou [CO₃]²⁻, où R₁ dans chaque cas, indépendamment les uns des autres, désigne alkyle à chaîne linéaire ou ramifiée ayant de 1 à 4 atomes de C et R₂ dans chaque cas, indépendamment les uns des autres, désigne alkyle perfluoré à chaîne linéaire ou ramifiée ayant de 1 à 4 atomes de C, où l'électroneutralité des sels de formule KtA doit être observée.

7. Utilisation de composés de formule I selon la revendication 2, 3 ou 4, dans une réaction d'échange de sels pour la préparation de composés de formule I selon la revendication 1, où Kt désigne un cation métallique ou un cation organique.

8. Utilisation de composés de formule I selon la revendication 1, où Kt est un cation organique, comme solvant ou additif de solvant, comme agent de séparation ou d'extraction, comme lubrifiant ou constituant de graisses ou d'huiles lubrifiantes, comme fluide hydraulique ou additif pour fluides hydrauliques, comme agent ignifuge ou comme additif dans les agents extincteurs.
